(19) **Europäisches Patentamt / European Patent Office / Office européen des brevets**

(11) **EP 4 746 332 A1**

(12) **EUROPEAN PATENT APPLICATION**
published in accordance with Art. 153(4) EPC

(43) Date of publication:
**20.05.2026 Bulletin 2026/21**

(21) Application number: **24853620.3**

(22) Date of filing: **06.08.2024**

(51) International Patent Classification (IPC):
*H04L 5/00* (2006.01)

(52) Cooperative Patent Classification (CPC):
**H04L 1/00; H04L 5/00**

(86) International application number:
**PCT/CN2024/110199**

(87) International publication number:
**WO 2025/036209 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311018942**

(71) Applicant: **Huawei Technologies Co., Ltd.**
**Shenzhen, Guangdong 518129 (CN)**

(72) Inventors:
• **DONG, Changzhao**
  **Shenzhen, Guangdong 518129 (CN)**
• **GAO, Xiang**
  **Shenzhen, Guangdong 518129 (CN)**
• **ZHANG, Zhening**
  **Shenzhen, Guangdong 518129 (CN)**
• **LIU, Kunpeng**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **COMMUNICATION METHOD AND APPARATUS**

(57) This application belongs to the field of communication technologies, and provides a communication method and apparatus, to determine time domain densities corresponding to two PTRS ports when the two PTRS ports correspond to two MCSs. In the method, if the two PTRS ports correspond to the two MCSs, for example, a first MCS and a second MCS, a first time domain density corresponding to a first PTRS port may be determined based on the first MCS and/or the second MCS indicated by a network device, and a time domain density corresponding to a second PTRS port may also be determined based on the first MCS and/or the second MCS indicated by the network device. In this way, a terminal device can determine the first time domain density corresponding to the first PTRS port and a second time domain density corresponding to the second PTRS port, so that the terminal device subsequently sends a first PTRS on the first PTRS port, and sends a second PTRS on the second PTRS port. Therefore, communication reliability can be improved.

FIG. 10

## Description

This application claims priority to Chinese Patent Application No. 202311018942.8, filed with the China National Intellectual Property Administration on August 11, 2023 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

A phase tracking reference signal (phase tracking reference signal, PTRS) is a reference signal used by a receive end to perform phase noise measurement and frequency domain offset estimation. Generally, one PTRS port is bound to one associated demodulation reference signal (demodulation reference signal, DMRS) port for sending, and uses a same sequence as the bound DMRS port. Currently, an existing new radio (new radio, NR) protocol supports a maximum of four transmits (transmission) and four streams (transmission layer rank) in an uplink. In NR release 18 (release 18, R18), an uplink transmit capability of a maximum of 8T and eight streams is standardized through further enhanced support for a number of uplink transmit antennas and a maximum number of uplink transport streams.

However, in a scenario in which a single terminal supports transmission of more than four and/or more than four layers, if two PTRS ports correspond to two modulation and coding schemes (modulation and coding scheme, MCS), how to determine time domain densities corresponding to the two PTRS ports is a technical problem that needs to be urgently resolved.

## SUMMARY

Embodiments of this application provide a communication method and apparatus, to determine time domain densities corresponding to two PTRS ports when the two PTRS ports correspond to two MCSs.

To achieve the foregoing objective, the following technical solutions are used in this application.

According to a first aspect, a communication method is provided, and is performed by a terminal device. The method includes: receiving first indication information, sending a first PTRS through a first phase tracking reference signal PTRS port, and sending a second PTRS through a second PTRS port. The first indication information indicates a first modulation and coding scheme MCS and a second MCS. A time domain density corresponding to the first PTRS is a first time domain density, and the first time domain density is associated with the first MCS and/or the second MCS. A time domain density corresponding to the second PTRS is a second time domain density, and the second time domain density is associated with the first MCS and/or the second MCS.

According to the method in the first aspect and a second aspect, it can be learned that if two PTRS ports correspond to two MCSs, for example, the first MCS and the second MCS, the first time domain density corresponding to the first PTRS port may be determined based on the first MCS and/or the second MCS indicated by a network device, and the time domain density corresponding to the second PTRS port may also be determined based on the first MCS and/or the second MCS indicated by the network device. In this way, the terminal device can determine the first time domain density corresponding to the first PTRS port and the second time domain density corresponding to the second PTRS port, so that the terminal device subsequently sends the first PTRS on the first PTRS port, and sends the second PTRS on the second PTRS port. Therefore, communication reliability and communication efficiency can be improved.

In a possible design solution, the method in the first aspect may further include: receiving second indication information. The second indication information includes PTRS time domain density information, and the PTRS time domain density information indicates a plurality of MCS threshold values. The first time domain density is associated with at least one of the following: the first MCS and the plurality of MCS threshold values; the second MCS and the plurality of MCS threshold values; or the first MCS, the second MCS, and the plurality of MCS threshold values. The second time domain density is associated with at least one of the following: the first MCS and the plurality of MCS threshold values; the second MCS and the plurality of MCS threshold values; or the first MCS, the second MCS, and the plurality of MCS threshold values. Therefore, the terminal device accurately determines the first time domain density and the second time domain density based on an association relationship between the first MCS, the second MCS, and the plurality of MCS threshold values, improving the communication efficiency.

Optionally, the plurality of MCS threshold values include at least one of the following: a first MCS threshold value, a second MCS threshold value, or a third MCS threshold value. The plurality of MCS threshold values may further include any other possible value, to meet different requirements. This is not limited.

In a possible design solution, the first time domain density is associated with the first MCS and the plurality of MCS threshold values, and the second time domain density is associated with the first MCS and the plurality of MCS threshold values. That the first time domain density is associated with the first MCS and the plurality of MCS threshold values satisfies any one of the following: if the first MCS is less than the first MCS threshold value, the first PTRS is not present; if the first MCS is greater than or equal to the first MCS threshold value and is less than the second MCS threshold value, the first time domain density is a first value; if the first MCS is greater than or equal to the second MCS threshold value and is less than the third MCS threshold value, the first time domain density is a second value; and if the first MCS is greater than or equal to the third MCS threshold value and is less than a fourth MCS threshold value, the first time domain density is a third value, where the fourth MCS threshold value is a preset value. That the second time domain density is associated with the first MCS and the plurality of MCS threshold values satisfies any one of the following: if the first MCS is less than the first MCS threshold value, the second PTRS is not present; if the first MCS is greater than or equal to the first MCS threshold value and is less than the second MCS threshold value, the second time domain density is the first value; if the first MCS is greater than or equal to the second MCS threshold value and is less than the third MCS threshold value, the second time domain density is the second value; and if the first MCS is greater than or equal to the third MCS threshold and is less than the fourth MCS threshold value, the second time domain density is the third value.

It may be understood that the first MCS threshold value, the second MCS threshold value, the third MCS threshold value, and the fourth MCS threshold value may be divided into different intervals, and each interval corresponds to one time domain density value. The terminal device may determine the first time domain density and the second time domain density based on an interval in which the first MCS is located.

In a possible design solution, the first time domain density is associated with a fourth value and the plurality of MCS threshold values, and the second time domain density is associated with the fourth value and the plurality of MCS threshold values, where the fourth value is associated with the first MCS and the second MCS. That the first time domain density is associated with the fourth value and the plurality of MCS threshold values satisfies any one of the following: if the fourth value is less than the first MCS threshold value, the first PTRS is not present; if the fourth value is greater than or equal to the first MCS threshold value and is less than the second MCS threshold value, the first time domain density is a first value; if the fourth value is greater than or equal to the second MCS threshold value and is less than the third MCS threshold value, the first time domain density is a second value; and if the fourth value is greater than or equal to the third MCS threshold value and is less than a fourth MCS threshold value, the first time domain density is a third value, where the fourth MCS threshold value is a preset value. That the second time domain density is associated with the fourth value and the plurality of MCS threshold values satisfies any one of the following: if the fourth value is greater than or equal to the first MCS threshold value and is less than the second MCS threshold value, the second time domain density is the first value; if the fourth value is greater than or equal to the second MCS threshold value and is less than the third MCS threshold value, the second time domain density is the second value; and if the fourth value is greater than or equal to the third MCS threshold value and is less than the fourth MCS threshold value, the second time domain density is the third value.

It may be understood that the first MCS threshold value, the second MCS threshold value, the third MCS threshold value, and the fourth MCS threshold value may be divided into different intervals, and each interval corresponds to one time domain density value. The terminal device may determine the first time domain density and the second time domain density based on an interval in which the fourth value is located.

Optionally, the fourth value is at least one of the following: Mean(first MCS, second MCS) ; $\lceil \text{Mean(first MCS, second MCS)} \rceil$ ; or $\lfloor \text{Mean(first MCS, second MCS)} \rfloor$ . It may be understood that the fourth value may alternatively be any other possible value, to meet different requirements. This is not limited.

Optionally, the first MCS is greater than the second MCS. In other words, when MCSs corresponding to the first PTRS port and the second PTRS port are not equal, the terminal device may directly use the larger one of the two MCSs, for example, the first MCS, as the first time domain density and the second time domain density, or the terminal device may directly use the fourth value associated with the two MCSs as the first time domain density and the second time domain density. In this case, values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

Optionally, the first MCS is less than the second MCS. In other words, when MCSs corresponding to the first PTRS port and the second PTRS port are not equal, the terminal device may directly use the smaller one of the two MCSs, for example, the first MCS, or the fourth value associated with the two MCSs as the first time domain density and the second time domain density. In this case, values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

In a possible design solution, the first PTRS port corresponds to the first MCS, and the second PTRS port corresponds to the second MCS. A fifth value is associated with the first MCS and the plurality of MCS threshold values, and a sixth value is associated with the second MCS and the plurality of MCS threshold values. The first time domain density is associated with the fifth value and the sixth value, and the second time domain density is associated with the fifth value and the sixth value. That the fifth value is associated with the first MCS and the plurality of MCS threshold values satisfies any one of the following: if the first MCS is less than the first MCS threshold value, the first PTRS is not present; if the first MCS is greater than or equal to the first MCS threshold value and is less than the second MCS threshold value, the fifth value is a first value; if the first MCS is greater than or equal to the second MCS threshold value and is less than the third MCS threshold value, the fifth value is a second value; and if the first MCS is greater than or equal to the third MCS threshold and is less than a fourth MCS threshold, the fifth value is a third value, where the fourth MCS threshold value is a preset value. That the sixth value is associated with the second MCS and the plurality of MCS threshold values satisfies any one of the following: if the second MCS is less than the first MCS threshold value, the second PTRS is not present; if the second MCS is greater than or equal to the first MCS threshold value and is less than the second MCS threshold value, the sixth value is the first value; if the second MCS is greater than or equal to the second MCS threshold value and is less than the third MCS threshold value, the fifth value is the second value; and if the second MCS is greater than or equal to the third MCS threshold and is less than the fourth MCS threshold, the sixth value is the third value.

It may be understood that the terminal device determines the fifth value based on an interval in which the first MCS is located, and determines the sixth value based on an interval in which the second MCS is located, so that the terminal device determines the first time domain density and the second time domain density.

Optionally, when the fifth value is greater than the sixth value, values of the first time domain density and the second time domain density are both equal to the fifth value. In other words, when the first MCS and the second MCS fall in different intervals, the terminal device may directly use the larger fifth value of time domain density values corresponding to the two MCSs as the first time domain density and the second time domain density. In this case, the values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

Optionally, when the fifth value is less than the sixth value, values of the first time domain density and the second time domain density are both equal to the fifth value. In other words, when the first MCS and the second MCS fall in different intervals, the terminal device may directly use the smaller fifth value of time domain density values corresponding to the two MCSs as the first time domain density and the second time domain density. In this case, the values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

Optionally, when the fifth value is greater than the sixth value, a value of the first time domain density and a value of the second time domain density are equal to a seventh value, where the seventh value is associated with the fifth value and the sixth value. In other words, when the first MCS and the second MCS fall in different intervals, the terminal device may use the seventh value associated with the fifth value and the sixth value as the first time domain density and the second time domain density. In this case, the values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

Optionally, when the fifth value is less than the sixth value, a value of the first time domain density and a value of the second time domain density are equal to a seventh value, where the seventh value is associated with the fifth value and the sixth value. In other words, when the first MCS and the second MCS fall in different intervals, the terminal device may use the seventh value associated with the fifth value and the sixth value as the first time domain density and the second time domain density. In this case, the values of the first time domain density and the second time domain density are equal. This can avoid a problem that when the MCSs corresponding to the two PTRS ports fall in different intervals, the time domain densities corresponding to the two PTRS ports are different, and consequently, power coefficients of a part of PTRS ports on different OFDM symbols are different, further resulting in power coefficients of PTRSs sent by this part of PTRS ports on a part of OFDM symbols exceeding maximum power coefficients that can be supported by the OFDM. Therefore, the communication reliability can be improved.

Further, the seventh value is at least one of the following: Mean(fifth value, sixth value) ; $\lfloor \text{Mean(fifth value, sixth value)} \rfloor$ ; or [Mean(fifth value, sixth value)]. It may be understood that the fourth value may alternatively be any other possible value, to meet different requirements. This is not limited.

In a possible design solution, the first indication information further indicates PUSCH precoding and number-of-transmission-layers information, and the second indication information further includes PTRS power information, so that the terminal device subsequently determines a power coefficient corresponding to the first PTRS and a power coefficient corresponding to the second PTRS.

In a possible design solution, a first power coefficient is associated with at least one of the following: the PUSCH precoding, the number-of-transmission-layers information, the PTRS power information, or a value of a first number of scheduled PTRS ports, where the first power coefficient is the power coefficient corresponding to the first PTRS. A second power coefficient is associated with at least one of the following: the PUSCH precoding, the number-of-transmission-layers information, the PTRS power information, or a value of a second number of scheduled PTRS ports, where the second power coefficient is the power coefficient corresponding to the second PTRS. In this way, the terminal device can accurately determine the first power coefficient and the second power coefficient.

Optionally, when the first time domain density is less than the second time domain density, the value of the first number of scheduled PTRS ports is 1, and the value of the second number of scheduled PTRS ports is 2. It may be understood that when the time domain densities corresponding to the two PTRS ports are different, there may be a problem that a part of PTRS ports, for example, the first PTRS port with a low time domain density, have different power coefficients on different OFDM symbols, further resulting in power coefficients of PTRSs sent by this part of PTRS ports on a part of OFDM symbols exceeding maximum power coefficients that can be supported by the OFDM symbols. In this case, the terminal device sets the value of the first number of scheduled PTRS ports to 1 and the value of the second number of scheduled PTRS ports to 2. This can ensure that the first PTRS is sent on power coefficient of the first PTRS port with a small power coefficient, so that the power coefficient of the first PTRS on an OFDM symbol can meet a requirement of the maximum power coefficient that can be supported by the OFDM symbol. Therefore, the communication reliability can be improved.

Optionally, the value of the first number of scheduled PTRS ports is associated with a number of PTRS ports for actually sending a PTRS signal on each OFDM symbol, and the value of the second number of scheduled PTRS ports is associated with the number of PTRS ports for actually sending the PTRS signal on each OFDM symbol, where the PTRS signal includes the first PTRS and the second PTRS, and the OFDM symbol is an OFDM symbol included in a PUSCH. In other words, each OFDM symbol is used as a granularity for the first power coefficient and the second power coefficient, and the terminal device may calculate the first power coefficient and the second power coefficient on each OFDM symbol for each OFDM symbol. This can improve accuracy of the first power coefficient and the second power coefficient, and improve the communication reliability.

According to a second aspect, a communication method is provided, and is performed by a network device. The method includes: sending first indication information, and receiving a first PTRS and a second PTRS. The first indication information indicates a first modulation and coding scheme MCS and a second MCS. The first PTRS is a PTRS sent on a first PTRS port. A time domain density corresponding to the first PTRS is a first time domain density, and the first time domain density is associated with the first MCS and/or the second MCS. The second PTRS is a PTRS sent on a second PTRS port. A time domain density corresponding to the second PTRS is a second time domain density, and the second time domain density is associated with the first MCS and/or the second MCS.

In a possible design solution, the second indication information includes PTRS time domain density information, and the PTRS time domain density information indicates a plurality of MCS threshold values. The first time domain density is associated with at least one of the following: the first MCS and the plurality of MCS threshold values; the second MCS and the plurality of MCS threshold values; or the first MCS, the second MCS, and the plurality of MCS threshold values. The second time domain density is associated with at least one of the following: the first MCS and the plurality of MCS threshold values; the second MCS and the plurality of MCS threshold values; or the first MCS, the second MCS, and the plurality of MCS threshold values.

Optionally, the plurality of MCS threshold values include at least one of the following: a first MCS threshold value, a second MCS threshold value, or a third MCS threshold value.

In a possible design solution, the first time domain density is associated with the first MCS and the plurality of MCS threshold values, and the second time domain density is associated with the first MCS and the plurality of MCS threshold values. That the first time domain density is associated with the first MCS and the plurality of MCS threshold values satisfies any one of the following: if the first MCS is less than the first MCS threshold value, the first PTRS is not present; if the first MCS is greater than or equal to the first MCS threshold value and is less than the second MCS threshold value, the first time domain density is a first value; if the first MCS is greater than or equal to the second MCS threshold value and is less than the third MCS threshold value, the first time domain density is a second value; and if the first MCS is greater than or equal to the third MCS threshold value and is less than a fourth MCS threshold value, the first time domain density is a third value, where the fourth MCS threshold value is a preset value. That the second time domain density is associated with the first MCS and the plurality of MCS threshold values satisfies any one of the following: if the first MCS is less than the first MCS threshold value, the second PTRS is not present; if the first MCS is greater than or equal to the first MCS threshold value and is less than the second MCS threshold value, the second time domain density is the first value; if the first MCS is greater than or equal to the second MCS threshold value and is less than the third MCS threshold value, the second time domain density is the second value; and if the first MCS is greater than or equal to the third MCS threshold and is less than the fourth MCS threshold value, the second time domain density is the third value.

In a possible design solution, the first time domain density is associated with a fourth value and the plurality of MCS threshold values, and the second time domain density is associated with the fourth value and the plurality of MCS threshold values, where the fourth value is associated with the first MCS and the second MCS. That the first time domain density is associated with the fourth value and the plurality of MCS threshold values satisfies any one of the following: if the fourth value is less than the first MCS threshold value, the first PTRS is not present; if the fourth value is greater than or equal to the first MCS threshold value and is less than the second MCS threshold value, the first time domain density is a first value; if the fourth value is greater than or equal to the second MCS threshold value and is less than the third MCS threshold value, the first time domain density is a second value; and if the fourth value is greater than or equal to the third MCS threshold value and is less than a fourth MCS threshold value, the first time domain density is a third value, where the fourth MCS threshold value is a preset value. That the second time domain density is associated with the fourth value and the plurality of MCS threshold values satisfies any one of the following: if the fourth value is greater than or equal to the first MCS threshold value and is less than the second MCS threshold value, the second time domain density is the first value; if the fourth value is greater than or equal to the second MCS threshold value and is less than the third MCS threshold value, the second time domain density is the second value; and if the fourth value is greater than or equal to the third MCS threshold value and is less than the fourth MCS threshold value, the second time domain density is the third value.

Optionally, the fourth value is at least one of the following: $\text{Mean}(\text{first MCS}, \text{second MCS})$ ;

$\lfloor \text{Mean}(\text{first MCS}, \text{second MCS}) \rfloor$ ; or $\lceil \text{Mean}(\text{first MCS}, \text{second MCS}) \rceil$ .

Optionally, the first MCS is greater than the second MCS.

Optionally, the first MCS is less than the second MCS.

In a possible design solution, the first PTRS port corresponds to the first MCS, and the second PTRS port corresponds to the second MCS. A fifth value is associated with the first MCS and the plurality of MCS threshold values, and a sixth value is associated with the second MCS and the plurality of MCS threshold values. The first time domain density is associated with the fifth value and the sixth value, and the second time domain density is associated with the fifth value and the sixth value. That the fifth value is associated with the first MCS and the plurality of MCS threshold values satisfies any one of the following: if the first MCS is less than the first MCS threshold value, the first PTRS is not present; if the first MCS is greater than or equal to the first MCS threshold value and is less than the second MCS threshold value, the fifth value is a first value; if the first MCS is greater than or equal to the second MCS threshold value and is less than the third MCS threshold value, the fifth value is a second value; and if the first MCS is greater than or equal to the third MCS threshold and is less than a fourth MCS threshold, the fifth value is a third value, where the fourth MCS threshold value is a preset value. That the sixth value is associated with the second MCS and the plurality of MCS threshold values satisfies any one of the following: if the second MCS is less than the first MCS threshold value, the second PTRS is not present; if the second MCS is greater than or equal to the first MCS threshold value and is less than the second MCS threshold value, the sixth value is the first value; if the second MCS is greater than or equal to the second MCS threshold value and is less than the third MCS threshold value, the fifth value is the second value; and if the second MCS is greater than or equal to the third MCS threshold and is less than the fourth MCS threshold, the sixth value is the third value.

Optionally, when the fifth value is greater than the sixth value, values of the first time domain density and the second time domain density are both equal to the fifth value.

Optionally, when the fifth value is less than the sixth value, values of the first time domain density and the second time domain density are both equal to the fifth value.

Optionally, when the fifth value is greater than the sixth value, a value of the first time domain density and a value of the second time domain density are equal to a seventh value, where the seventh value is associated with the fifth value and the sixth value.

Optionally, when the fifth value is less than the sixth value, a value of the first time domain density and a value of the second time domain density are equal to a seventh value, where the seventh value is associated with the fifth value and the sixth value.

Further, the seventh value is at least one of the following: $\text{Mean}(\text{fifth value}, \text{sixth value})$ ;

$\lfloor \text{Mean}(\text{fifth value}, \text{sixth value}) \rfloor$ ; or $\lceil \text{Mean}(\text{fifth value}, \text{sixth value}) \rceil$ .

In a possible design solution, the first indication information further indicates PUSCH precoding and number-of-transmission-layers information, and the second indication information further includes PTRS power information.

In a possible design solution, a first power coefficient is associated with at least one of the following: the PUSCH precoding, the number-of-transmission-layers information, the PTRS power information, or a value of a first number of scheduled PTRS ports, where the first power coefficient is a power coefficient corresponding to the first PTRS. A second power coefficient is associated with at least one of the following: the PUSCH precoding, the number-of-transmission-layers information, the PTRS power information, or a value of a second number of scheduled PTRS ports, where the second power coefficient is a power coefficient corresponding to the second PTRS.

In addition, for technical effects of the method according to the second aspect, refer to the technical effects of the communication method according to the first aspect. Details are not described herein again.

According to a third aspect, a communication apparatus is provided. The apparatus includes a module configured to perform the method according to the first aspect, for example, a transceiver module and a processing module. The transceiver module may be configured to implement a function of receiving and sending a message by the apparatus. The processing module may be configured to implement a function of the apparatus other than receiving and sending the message.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the communication method according to the first aspect.

It should be noted that the communication apparatus according to the third aspect may be a terminal apparatus, may be a chip (system) or another component or assembly that may be disposed in a terminal apparatus, or may be an apparatus including a terminal apparatus. This is not limited in this application.

In addition, for technical effects of the communication apparatus according to the third aspect, refer to the technical effects of the communication method according to the first aspect. Details are not described herein again.

According to a fourth aspect, a communication apparatus is provided. The apparatus includes a module configured to perform the method according to the second aspect, for example, a transceiver module and a processing module. The transceiver module may be configured to implement a function of receiving and sending a message by the apparatus. The processing module may be configured to implement a function of the apparatus other than receiving and sending the message.

For example, the processing module is configured to control the transceiver module to send first indication information. The transceiver module is configured to receive a first PTRS. The transceiver module is further configured to receive a second PTRS. The first indication information indicates a first modulation and coding scheme MCS and a second MCS. The first PTRS is a PTRS sent on a first PTRS port. A time domain density corresponding to the first PTRS is a first time domain density, and the first time domain density is associated with the first MCS and/or the second MCS. The second PTRS is a PTRS sent on a second PTRS port. A time domain density corresponding to the second PTRS is a second time domain density, and the second time domain density is associated with the first MCS and/or the second MCS.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the second aspect.

It should be noted that the communication apparatus according to the fourth aspect may be a network device, may be a chip (system) or another component or assembly that may be disposed in a network device, or may be an apparatus including a network device. This is not limited in this application.

In addition, for technical effects of the communication apparatus according to the fourth aspect, refer to the technical effects of the communication method according to the second aspect. Details are not described herein again.

According to a fifth aspect, a communication apparatus is provided. The communication apparatus includes a processor. The processor is configured to perform the method according to any one of the implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the method according to any one of the implementations of the first aspect or the second aspect.

In this application, the communication apparatus according to the fifth aspect may be the network device in the first aspect or the second aspect, an apparatus including the network device, or an apparatus included in the network device, for example, a chip. Alternatively, the communication apparatus may be the terminal device in the first aspect or the second aspect, an apparatus including the terminal device, or an apparatus included in the terminal device, for example, a chip.

In addition, for technical effects of the communication apparatus according to the fifth aspect, refer to the technical effects of the method according to any one of the implementations of the first aspect or the second aspect. Details are not described herein again.

According to a sixth aspect, a communication apparatus is provided. The communication apparatus includes a processor. The processor is coupled to a memory. The processor is configured to execute a computer program stored in the memory, so that the communication apparatus performs the method according to any one of the implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be the network device in the first aspect or the second aspect, an apparatus including the network device, or an apparatus included in the network device, for example, a chip. Alternatively, the communication apparatus may be the terminal device in the first aspect or the second aspect, an apparatus including the terminal device, or an apparatus included in the terminal device, for example, a chip.

In addition, for technical effects of the communication apparatus according to the sixth aspect, refer to the technical effects of the method according to any one of the implementations of the first aspect or the second aspect. Details are not described herein again.

According to a seventh aspect, a communication apparatus is provided, and includes a processor and a memory. The memory is configured to store a computer program. When the processor executes the computer program, the communication apparatus is enabled to perform the method according to any one of the implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the network device in the first aspect or the second aspect, an apparatus including the network device, or an apparatus included in the network device, for example, a chip. Alternatively, the communication apparatus may be the terminal device in the first aspect or the second aspect, an apparatus including the terminal device, or an apparatus included in the terminal device, for example, a chip.

In addition, for technical effects of the communication apparatus according to the seventh aspect, refer to the technical effects of the method according to any one of the implementations of the first aspect or the second aspect. Details are not described herein again.

According to an eighth aspect, a communication apparatus is provided, and includes a processor. The processor is configured to: after being coupled to a memory and reading a computer program in the memory, perform, based on the computer program, the method according to any one of the implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the network device in the first aspect or the second aspect, an apparatus including the network device, or an apparatus included in the network device, for example, a chip. Alternatively, the communication apparatus may be the terminal device in the first aspect or the second aspect, an apparatus including the terminal device, or an apparatus included in the terminal device, for example, a chip.

In addition, for technical effects of the communication apparatus according to the eighth aspect, refer to the technical effects of the method according to any one of the implementations of the first aspect or the second aspect. Details are not described herein again.

According to a ninth aspect, a communication system is provided. The communication system includes the terminal device in the foregoing aspects and the network device in the foregoing aspects.

According to a tenth aspect, a computer-readable storage medium is provided, and includes a computer program or instructions. When the computer program or the instructions are run on a computer, the computer is enabled to perform the method according to any one of the implementations of the first aspect or the second aspect.

According to an eleventh aspect, a computer program product is provided, and includes a computer program or instructions. When the computer program or the instructions are run on a computer, the computer is enabled to perform the method according to any one of the implementations of the first aspect or the second aspect.

## BRIEF DESCRIPTION OF DRAWINGS

FIG. 1 is a diagram of time-frequency resource mapping of a type 1 DMRS;
FIG. 2 is a diagram of time-frequency resource mapping of a type 2 DMRS;
FIG. 3 is a diagram of a method for implementing code division multiplexing;
FIG. 4 is a diagram 1 of an example association relationship between a PTRS port and a DMRS port according to an embodiment of this application;
FIG. 5 is a diagram 2 of an association relationship between a PTRS port and a DMRS port according to an embodiment of this application;
FIG. 6 is a diagram 3 of an association relationship between a PTRS port and a DMRS port according to an embodiment of this application;
FIG. 7 is a diagram 4 of an association relationship between a PTRS port and a DMRS port according to an embodiment of this application;
FIG. 8 is a diagram 5 of an association relationship between a PTRS port and a DMRS port according to an embodiment of this application;
FIG. 9 is a diagram of an architecture of a communication system according to an embodiment of this application;
FIG. 10 is a schematic flowchart of a communication method according to an embodiment of this application;
FIG. 11 is a diagram 1 of time-frequency resources occupied by PTRS 0 and PTRS 1 according to an embodiment of this application;
FIG. 12 is a diagram 2 of time-frequency resources occupied by PTRS 0 and PTRS 1 according to an embodiment of this application;
FIG. 13 is a diagram 3 of time-frequency resources occupied by PTRS 0 and PTRS 1 according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

## DESCRIPTION OF EMBODIMENTS

For ease of understanding, the following first describes technical terms in embodiments of this application.

1. DMRS

The DMRS may be used to estimate an equivalent channel matrix of a data channel, for example, a physical downlink shared channel (physical downlink shared channel, PDSCH) or a physical uplink shared channel (physical downlink shared channel, PUSCH), or a control channel, for example, a physical downlink control channel (physical downlink shared channel, PUSCH), to detect and demodulate data.

The data channel PDSCH is used as an example. Same precoding is usually performed on the DMRS and a sent data signal, to ensure that the DMRS and data pass through a same equivalent channel. If a DMRS vector sent by a transmit end is s, a data symbol vector sent by the transmit end is x, and a same precoding operation (for example, multiplication by a same precoding matrix P) is performed on the DMRS and the data, a corresponding signal vector received by a receive end may be represented as follows.

Data signal: A value of a first number of scheduled PTRS ports is associated with a number of PTRS ports for actually sending a PTRS signal on each OFDM symbol, and a value of a second number of scheduled PTRS ports is associated with the number of PTRS ports for actually sending the PTRS signal on each OFDM symbol, where the PTRS signal includes a first PTRS and a second PTRS, and the OFDM symbol is an OFDM symbol included in the PUSCH.

$$\text{Data signal: } y = HPx + n = \tilde{H}x + n$$

$$\text{DMRS: } r = HPs + n = \tilde{H}s + n$$

In other words, equivalent channels through which the data signal and a reference signal (that is, the DMRS) pass are both $\tilde{H}$. The DMRS vector s is known. Therefore, the receive end may obtain the equivalent channel $\tilde{H}$ through estimation based on the DMRS vector s, for example, estimate the equivalent channel $\tilde{H}$ by using a least square (least square, LS) channel estimation algorithm or a minimum mean square error (minimum mean square error, MMSE) channel estimation algorithm, so that multiple-input multiple-output (multiple-input and multiple-output, MIMO) equalization and subsequent demodulation of the data signal can be completed based on the equivalent channel $\tilde{H}$.

The DMRS is used to estimate the equivalent channel $\tilde{H}$, and a dimension of the equivalent channel is NR×R, where NR is a number of receive antennas, and R is a number of transport streams (which may also be referred to as a number of transmission layers, a number of spatial layers, or a transmission rank (rank)). Generally, one DMRS port corresponds to one spatial layer, that is, one DMRS port corresponds to one transport stream. Therefore, for MIMO transmission whose number of transport streams is R, a number of DMRS ports needed is R. However, to ensure channel estimation quality, different DMRS ports are usually orthogonal ports. For example, DMRSs corresponding to different DMRS ports are orthogonal in frequency domain, time domain, or code domain, to avoid interference between different DMRS ports.

To reduce mutual interference, DMRSs corresponding to a plurality of DMRS ports are usually mapped to a preset time-frequency resource in a frequency division multiplexing, time division multiplexing, or code division multiplexing manner. Currently, 5G NR supports two DMRS configuration types. For a DMRS of a configuration type 1 (Type 1), a maximum of eight orthogonal ports can be supported. For a DMRS of a configuration type 2 (Type 2), a maximum of 12 orthogonal ports can be supported.

For one DMRS port, to perform channel estimation on different time-frequency resources and ensure the channel estimation quality, a plurality of DMRSs need to be sent on a plurality of time-frequency resources. The DMRS may occupy at least one orthogonal frequency division multiplexing (orthogonal frequency division multiplexing, OFDM) symbol in time domain, and occupy a bandwidth the same as a scheduled bandwidth of a scheduled data signal in frequency domain. A plurality of DMRSs corresponding to one DMRS port correspond to one reference signal sequence, and one reference signal sequence may include a plurality of reference signal sequence elements. The reference signal sequence corresponding to the DMRS may be a Gold sequence or a Walsh sequence. For example, the reference signal sequence corresponding to the DMRS is the Gold sequence. An $n^{th}$ element in the reference signal sequence may be generated according to the following formula:

$$r(n) = \frac{1}{\sqrt{2}}(1 - 2 \cdot c(2n)) + j\frac{1}{\sqrt{2}}(1 - 2 \cdot c(2n + 1));$$

A pseudo-random sequence c(n) may be a Gold sequence whose sequence length is 31. For a sequence c(n) whose output length is MPN, n=0, 1, ..., or MPN-1, the sequence may be defined as:

$$c(n) = \left( x_1(n + N_C) + x_2(n + N_C) \right) \mod 2$$

$$x_1(n + 31) = \left( x_1(n + 3) + x_1(n) \right) \mod 2$$

$$x_2(n + 31) = \left( x_2(n + 3) + x_2(n + 2) + x_2(n + 1) + x_2(n) \right) \mod 2$$

$N_C$ = 1600. A 1$^{st}$ m-sequence $x_1(n)$ may be initialized as $x_1(0)=1$, $x_1(n)=0$, n=1, 2, ..., or 30. A 2$^{nd}$ m-sequence $x_2(n)$ is initialized by using a parameter $c_{init}$. $c_{init}$ may be defined as:

$$c_{init} = \left( 2^{17} \left( N_{symb}^{slot} n_{s,f}^{\mu} + l + 1 \right) \left( 2N_{ID}^{n_{SCID}^{-\lambda}} + 1 \right) + 2^{17} \left\lfloor \frac{\overline{\lambda}}{2} \right\rfloor + 2N_{ID}^{n_{SCID}^{-\lambda}} + n_{SCID}^{-\lambda} \right) \mod 2^{31}$$

$l$ is an index of an OFDM symbol included in a slot. $n_{s,f}^{\mu}$ is an index of a slot in a system frame. $N_{ID}^0$, $N_{ID}^1 \in \{0, 1, ..., 65535\}$ may be configured by using higher layer signaling. $N_{ID}^{n_{SCID}^{-\lambda}}$ is related to a cell ID (identification), and may be generally equal to the cell ID ($N_{ID}^{cell}$), that is, $N_{ID}^{n_{SCID}^{-\lambda}} = N_{ID}^{cell}$. $n_{SCID}^{-\lambda}$ is an initialization

parameter whose value may be 0 or 1. A specific determining formula is as follows:

$$\overline{n}_{SCID}^{-\lambda} = \begin{cases} n_{SCID} & \lambda = 0 \ or \ \lambda = 2 \\ 1 - n_{SCID} & \lambda = 1 \end{cases}$$

Herein, λ is a code division multiplexing (code division multiplexing, CDM) group index corresponding to the DMRS port. For adjacent DMRS frequency domain positions, different $\overline{n}_{SCID}^{-\lambda}$ may be used to reduce a peak-to-average power ratio (peak-to-average power ratio, PAPR). When a DMRS sequence initialization indication field is configured in downlink control information (downlink control information, DCI), $n_{SCID} \in \{0,1\}$ may be indicated by the DCI. In another case, a value of $n_{SCID}$ may default to 0.

It should be understood that according to a preset time-frequency resource mapping rule, a reference signal sequence corresponding to one DMRS port is multiplied by a corresponding mask sequence and then mapped to a corresponding time-frequency resource.

For example, for DMRS port p, an mth reference sequence element r(m) in a reference signal sequence corresponding to DMRS port p may be mapped to a resource element (resource element, RE) whose index is $(k, l)_{p,\mu}$ according to the following mapping rule. The RE whose index is $(k, l)_{p,\mu}$ corresponds to an OFDM symbol whose index is $l$ in a slot in time domain, and corresponds to a subcarrier whose index is k in frequency domain. The mapping rule satisfies:

$$a_{k,l}^{p,\mu} = \beta_{PDSCH}^{DMRS} w_f(k') w_t(l') r(2n+k') \qquad (1)$$

$$k = \begin{cases} 4n+2k'+\Delta, & \text{configuration type 1} \\ 6n+k'+\Delta, & \text{configuration type 2} \end{cases};$$

$$k'=0,1;$$

$$l = \overline{l}+l';$$

$$n=0,1,...;$$

$$l'=0,1;$$

Herein, p is an index of the DMRS port. μ is a subcarrier spacing parameter. $a_{k,l}^{p,\mu}$ is a DMRS modulation symbol corresponding to DMRS port p mapped to the RE whose index is $(k, l)_{p,\mu}$. $l$ is a symbol index of a start OFDM symbol occupied by the DMRS modulation symbol or a symbol index of a reference OFDM symbol. $\beta_{PDSCH}^{DMRS}$ is a power scaling factor. $w_t(l')$ is a time domain mask element corresponding to the OFDM symbol whose index is $l'$. $w_f(k')$ is a frequency domain mask element corresponding to a subcarrier whose index is $k'$. $m = 2n + k'$. $\Delta$ is a subcarrier offset factor.

In an NR protocol, two DMRS configuration manners are defined, that is, the configuration type 1 (Type 1 DMRS) and the configuration type 2 (Type 2 DMRS). In a mapping rule of a type 1 DMRS, values of $w_f(k')$, $w_t(l')$, and $\Delta$ corresponding to DMRS port p may be determined according to Table 1.

Table 1

| p | λ | Δ | $w_f(k')$ | | $w_t(l')$ | |
|---|---|---|---|---|---|---|
| | | | k' = 0 | k' = 1 | l' = 0 | l' = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |

(continued)

| p | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1006 | 1 | 1 | +1 | +1 | +1 | -1 |
| 1007 | 1 | 1 | +1 | -1 | +1 | -1 |

$\lambda$ is an index of a code division multiplexing group (which may also be referred to as an orthogonal multiplexing group) to which DMRS port p belongs. DMRS ports in a same orthogonal multiplexing group occupy a same time-frequency resource.

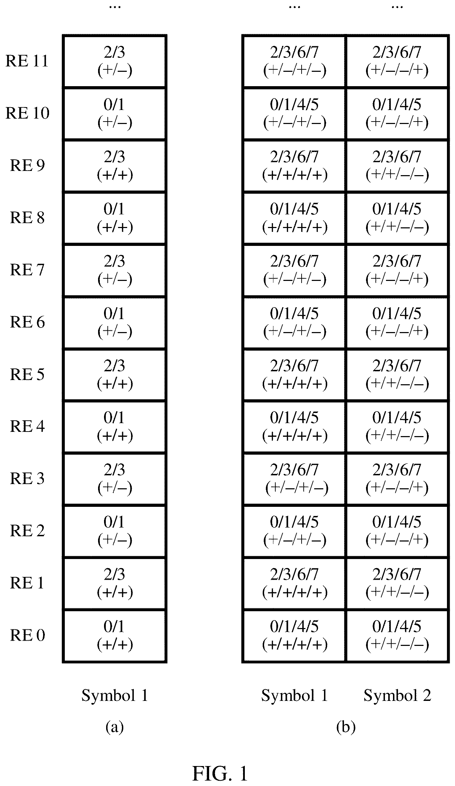

According to the formula (1), FIG. 1 is a diagram of time-frequency resource mapping of the type 1 DMRS. As shown in FIG. 1, for a single-symbol DMRS (corresponding to $l'$=0), a DMRS resource occupies one OFDM symbol, and a maximum of four DMRS ports are supported. The four DMRS ports are grouped into two code division multiplexing groups (CDM groups), for example, may be grouped into CDM group 0 and CDM group 1. CDM group 0 includes DMRS port 0 and DMRS port 1. CDM group 1 includes DMRS port 2 and DMRS port 3. CDM group 0 and CDM group 1 are frequency division multiplexed (that is, mapped to different frequency domain resources). DMRS ports included in a CDM group are mapped to a same time-frequency resource. Reference signals corresponding to the DMRS ports included in the CDM group are distinguished by using orthogonal cover codes (orthogonal cover code, OCC), to ensure orthogonality of the DMRS ports in the CDM group. This suppresses interference between DMRSs transmitted on different antenna ports.

Specifically, as shown in (a) in FIG. 1, DMRS port 0 and DMRS port 1 are located in a same resource element (RE), and are mapped to frequency domain resources in a comb manner, that is, adjacent frequency domain resources occupied by DMRS port 0 and DMRS port 1 are separated by one subcarrier. For one DMRS port, two adjacent occupied REs correspond to one OCC codeword sequence whose length is 2. For example, for subcarrier 0 and subcarrier 2, a group of OCC codeword sequences (+1+1 and +1-1) whose lengths are 2 are used for DMRS port 0 and DMRS port 1.

Similarly, DMRS port 2 and DMRS port 3 are located in a same RE, and are mapped, in a comb manner in frequency domain, to REs that are not occupied by DMRS port 0 and DMRS port 1. For subcarrier 1 and subcarrier 3, a group of OCC codeword sequences (+1+1 and +1-1) whose lengths are 2 are used for DMRS port 2 and DMRS port 3.

For a dual-symbol DMRS, a DMRS resource occupies two OFDM symbols, and a maximum of eight DMRS ports are supported. The eight DMRS ports are grouped into two code division multiplexing groups, for example, may be grouped into CDM group 0 and CDM group 1. CDM group 0 includes DMRS port 0, DMRS port 1, DMRS port 4, and DMRS port 5. CDM group 1 includes DMRS port 2, DMRS port 3, DMRS port 6, and DMRS port 7. CDM group 0 and CDM group 1 are frequency division multiplexed. Reference signals corresponding to DMRS ports included in a CMD group are distinguished by using OCCs.

Specifically, as shown in (b) in FIG. 1, DMRS port 0, DMRS port 1, DMRS port 4, and DMRS port 5 are located in a same RE, and are mapped to frequency domain resources in a comb manner, that is, adjacent frequency domain resources occupied by DMRS port 0, DMRS port 1, DMRS port 4, and DMRS port 5 are separated by one subcarrier. For one DMRS port, two adjacent occupied subcarriers and two adjacent occupied OFDM symbols correspond to one OCC codeword sequence whose length is 4. For example, for subcarrier 0 and subcarrier 2 corresponding to OFDM symbol 1 and OFDM symbol 2, a group of OCC codeword sequences (+1+1+1+1/+1+1-1-1/+1-1+1-1/+1-1-1+1) whose lengths are 4 may be used for DMRS port 0, DMRS port 1, DMRS port 4, and DMRS port 5.

Similarly, DMRS port 2, DMRS port 3, DMRS port 6, and DMRS port 7 are located in a same RE, and are mapped, in a comb manner in frequency domain, to subcarriers that are not occupied by DMRS port 0, DMRS port 1, DMRS port 4, and DMRS port 5. For subcarrier 1 and subcarrier 3 corresponding to OFDM symbol 1 and OFDM symbol 2, a group of OCC codeword sequences (+1+1+1+1/+1+1-1-1/+1-1+1-1/+1-1-1+1) whose lengths are 4 may be used for DMRS port 2, DMRS port 3, DMRS port 6, and DMRS port 7.

In a mapping rule of the type 2 DMRS, values of $w_f(k')$, $w_c(l')$ and $\Delta$ corresponding to DMRS port p may be determined according to Table 2.

Table 2

| p | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |

(continued)

| p | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

$\lambda$ is an index of a code division multiplexing group (which may also be referred to as an orthogonal multiplexing group) to which DMRS port p belongs. DMRS ports in a same orthogonal multiplexing group occupy a same time-frequency resource.

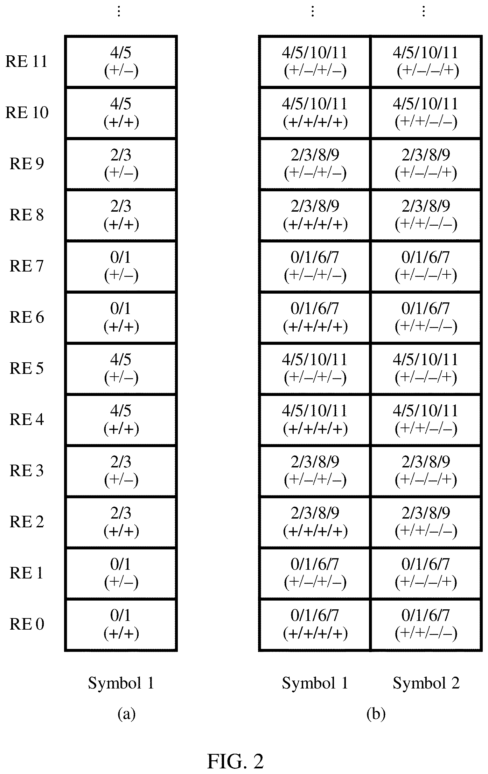

According to the formula (1), FIG. 2 is a diagram of time-frequency resource mapping of the type 2 DMRS. As shown in FIG. 2, for a single-symbol type 2 DMRS, a DMRS resource occupies one OFDM symbol, and a maximum of six DMRS ports are supported. The six DMRS ports are grouped into three code division multiplexing groups (CDM groups), for example, may be grouped into CDM group 0, CDM group 1, and CDM group 2. Frequency division multiplexing is used between the CDM groups (that is, the CDM groups are mapped to different frequency domain resources). In other words, frequency division multiplexing is used between CDM group 0, CDM group 1, and CDM group 2. Reference signals corresponding to DMRS ports included in a CMD group are mapped to a same time-frequency resource, and orthogonality of the reference signals corresponding to the DMRS ports included in the CDM group is ensured by using OCCs. CDM group 0 includes DMRS port 0 and DMRS port 1. CDM group 1 includes DMRS port 2 and DMRS port 3. CDM group 2 includes DMRS port 4 and DMRS port 5. For one DMRS port, a DMRS reference signal corresponding to the DMRS port is mapped, in frequency domain, to a plurality of resource sub-blocks including two consecutive subcarriers, and adjacent resource sub-blocks are separated by four subcarriers in frequency domain.

Specifically, as shown in (a) in FIG. 2, DMRS port 0 and DMRS port 1 are located in a same RE, and are mapped to resources in a comb manner. For example, a frequency domain resource granularity is one resource block (resource block, RB). DMRS port 0 and DMRS port 1 occupy subcarrier 0, subcarrier 1, subcarrier 6, and subcarrier 7. DMRS port 2 and DMRS port 3 occupy subcarrier 2, subcarrier 3, subcarrier 8, and subcarrier 9. DMRS port 4 and DMRS port 5 occupy subcarrier 4, subcarrier 5, subcarrier 10, and subcarrier 11. Two DMRS ports included in one CDM group correspond, in two adjacent subcarriers, to OCC codeword sequences (+1+1 and +1-1) whose lengths are 2.

For a dual-symbol type 2 DMRS, a DMRS resource occupies two OFDM symbols, and a maximum of 12 DMRS ports are supported. The 12 DMRS ports are grouped into three CDM groups, for example, may be grouped into CDM group 0, CDM group 1, and CDM group 2. Frequency division multiplexing is used between the CDM groups. In other words, frequency division multiplexing is used between CDM group 0, CDM group 1, and CDM group 2. Reference signals corresponding to DMRS ports included in a CMD group are mapped to a same time-frequency resource, and orthogonality of the reference signals corresponding to the DMRS ports included in the CDM is ensured by using OCCs. CDM group 0 may include DMRS port 0, DMRS port 1, DMRS port 6, and DMRS port 7. CDM group 1 may include DMRS port 2, DMRS port 3, DMRS port 8, and DMRS port 9. CDM group 2 may include DMRS port 4, DMRS port 5, DMRS port 10, and DMRS port 11. For one DMRS port, a DMRS corresponding to the DMRS port is mapped, in frequency domain, to a plurality of resource sub-blocks including two consecutive subcarriers, and adjacent resource sub-blocks are separated by four subcarriers in frequency domain.

Specifically, as shown in (b) in FIG. 2, DMRS ports included in one CDM group are located in a same RE, and are mapped to frequency domain resources in a comb manner. For example, a frequency domain resource granularity is one RB. DMRS port 0, DMRS port 1, DMRS port 6, and DMRS port 7 occupy subcarrier 0, subcarrier 1, subcarrier 6, and subcarrier 7 corresponding to OFDM symbol 1 and OFDM symbol 2. DMRS port 2, DMRS port 3, DMRS port 8, and DMRS port 9 occupy subcarrier 2, subcarrier 3, subcarrier 8, and subcarrier 9 corresponding to OFDM symbol 1 and OFDM symbol 2. DMRS port 4, DMRS port 5, DMRS port 10, and DMRS port 11 occupy subcarrier 4, subcarrier 5, subcarrier 10, and subcarrier 11 corresponding to OFDM symbol 1 and OFDM symbol 2. Four DMRS ports included in one CDM group correspond, in two adjacent subcarriers corresponding to two OFDM symbols, to OCC codeword sequences (+1+1+1+1/+1+1-1-1/+1-1+1-1/+1-1-1+1) whose lengths are 4.

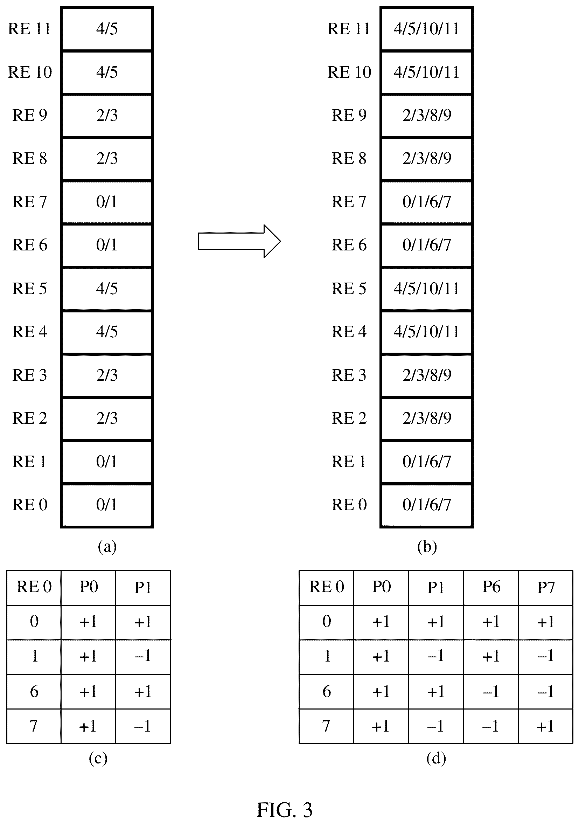

In a current R18 DMRS subject discussion, a code division multiplexing capacity expansion method is supported, to meet a higher requirement for a number of transport streams in an actual scenario. FIG. 3 is a diagram of a method for implementing code division multiplexing. As shown in FIG. 3, the diagram is described by using a single-symbol type 2 DMRS and a frequency domain resource granularity of one RB as an example. It should be understood that for other DMRS configuration types, that is, a dual-symbol type 2 DMRS, a single-symbol type 1 DMRS, a dual-symbol type 1 DMRS, and the like, DMRS ports may be extended with reference to the method. In FIG. 3, P represents a DMRS port. As shown in (a) in FIG. 3, for the single-symbol type 2 DMRS, a maximum of six DMRS ports are supported. The six DMRS ports are grouped into three CDM groups, for example, may be grouped into CDM group 0, CDM group 1, and CDM group 2. CDM group 0 may include DMRS port 0 and DMRS port 1. CDM group 1 may include DMRS port 2 and DMRS port 3. CDM group 2 may include DMRS port 4 and DMRS port 5.

As shown in (a) in FIG. 3, for CDM group 0, that is, for DMRS port 0 and DMRS port 1, indexes (RE) of subcarriers occupied in one RB may be {0, 1, 6, 7}. As shown in (c) in FIG. 3, a frequency domain mask sequence corresponding to DMRS port 0 may be {+1, +1, +1, +1}, and a frequency domain mask sequence corresponding to DMRS port 1 may be {+1, -1, +1, -1}. DMRS port 1 occupies a same time-frequency resource as DMRS port 0, and performs transmission on the same time-frequency resource as DMRS port 0 by using code division orthogonality.

As shown in (b) in FIG. 3, for a same CDM group, one more group of DMRS ports (that is, two DMRS ports) may be multiplexed in a same time-frequency resource through code division multiplexing, to increase a number of DMRS ports. For example, for CDM group 0, in addition to DMRS port 0 and DMRS port 1, DMRS port 6 and DMRS port 7 may be multiplexed through code division multiplexing, and indexes of subcarriers occupied by DMRS port 6 and DMRS port 7 in one RB may be {0, 1, 6, 7}. As shown in (d) in FIG. 3, a frequency domain mask sequence corresponding to DMRS port 6 is {+1, +1, -1, -1}, and a frequency domain mask sequence corresponding to DMRS port 7 may be {+1, -1, -1, +1}. It should be understood that a multiplexing manner of another CDM group is similar to that of CDM group 0. For example, for CDM group 1, in addition to DMRS port 2 and DMRS port 3, DMRS port 8 and DMRS port 9 may be multiplexed through code division multiplexing; and for CDM group 2, in addition to DMRS port 4 and DMRS port 5, DMRS port 10 and DMRS port 11 may be multiplexed through code division multiplexing. In this way, a total number of multiplexed DMRS ports on a same time-frequency resource can be doubled.

A time-frequency resource mapping formula of an R18 DMRS port satisfies:

$$\tilde{a}_{k,l}^{(p_j,\mu)} = w_{\mathrm{f}}(k')w_t(l')r(4n + k') \tag{2}$$

$$k = \begin{cases} 8n + 2k' + \Delta, & \text{configuration type } 1 \\ 12n + k' + \Delta, & \text{configuration type } 2, k' = 0,1; \\ 12n + k' + \Delta + 4, & \text{configuration type } 2, k' = 2,3 \end{cases}$$

$$k' = 0,1,2,3;$$

$$l = \bar{l} + l';$$

$$n = 0,1,\dots;$$

$$j = 0,1,\dots,v - 1;$$

Herein, $p_j$ is an index of the DMRS port. $\mu$ is a subcarrier spacing parameter. $\tilde{a}_{k,l}^{(p_j,\mu)}$ is a DMRS symbol corresponding to DMRS port p mapped to an RE whose index is $(k, l)$. $\beta_{\mathrm{PDSCH}}^{\mathrm{DMRS}}$ is a power factor. $w_t(l')$ is a time domain mask sequence element corresponding to a time domain symbol whose index is $l'$. $w_f(k')$ is a frequency domain mask sequence element corresponding to a subcarrier whose index is $k'$. $\Delta$ is a subcarrier offset factor. $\bar{l}$ is a symbol index of a start time domain symbol occupied by the DMRS symbol or a symbol index of a reference time domain symbol.

It should be noted that values of $w_f(k')$, $w_t(l')$, and $\Delta$ corresponding to DMRS port p obtained through code division multiplexing extension shown in FIG. 3 may be determined according to the following Table 3 to Table 6.

Table 3 is an extension of the values of $w_f(k')$, $w_t(l')$, and $\Delta$ corresponding to DMRS port p in the mapping rule of the type 1 DMRS when the reference signal sequence corresponding to the DMRS is the Gold sequence. In other words, Table 3 may be an extension of Table 1. Table 4 is a supplement to the values of $w_f(k')$, $w_t(l')$, and $\Delta$ corresponding to DMRS port p in the mapping rule of the type 2 DMRS when the reference signal sequence corresponding to the DMRS is the Gold sequence. In other words, Table 4 may be an extension of Table 2. Table 5 is a supplement to the values of $w_f(k')$, $w_t(l')$, and $\Delta$ corresponding to DMRS port p in the mapping rule of the type 1 DMRS when the reference signal sequence corresponding to the DMRS is the Walsh sequence. Table 6 is a supplement to the values of $w_f(k')$, $w_t(l')$, and $\Delta$ corresponding to DMRS port p in the mapping rule of the type 2 DMRS when the reference signal sequence corresponding to the DMRS is the Walsh sequence.

Table 3

| p | λ | Δ | $w_f(k')$ | | | | $w_t(l')$ | |
|---|---|---|---|---|---|---|---|---|
| | | | k'=0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +j | -1 | -j | +1 | +1 |
| 1009 | 0 | 0 | +1 | -j | -1 | +j | +1 | +1 |
| 1010 | 1 | 1 | +1 | +j | -1 | -j | +1 | +1 |
| 1011 | 1 | 1 | +1 | -j | -1 | +j | +1 | +1 |
| 1012 | 0 | 0 | +1 | +j | -1 | -j | +1 | -1 |
| 1013 | 0 | 0 | +1 | -j | -1 | +j | +1 | -1 |
| 1014 | 1 | 1 | +1 | +j | -1 | -j | +1 | -1 |
| 1015 | 1 | 1 | +1 | -j | -1 | +j | +1 | -1 |

Table 4

| p | λ | Δ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +j | -1 | -j | +1 | +1 |
| 1013 | 0 | 0 | +1 | -j | -1 | +j | +1 | +1 |
| 1014 | 1 | 2 | +1 | +j | -1 | -j | +1 | +1 |
| 1015 | 1 | 2 | +1 | -j | -1 | +j | +1 | +1 |
| 1016 | 2 | 4 | +1 | +j | -1 | -j | +1 | +1 |

(continued)

| p | λ | Δ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1017 | 2 | 4 | +1 | -j | -1 | +j | +1 | +1 |
| 1018 | 0 | 0 | +1 | +j | -1 | -j | +1 | -1 |
| 1019 | 0 | 0 | +1 | -j | -1 | +j | +1 | -1 |
| 1020 | 1 | 2 | +1 | +j | -1 | -j | +1 | -1 |
| 1021 | 1 | 2 | +1 | -j | -1 | +j | +1 | -1 |
| 1022 | 2 | 4 | +1 | +j | -1 | -j | +1 | -1 |
| 1023 | 2 | 4 | +1 | -j | -1 | +j | +1 | -1 |

Table 5

| p | λ | Δ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

Table 6

| p | λ | Δ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |

(continued)

| p | λ | Δ | $w_f (k')$ | | | | $w_t (l')$ | |
|---|---|---|---|---|---|---|---|---|
| | | | k' = 0 | k' = 1 | k' = 2 | k' = 3 | l' = 0 | l' = 1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

For uplink transmission of more than four PUSCH ports and more than four transport streams, a network device may further set a corresponding DMRS port indication, to determine, based on the DMRS port indication, each DMRS port corresponding to a precoding matrix, to determine a candidate DMRS port index corresponding to a PTRS port. For example, for a single-symbol type 1 DMRS, when a transmission precoding matrix is disabled (transform precoder is disabled), a maximum length maxLength=1, a number of transport streams is 5, and a number of DMRS CDM groups without data (that is, number of DMRS CDM group(s) without data) is 2, the network device may set a DMRS port indication shown in the following Table 7.

Table 7

| Bit field value (Value) | Number of DMRS CDM groups without data | DMRS port |
|---|---|---|
| 0 | 2 | 0, 1, 2, 3, and 8 |
| 1 | 2 | 0, 1, 2, 3, and 10 |

For example, for a single-symbol type 1 DMRS, when a transmission precoding matrix is disabled, maxLength=2, a number of transport streams is 6, and a number of DMRS CDM groups without data is 2, the network device may set a DMRS port indication shown in the following Table 8.

Table 8

| Bit field value (Value) | Number of DMRS CDM groups without data | DMRS port |
|---|---|---|
| 0 | 2 | 0, 1, 2, 3, 8, and 10 |
| 1 | 2 | 0, 1, 8, 2, 3, and 10 |

For example, for a single-symbol type 1 DMRS, when a transmission precoding matrix is disabled, maxLength=2, a number of transport streams is 7, and a number of DMRS CDM groups without data is 2, the network device may set a DMRS port indication shown in the following Table 9.

Table 9

| Bit field value (Value) | Number of DMRS CDM groups without data | DMRS port |
|---|---|---|
| 0 | 2 | 0, 1, 2, 3, 8, 9, and 10 |
| 1 | 2 | 0, 1, 8, 2, 3, 10, and 11 |

For example, for a single-symbol type 1 DMRS, when a transmission precoding matrix is disabled, maxLength=2, a number of transport streams is 8, and a number of DMRS CDM groups without data is 2, the network device may set a DMRS port indication shown in the following Table 10.

Table 10

| Bit field value (Value) | Number of DMRS CDM groups without data | DMRS port |
|---|---|---|
| 0 | 2 | 0, 1, 2, 3, 8, 9, 10, and 11 |
| 1 | 2 | 0, 1, 8, 9, 2, 3, 10, and 11 |

For example, for a single-symbol type 2 DMRS, when a transmission precoding matrix is disabled, maxLength=2, a number of transport streams is 5, a number of DMRS CDM groups without data is 2, and a number of front-loaded DMRS symbols (that is, number of front-load symbols) is 1, the network device may set a DMRS port indication shown in the following Table 11.

Table 11

| Bit field value (Value) | Number of DMRS CDM groups without data | DMRS port | Number of front-loaded DMRS symbols |
|---|---|---|---|
| 0 | 2 | 0, 1, 2, 3, and 12 | 1 |
| 1 | 2 | 0, 1, 2, 3, and 14 | 1 |

For example, for a single-symbol type 2 DMRS, when a transmission precoding matrix is disabled, maxLength=2, a number of transport streams is 6, a number of DMRS CDM groups without data is 2, and a number of front-loaded DMRS symbols is 1, the network device may set a DMRS port indication shown in the following Table 12.

Table 12

| Bit field value (Value) | Number of DMRS CDM groups without data | DMRS port | Number of front-loaded DMRS symbols |
|---|---|---|---|
| 0 | 2 | 0, 1, 2, 3, 12, and 14 | 1 |
| 1 | 2 | 0, 1, 12, 2, 3, and 14 | 1 |

For example, for a single-symbol type 2 DMRS, when a transmission precoding matrix is disabled, maxLength=2, a number of transport streams is 7, a number of DMRS CDM groups without data is 2, and a number of front-loaded DMRS symbols is 1, the network device may set a DMRS port indication shown in the following Table 13.

Table 13

| Bit field value (Value) | Number of DMRS CDM groups without data | DMRS port | Number of front-loaded DMRS symbols |
|---|---|---|---|
| 0 | 2 | 0, 1, 2, 3, 12, 13, and 14 | 1 |
| 1 | 2 | 0, 1, 12, 2, 3, 14, and 15 | 1 |

For example, for a single-symbol type 2 DMRS, when a transmission precoding matrix is disabled, maxLength=2, a number of transport streams is 8, a number of DMRS CDM groups without data is 2, and a number of front-loaded DMRS symbols is 1, the network device may set a DMRS port indication shown in the following Table 14.

Table 14

| Bit field value (Value) | Number of DMRS CDM groups without data | DMRS port | Number of front-loaded DMRS symbols |
|---|---|---|---|
| 0 | 2 | 0, 1, 2, 3, 12, 13, 14, and 15 | 1 |
| 1 | 2 | 0, 1, 12, 13, 2, 3, 14, and 15 | 1 |

2. PTRS

The phase tracking reference signal is a reference signal used by a receive end to perform phase noise measurement and frequency domain offset estimation.

Generation of a base sequence of the PTRS is the same as that of a DMRS, and time-frequency resource mapping of the PTRS is as follows:

$$a_{k,l}^{(p,\mu)} = \beta_{PT-RS,i} r_k;$$

$r_k$ is a $k^{th}$ element in a reference signal sequence corresponding to the PTRS. A generation manner of the reference signal sequence corresponding to the PTRS is consistent with a generation manner of a reference signal sequence corresponding to the DMRS.

For PUSCH transmission, time-frequency resource mapping of the PTRS may alternatively be as follows:

$$\begin{bmatrix} a_{k,l}^{(p_0,\mu)} \\ \vdots \\ a_{k,l}^{(p_{\rho-1},\mu)} \end{bmatrix} = \beta_{PT\text{-}RS} W \begin{bmatrix} r^{(\tilde{p}_0)}(2n + k') \\ \vdots \\ r^{(\tilde{p}_{v-1})}(2n + k') \end{bmatrix}$$

The following cases are included:

l is an OFDM symbol allocated to PUSCH transmission; and
an RE (k, l) is not allocated to the DMRS.
k' and $\Delta$ correspond to ports $\tilde{p}_0, ..., \tilde{p}_{v-1}$.

For the foregoing two types of time-frequency resource mapping of the PTRS, the base sequence $r_k$ may be provided as follows:

$$r^{(\tilde{p}_j)}(m) = \begin{cases} r(m) & \text{if } j = j' \text{ or } j = j'' \\ 0 & \text{otherwise} \end{cases}$$

Antenna port $\tilde{p}_j$ or $\{\tilde{p}_{j'}, \tilde{p}_{j''}\}$ is an antenna port that is associated with PTRS transmission and that is determined according to clause 6.2.3 in 3GPP TS 38.214. $r(m)$ is a reference signal sequence generated in the foregoing background (a formula r on page 7). antenna ports $\tilde{p}_{j'}$ or associated with PT-RS transmission are given by clause 6.2.3 of [6, TS 38.214]; $r(m)$ is given by clause 6.4.1.1.1.1.

A value of a power coefficient $\beta_{PTRS}$ satisfies the following power coefficient determining table 21 and a corresponding power coefficient determining method.

A specific value (k, l) of a time-frequency resource position may be determined by using the following steps.

Specifically, a time domain position l corresponding to the PTRS may be determined according to the following steps.

Step 1: Set $i = 0$, $l_{ref} = 0$ .

Step 2: If any symbol in an interval from $\max(l_{ref} + (i-1) L_{PT-RS} + 1, l_{ref})$ to $l_{ref} + iL_{PT-RS}$ overlaps a DMRS symbol, set i=1. If the DMRS is a single-symbol DMRS, set $l_{ref}$ as an index of a DMRS symbol; or if the DMRS is a dual-symbol DMRS, set $l_{ref}$ as an index of a $2^{nd}$ DMRS symbol. Repeat from step 2 as long as $l_{ref} + iL_{PT-RS}$ is still in symbols allocated to the PDSCH. $L_{PT-RS}$ is a time domain density of the PTRS.

Step 3: Add $l_{ref} + iL_{PT-RS}$ to a time domain index set of the PTRS.

Step 4: Repeat from step 2 as long as $l_{ref} + iL_{PT-RS}$ is still in the symbols allocated to the PDSCH.

In other words, a time domain range of the PTRS may start from a $1^{st}$ symbol of the scheduled PDSCH, avoid a location at which the DMRS is located, and continue till the end of the PDSCH with $L_{PT-RS}$ as a density. A value of the time domain density $L_{PT\text{-}RS}$ of the PTRS may be determined according to the following Table 15. $I_{MCS}$ is a currently scheduled modulation and coding scheme (modulation and coding scheme, MCS), and ptrs-MCS1, ptrs-MCS2, ptrs-MCS3, and ptrs-MCS4 are MCS threshold ranges configured by a higher layer. $L_{PT\text{-}RS}$ is a density of existence of the PTRS in time domain, that is, represents a symbol interval at which the PTRS appears in one slot/slot (slot), and indicates that the PTRS is sent on each time domain OFDM symbol if valued to 1.

Table 15

| Scheduled MCS | $L_{PT\text{-}RS}$ |
|---|---|
| $I_{MCS}$<ptrs-MCS1 | The PTRS is not present |
| ptrs-MCS 1 $\leq I_{MCS}$<ptrs-MCS2 | 4 |
| ptrs-MCS2$\leq I_{MCS}$<ptrs-MCS3 | 2 |
| ptrs-MCS3 $\leq I_{MCS}$<ptrs-MCS4 | 1 |

A value of a frequency domain position k corresponding to the PTRS may be determined according to the following formula:

$$k = k_{\text{ref}}^{\text{RE}} + \left( i K_{\text{PT-RS}} + k_{\text{ref}}^{\text{RB}} \right) N_{\text{sc}}^{\text{RB}}$$

$$k_{\text{ref}}^{\text{RB}} = \begin{cases} n_{\text{RNTI}} \bmod K_{\text{PT-RS}} & \text{if } N_{\text{RB}} \bmod K_{\text{PT-RS}} = 0 \\ n_{\text{RNTI}} \bmod \left( N_{\text{RB}} \bmod K_{\text{PT-RS}} \right) & \text{otherwise} \end{cases}$$

i is a resource block (resource block, RB) offset for existence of the PTRS, and i=0, 1, 2, .... $n_{\text{RNTI}}$ is a value of a radio network temporary identifier (radio network temporary identifier, RNTI) corresponding to DCI scheduling. $N_{\text{RB}}$ is a number of currently scheduled RBs. $K_{PT\text{-}RS}$ is a frequency domain density (that is, an RB density) of the PTRS, and $K_{PT\text{-}RS}$ $\in \{2, 4\}$. In other words, $K_{PT\text{-}RS}$ is a density of existence of the PTRS in frequency domain, represents an RB interval at which the PTRS appears in a scheduled bandwidth of single scheduling, and indicates that the PTRS is sent once on every two frequency domain RBs if valued to 2. A value of the frequency domain density $K_{PT\text{-}RS}$ of the PTRS may be determined according to the following Table 16. $N_{RB0}$, $N_{RB1}$ are an RB threshold ranges configured by the higher layer.

Table 16

| Scheduled width | $K_{PT\text{-}RS}$ |
|---|---|
| $N_{RB} < N_{RB0}$ | The PTRS is not present |
| $N_{RB0} \leq N_{RB} < N_{RB1}$ | 2 |
| $N_{RB1} \leq N_{RB}$ | 4 |

$k_{\text{ref}}^{\text{RE}}$ is a subcarrier offset corresponding to a DMRS port associated with a PTRS port in an RB in which each PTRS exists. For example, for a type 1 DMRS, a candidate DMRS port corresponding to the PTRS port includes DMRS port 0, DMRS port 1, DMRS port 2, and DMRS port 3; and for a type 2 DMRS, a candidate DMRS port corresponding to the PTRS port includes DMRS port 0, DMRS port 1, DMRS port 2, DMRS port 3, DMRS port 4, and DMRS port 5. In this case, $k_{\text{ref}}^{\text{RE}}$ may be determined according to the following Table 17. An option column corresponding to a resource element offset (resoureceElementOffset) of current scheduling may be determined by a field in a higher layer parameter "phase tracking reference signal-downlink configuration (PTRS-DownlinkConfig)". If the higher layer parameter does not include the field, the value may default to a value in "offset00".

Table 17

| DMRS port $\bar{p}$ | $k_{\text{ref}}^{\text{RE}}$ | | | | | | | |
|---|---|---|---|---|---|---|---|---|
| | Type 1 DMRS | | | | Type 2 DMRS | | | |
| | Resource element offset | | | | Resource element offset | | | |
| | Offset 00 | Offset 01 | Offset 10 | Offset 11 | Offset 00 | Offset 01 | Offset 10 | Offset 11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |
| 8 | 4 | 6 | 10 | 0 | - | - | - | - |
| 9 | 6 | 8 | 0 | 2 | - | - | - | - |
| 10 | 5 | 7 | 11 | 1 | - | - | - | - |
| 11 | 7 | 9 | 1 | 3 | - | - | - | - |
| 12 | - | - | - | - | 6 | 7 | 0 | 1 |
| 13 | - | - | - | - | 7 | 0 | 1 | 6 |
| 14 | - | - | - | - | 8 | 9 | 2 | 3 |
| 15 | - | - | - | - | 9 | 2 | 3 | 8 |
| 16 | - | - | - | - | 10 | 11 | 4 | 5 |
| 17 | - | - | - | - | 11 | 4 | 5 | 10 |

3. Association relationship between a PTRS port and a DMRS port for 4T and four streams

A candidate DMRS port that can be bound to a PTRS port is specified in a current NR protocol. An association relationship between a PTRS port and a DMRS port may be indicated by a phase tracking reference signal-demodulation reference signal association (PTRS-DMRS association) field in DCI. There are two possibilities for the indication: 0-bit or 2-bit (bit). When the PTRS-DMRS association is 0-bit, it indicates that a PTRS-UplinkConfig field is not present, or maxRank=1, that is, it indicates that no PTRS port is configured or there is only one candidate DMRS port. Therefore, DMRS port binding does not need to be performed on a PTRS port. When the PTRS-DMRS association is 2-bit, a PTRS-DMRS binding relationship may be selected based on a maximum number of PTRS ports configured in the PTRS-UplinkConfig field.

Specifically, when the maximum number of PTRS ports is 1, an index of a DMRS port bound to a PTRS port (for example, PTRS port 0) may be determined according to the following Table 18. In other words, when the number of PTRS ports is 1, the PTRS-DMRS association field may indicate one of a maximum of four candidate DMRS ports (that is, scheduled DMRS ports (scheduled DMRS ports)) as a DMRS port index bound to PTRS port 0.

Table 18

| Bit field value (Value) | DMRS port |
|---|---|
| 0 | 1st scheduled DMRS port (1st scheduled DMRS port) |
| 1 | 2nd scheduled DMRS port (2nd scheduled DMRS port) |
| 2 | 3rd scheduled DMRS port (3rd scheduled DMRS port) |
| 3 | 4th scheduled DMRS port (4th scheduled DMRS port) |

For example, when it is determined, based on the indication of the DCI signaling, that the candidate DMRS port corresponding to the PTRS port includes DMRS port 0, DMRS port 1, DMRS port 2, and DMRS port 3, if the PTRS-DMRS association field indicates that a value of "Value" is 2, it indicates that PTRS port 0 is bound to a 3rd candidate DMRS port (that is, a 3rd scheduled DMRS port), that is, it indicates that DMRS port 2 is a DMRS port bound to PTRS port 0. If the PTRS-DMRS association field indicates that the value of "Value" is 3, it indicates that PTRS port 0 is bound to a 4th candidate DMRS port, that is, it indicates that DMRS port 3 is a DMRS port bound to PTRS port 0. The value of "Value" may be indicated by the DCI signaling.

When the maximum number of PTRS ports is 2, an index of a DMRS port bound to a PTRS port (that is, PTRS port 0 and PTRS port 1) may be determined according to the following Table 19. In other words, when the number of PTRS ports is 2, one of a maximum of two candidate DMRS ports may be indicated as a DMRS port index bound to PTRS port 0 or a DMRS port index bound to PTRS port 1.

Table 19

| Value of an MSB (Value of MSB) | DMRS port | | Value of an LSB (Value of LSB) | DMRS port |
|---|---|---|---|---|
| 0 | 1st DMRS port which shares PTRS port 0 (1st DMRS port which shares PTRS port 0) | | 0 | 1st DMRS port which shares PTRS port 1 (1st DMRS port which shares PTRS port 1) |
| 1 | 2nd DMRS port which shares PTRS port 0 (2nd DMRS port which shares PTRS port 0) | | 1 | 2nd DMRS port which shares PTRS port 1 (2nd DMRS port which shares PTRS port 1) |

The most significant bit (most significant bit, MSB) of the PTRS-DMRS association field may indicate a DMRS port which shares PTRS port 0, and the least significant bit (least significant bit, LSB) of the PTRS-DMRS association field may indicate a DMRS port which shares PTRS port 1.

It should be understood that the MSB of the PTRS-DMRS association field may alternatively indicate a DMRS port which shares PTRS port 1, and the LSB of the PTRS-DMRS association field may alternatively indicate a DMRS port which shares PTRS port 0.

For example, when it is determined, based on the indication of the DCI signaling, that the candidate DMRS port corresponding to the PTRS port includes DMRS port 0, DMRS port 1, DMRS port 2, and DMRS port 3, if a value of "Value of MSB" is 1, it indicates that PTRS port 0 is bound to a 2nd candidate DMRS port indicated by the most significant bit, that is, it indicates that DMRS port 2 is a DMRS port bound to PTRS port 0. If a value of "Value of LSB" is 1, it indicates that PTRS port 1 is bound to a 2nd candidate DMRS port indicated by the least significant bit, that is, it indicates that DMRS port 3 is a DMRS port bound to PTRS port 1.

A configuration scenario in which the number of PTRS ports is 2 usually occurs in partial-coherent (partial-coherent) and non-coherent (non-coherent) uplink codebook based transmission (UL Codebook based transmission), and a configuration in which the number of PTRS ports is 1 usually occurs in full-coherent (full-coherent) uplink codebook based transmission. Full coherence means that all antenna ports (that is, PUSCH ports) can send a same data stream. Partial coherence means that a part of antenna ports (that is, antenna ports in a same coherent antenna group) can send a same data stream. Non-coherence means that each antenna port can send only one data stream. Non-zero elements included in one column of a partial-coherent codebook correspond to a same coherent antenna group. One column in a non-coherent codebook includes only one non-zero element.

For partial-coherent and non-coherent uplink codebook based transmission, a number of PTRS ports for actual sending depends on an uplink precoding matrix indicator (transmitted precoding matrix indication, TPMI) and a maximum number of transport streams. For example, for partial-coherent and non-coherent antenna configurations, PUSCH port 0 and PUSCH port 2 may share PTRS port 0, and PUSCH port 1 and PUSCH port 3 may share PTRS port 1 (it may be understood that this determines mapping of a PUSCH port to a PTRS port and a PUSCH port on which a PTRS is sent). In addition, PTRS port 0 may be bound to an "xth" uplink stream (that is, DMRS port x), and PTRS port 1 may be bound to a "yth" uplink stream (that is, DMRS port y), where x and y may be determined according to Table 18 (that is, may be indicated by the DCI).

A network device may configure a codebook subset by using radio resource control (radio resource control, RRC) signaling. When a codebook subset restriction is FullyAndPartialAndNonCoherent, an uplink codebook subset includes all codebooks whose numbers of transport streams are not greater than the maximum number of transport streams. When the codebook subset restriction is PartialAndNonCoherent, the uplink codebook subset includes all partial-coherent codebooks and non-coherent codebooks whose numbers of transport streams are not greater than the maximum number of transport streams. When the codebook subset restriction is NonCoherent, the uplink codebook subset includes all non-coherent codebooks whose numbers of transport streams are not greater than the maximum number of transport streams. It should be understood that the DCI signaling may indicate a corresponding number of transport streams and a corresponding TPMI index (that is, a precoding matrix index), and each number of transport streams and each TPMI index correspond to one precoding matrix of a PUSCH transmitted based on a codebook.

For example, for four-stream PUSCH transmission, Table 20 shows a precoding matrix W used when four antenna ports perform four-layer transmission, and a TPMI set corresponds to uplink four-stream transmission on four transmit antennas. A precoding matrix (W) corresponding to codebook 0 (that is, a TPMI index=0) may be understood as non-coherent transmission. Precoding matrices corresponding to codebook 1 (that is, a TPMI index=1) and codebook 2 (that is, a TPMI index=2) may be understood as partial-coherent transmission. Precoding matrices corresponding to codebook 3 (that is, a TPMI index=3) and codebook 4 (that is, a TPMI index=4) may be understood as full-coherent transmission. For a four-transmission four-stream (that is, uplink four-stream transmission on four transmit antennas) uplink codebook, one row of the codebook corresponds to one PUSCH antenna port (which may also be understood as one sounding reference signal (sounding reference signal, SRS) port), and one column of the codebook corresponds to one uplink transport stream (which may also be understood as one DMRS port).

Table 20

| TPMI index | Precoding matrix (W) (the TPMI index increases from left to right) | | | |
|---|---|---|---|---|
| 0 to 3 | $\frac{1}{2}\begin{bmatrix}1&0&0&0\\0&1&0&0\\0&0&1&0\\0&0&0&1\end{bmatrix}$ | $\frac{1}{2\sqrt{2}}\begin{bmatrix}1&1&0&0\\0&0&1&1\\1&-1&0&0\\0&0&1&-1\end{bmatrix}$ | $\frac{1}{2\sqrt{2}}\begin{bmatrix}1&1&0&0\\0&0&1&1\\j&-j&0&0\\0&0&j&-j\end{bmatrix}$ | $\frac{1}{4}\begin{bmatrix}1&1&1&1\\1&-1&1&-1\\1&1&-1&-1\\1&-1&-1&1\end{bmatrix}$ |
| 4 | $\frac{1}{4}\begin{bmatrix}1&1&1&1\\1&-1&1&-1\\j&j&-j&-j\\j&-j&-j&j\end{bmatrix}$ | - | - | - |

As described above, NR supports uplink transmission of a maximum of four streams for a single terminal.

4. $\rho_{PTRS}^{PUSCH}$ per layer per resource element (resource element, RE)

The PUSCH-to-PTRS power factor $\rho_{PTRS}^{PUSCH}$ per layer per RE is a ratio of power of one PUSCH transmission layer to power of one PTRS port per layer per RE.

The power factor may be in linear domain. For example, transmit power of an uplink transmission layer corresponding to one PTRS port is 1/4 of total power of all uplink transmission layers, and this may be understood as that power of one PUSCH transmission layer is four times that of one PTRS port in linear domain.

Alternatively, the power factor may be in dB domain. For example, transmit power of an uplink transmission layer corresponding to one PTRS port is 1/4 of total power of all uplink transmission layers, and this may be understood as that power of one PUSCH transmission layer is 6 dB that of one PTRS port in dB domain.

An existing protocol specifies PUSCH-to-PTRS power factors per layer per RE in a case of 4T or less than 4T and four layers or fewer layers.

When Qp={ 1, 2} PTRS ports are scheduled for UE in an uplink, and a number of uplink scheduling layers/a number of PUSCH layers is $n_{layer}^{PUSCH}$:

(1) If a higher layer parameter ptrs-Power (carried in higher layer signaling: phase tracking reference signal-uplink configuration (PTRS-UplinkConfig)) is configured for the UE, the PUSCH-to-PTRS power factor $\rho_{PTRS}^{PUSCH}$ per layer per RE is obtained according to $\rho_{PTRS}^{PUSCH} = -\alpha_{PTRS}^{PUSCH}[dB]$, where $\alpha_{PTRS}^{PUSCH}$ is obtained according to the following Table 21. The higher layer parameter ptrs-Power determines which row in Table 21 is selected (corresponding to different power factor assumptions). A PTRS coefficient factor $\beta_{PTRS}$ is obtained jointly based on $\beta_{PTRS} = 10^{-\frac{\rho_{PTRS}^{PUSCH}}{20}}$ and a number-of-transmission-layers (precoding information and number of layers) indication field in DCI. The DCI indicates precoding information (precoding information) and the number $n_{layer}^{PUSCH}$ of PUSCH layers in Table 21.

(2) When there is no ptrs-Power field in a higher layer configuration PTRS-UplinkConfig, or the PUSCH is transmitted based on a non-codebook (non-codebook), the UE shall assume that ptrs-Power is set to a state '00'.

Table 21

| Uplink PTRS power/ $-\alpha_{PTRS}^{PUSCH}$ | Number $n_{layer}^{PUSCH}$ of PUSCH layers | | | | | | | |
|---|---|---|---|---|---|---|---|---|
| | 1 | 2 | | 3 | | 4 | | |
| | All cases | Full-coherent | Partial-coherent, non-coherent, and non-codebook based | Full-coherent | Partial-coherent, non-coherent, and non-codebook based | Full-coherent | Partial-coherent | Non-coherent and non-codebook based |
| 00 | 0 | 3 | $3Q_p$ - 3 | 4.77 | $3Q_p$ - 3 | 6 | $3Q_p$ | $3Q_p$ - 3 |
| 01 | 0 | 3 | 3 | 4.77 | 4.77 | 6 | 6 | 6 |
| 10 | Reserved | | | | | | | |
| 11 | Reserved | | | | | | | |

It may be understood that for specific descriptions of Table 21, refer to related descriptions of a UE PTRS transmission part in the technical specification (technical specification, TS) 38.214 6.2.3. Details are not described herein again. For a scenario in which there are a plurality of PTRS ports, the following Table 22 is used as an example. A vertical axis corresponds to a subcarrier identifier, a horizontal axis corresponds to a number of consecutive OFDM symbols for the PUSCH, and a blank location may be understood as that an uplink data signal is sent. It is assumed that precoding for PUSCH transmission is a precoding matrix corresponding to the TPMI index=0 in Table 9. In addition, it is assumed that DMRS port indications corresponding to four uplink transmission layers are {0, 1, 12, 13}, where 12 and 13 are DMRS ports newly added in the protocol. For a DMRS port indication method, refer to the related descriptions of the technical term part.

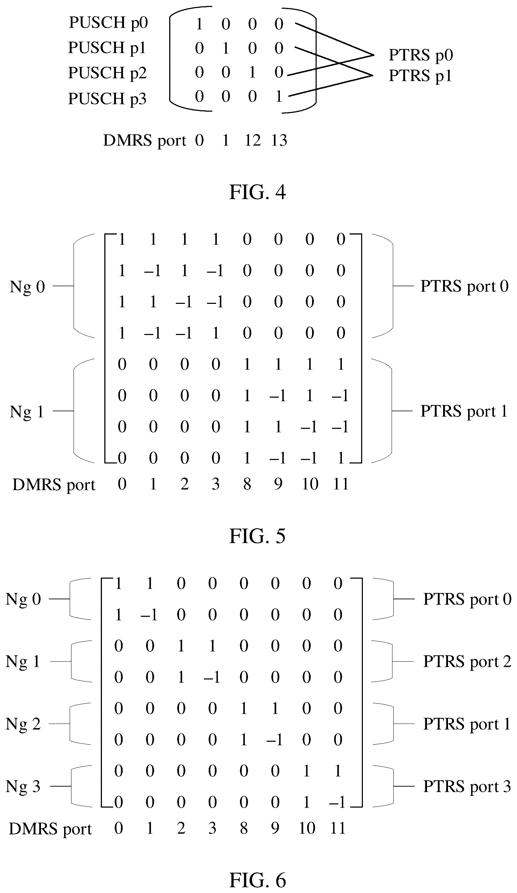

FIG. 4 is a diagram 1 of an example association between a PTRS port and a DMRS port according to an embodiment of this application. As shown in FIG. 4, PUSCH port 0 and PUSCH port 2 share PTRS port 0, and PUSCH port 1 and PUSCH port 3 share PTRS port 1. When ptrs-Power is set to the state '00', it is assumed that a value of a 2-bit indication that indicates a PTRS-DMRS association relationship is "01" (corresponding to the following Table 22). In this scenario, in Table 21, PTRS p0 corresponding to a first RE (subcarrier 6, symbol #3) sends a PTRS through PUSCH port 0, and precoding and a sequence of PTRS p0 are determined based on precoding and a sequence corresponding to DMRS port 0. In Table 22, PTRS p1 corresponding to a second RE (subcarrier #7, symbol #3) sends a PTRS through PUSCH port 3, and precoding and a sequence of PTRS p1 are determined based on precoding and a sequence corresponding to DMRS port 13. It may be understood that in this scenario, DMRS port 0 and DMRS port 12 share PTRS p0, and DMRS port 1 and DMRS port 13 share PTRS p1. A DMRS port associated with a PTRS is determined based on the indicated PTRS-DMRS association relationship, and a PTRS is sent based on a sequence and a time-frequency resource that correspond to the DMRS port and a TPMI corresponding to the DMRS port.

In this case, a plurality of PTRS ports are frequency division multiplexed on a same OFDM symbol (in Table 22, PTRS p0 and PTRS p1 are frequency division multiplexed on symbol 3#), and the PUSCH is not sent on the subcarriers occupied by the PTRS ports (in Table 22, the PUSCH is not sent on subcarrier #6 and subcarrier #7). As a result, a same PUSCH port such as PUSCH port 0 in this example neither sends data on the first RE nor sends data on the second RE. Therefore, transmit power of PUSCH port 0 on the second RE may be "borrowed" to increase power for sending on PTRS p0. This may also be understood as that a PUSCH-to-PTRS power factor per layer per RE is two times, corresponding to an increase of 3 dB (3*2-3) when a value of Qp is 2 in Table 22. Similarly, in this case, a power increase coefficient of PTRS port 1 is also 3 dB.

Table 22

| Subcarrier/Symbol | 2 | 3 | 4 | 5 | 6 | 7 | 8 | 9 | 10 |
|---|---|---|---|---|---|---|---|---|---|
| 0 | 0 1 12 13 | | | | | | | | |
| 1 | 0 1 12 13 | | | | | | | | |
| 2 | 2 3 14 15 | | | | | | | | |
| 3 | 2 3 14 15 | | | | | | | | |
| 4 | 4 5 16 17 | | | | | | | | |

(continued)

| Subcarrier/Symbol | 2 | 3 | 4 | 5 | 6 | 7 | 8 | 9 | 10 |
|---|---|---|---|---|---|---|---|---|---|
| 5 | 4 5 16 17 | | | | | | | | |
| 6 | 0 1 12 13 | PTRS 0 | -- | -- | -- | -- | -- | -- | -- |
| 7 | 0 1 12 13 | PTRS 1 | -- | -- | -- | -- | -- | -- | -- |
| 8 | 2 3 14 15 | | | | | | | | |
| 9 | 2 3 14 15 | | | | | | | | |
| 10 | 4 5 16 17 | | | | | | | | |
| 11 | 4 5 16 17 | | | | | | | | |
| 12 | 0 1 12 13 | | | | | | | | |
| 13 | 0 1 12 13 | | | | | | | | |
| 14 | 2 3 14 15 | | | | | | | | |
| 15 | 2 3 14 15 | | | | | | | | |
| 16 | 4 5 16 17 | | | | | | | | |
| 17 | 4 5 16 17 | | | | | | | | |
| 18 | 0 1 12 13 | | | | | | | | |
| 19 | 0 1 12 13 | | | | | | | | |
| 20 | 2 3 14 15 | | | | | | | | |
| 21 | 2 3 14 15 | | | | | | | | |
| 22 | 4 5 16 17 | | | | | | | | |
| 23 | 4 5 16 17 | | | | | | | | |
| 24 | 0 1 12 13 | | | | | | | | |
| 25 | 0 1 12 13 | | | | | | | | |
| 26 | 2 3 14 15 | | | | | | | | |
| 27 | 2 3 14 15 | | | | | | | | |
| 28 | 4 5 16 17 | | | | | | | | |
| 29 | 4 5 16 17 | | | | | | | | |
| 30 | 0 1 12 13 | PTRS 0 | -- | -- | -- | -- | -- | -- | -- |
| 31 | 0 1 12 13 | PTRS 1 | -- | -- | -- | -- | -- | -- | -- |
| 32 | 2 3 14 15 | | | | | | | | |
| 33 | 2 3 14 15 | | | | | | | | |
| 34 | 4 5 16 17 | | | | | | | | |
| 35 | 4 5 16 17 | | | | | | | | |

4. Association relationship between a PTRS port and a DMRS port for a maximum of 8T and eight streams in an uplink

With continuous evolution of a massive (massive) MIMO system, a number of transmit and receive antennas further increases (for example, a number of transmit antennas of a network device supports 128T or 256T, and a number of receive antennas of a terminal device supports 8R), so that a larger number of transport streams (for example, a maximum of eight uplink streams) can be further supported. In this case, more PTRS ports are required to support the larger number of transport streams, that is, more than two PTRS ports are required. The PTRS port is generally bound to an associated DMRS port to send a PTRS. Therefore, more DMRS ports are required to support the larger number of transport streams. The following describes in detail a method for determining an association relationship between a PTRS port and a DMRS port in a scenario of more than four PUSCH ports and more than four streams in an uplink.

1: The terminal device reports a maximum number of PTRS ports supported.

It is assumed that a number of PUSCH ports shared by one PTRS port is greater than or equal to a number of PUSCH ports corresponding to one stream. It may be understood that one data stream is sent on a maximum of four PUSCH ports when Ng=2. In this case, one PTRS port may correspond to at least four PUSCH ports, that is, a maximum number of PTRSs is less than or equal to 2. One data stream is sent on a maximum of two PUSCH ports when Ng=4. In this case, a maximum number of PTRS ports is less than or equal to 4. Therefore, a relationship between a number Ng of coherent antenna groups and a number of PTRS ports may be:

when Ng=1, the maximum number of PTRS ports is 1;
when Ng=2, the maximum number of PTRS ports is 2; and
when Ng=4, the maximum number of PTRS ports is 4.

In other words, one PTRS port may correspond to one or more Ng groups, and one Ng group may correspond to a plurality of PUSCH ports.
It may be understood that this step may alternatively be: The network device may send first information to the terminal device, to configure a PTRS port for the terminal device based on the first information. The first information may be radio resource control (radio resource control, RRC) signaling. In other words, the network device may configure a current number of PTRS ports for the terminal device by using higher layer signaling. This is not limited.

2: The network device sends the association relationship between the PTRS port and the DMRS port to the terminal device.

After obtaining the maximum number of PTRS ports supported by the terminal device or the configured number of PTRS ports, the network device may determine the association relationship between the PTRS port and the DMRS port based on the number of PTRS ports corresponding to the terminal device. The network device may notify the terminal device of the current number of PTRS ports and the PTRS-DMRS association relationship by using higher layer signaling. The PTRS-DMRS association relationship may include the following scenarios. Details are described below.

(1) Ng=1, and the number of PTRS ports is 1.

The association relationship (which may be referred to as an association relationship A below) between the PTRS port and the DMRS port (which may be represented as "DMRS port" in Table 23, where the DMRS port may be represented as "DMRS port" in all of the following tables) may be shown in Table 23. In other words, one PTRS port may have a maximum of eight candidate DMRS ports. To be specific, when Ng=1, and the number of PTRS ports is 1, one of the maximum of eight candidate DMRS ports may be indicated as a DMRS port index bound to the PTRS port.

Table 23

| Bit field value (Value) | DMRS port |
|---|---|
| 0 | 1st scheduled DMRS port (1st scheduled DMRS port) |
| 1 | 2nd scheduled DMRS port (2nd scheduled DMRS port) |
| 2 | 3rd scheduled DMRS port (3rd scheduled DMRS port) |
| 3 | 4th scheduled DMRS port (4th scheduled DMRS port) |
| 4 | 5th scheduled DMRS port (5th scheduled DMRS port) |
| 5 | 6th scheduled DMRS port (6th scheduled DMRS port) |
| 6 | 7th scheduled DMRS port (7th scheduled DMRS port) |
| 7 | 8th scheduled DMRS port (8th scheduled DMRS port) |

(2) Ng=2, and the number of PTRS ports is 2. When Ng=2, and the number of PTRS ports is 2, four PUSCH ports may share one PTRS port, and the association relationship (which may be referred to as an association relationship B below) between the PTRS port and the DMRS port may be shown in Table 24. In other words, one PTRS port may have a maximum of four candidate DMRS ports. To be specific, when Ng=2, and the number of PTRS ports is 2, one of the maximum of four candidate DMRS ports may be indicated as a DMRS port index bound to the PTRS port (that is, PTRS port 0 or PTRS port 1).

Table 24

| Value of an MSB (Value of MSB) | DMRS port | Value of an LSB (Value of LSB) | Value of an LSB (Value of LSB) |
|---|---|---|---|
| 0 | 1st DMRS port which shares PTRS port 0 (1st DMRS port which shares PTRS port 0) | 0 | 1st DMRS port which shares PTRS port 1 (1st DMRS port which shares PTRS port 1) |
| 1 | 2nd DMRS port which shares PTRS port 0 (2nd DMRS port which shares PTRS port 0) | 1 | 2nd DMRS port which shares PTRS port 1 (2nd DMRS port which shares PTRS port 1) |
| 2 | 3rd DMRS port which shares PTRS port 0 (3rd DMRS port which shares PTRS port 0) | 2 | 3rd DMRS port which shares PTRS port 1 (3rd DMRS port which shares PTRS port 1) |
| 3 | 4th DMRS port which shares PTRS port 0 (4th DMRS port which shares PTRS port 0) | 3 | 4th DMRS port which shares PTRS port 1 (4th DMRS port which shares PTRS port 1) |

Corresponding to the foregoing PTRS-DMRS association relationship, FIG. 5 is a diagram 2 of the association relationship between the PTRS port and the DMRS port according to an embodiment of this application. This diagram is described by using a codebook corresponding to Ng=2 as an example. It should be understood that one row of the codebook corresponds to one PUSCH port, and one column of the codebook corresponds to one uplink transport stream, which may alternatively be understood as one DMRS port. For ease of description, in FIG. 5, an example in which DMRS ports include DMRS port 0, DMRS port 1, DMRS port 2, DMRS port 3, DMRS port 8, DMRS port 9, DMRS port 10, and DMRS port 11 is used for description. To be specific, as shown in FIG. 5, DMRS port 0, DMRS port 1, DMRS port 2, and DMRS port 3 are DMRS ports indicated by the most significant bit, and DMRS port 8, DMRS port 9, DMRS port 10, and DMRS port 11 are DMRS ports indicated by the least significant bit.
As shown in FIG. 5, when an antenna port in Ng 0 includes PUSCH port 0, PUSCH port 1, PUSCH port 2, and PUSCH port 3, and an antenna port in Ng 1 includes PUSCH port 4, PUSCH port 5, PUSCH port 6, and PUSCH port 7, PTRS port 0 may be bound to Ng 0, that is, a candidate DMRS port corresponding to PTRS port 0 may include DMRS port 0, DMRS port 1, DMRS port 2, and DMRS port 3; and PTRS port 1 may be bound to Ng 1, that is, a candidate DMRS port corresponding to PTRS port 1 may include DMRS port 8, DMRS port 9, DMRS port 10, and DMRS port 11.
Therefore, when DCI indicates that a value of "Value of MSB" is 1, a candidate DMRS port index corresponding to PTRS port 0 is 2, that is, a DMRS port bound to PTRS port 0 is the second one of the DMRS ports indicated by the most significant bit, that is, the DMRS port bound to PTRS port 0 is the second one of {DMRS port 0, DMRS port 1, DMRS port 2, DMRS port 3}, that is, the DMRS port bound to PTRS port 0 is DMRS port 1. Similarly, when the DCI indicates that a value of "Value of LSB" is 2, a candidate DMRS port index corresponding to PTRS port 1 is 3, that is, a DMRS port bound to PTRS port 1 is the third one of the DMRS ports indicated by the least significant bit, that is, the DMRS port bound to PTRS port 1 is the third one of {DMRS port 8, DMRS port 9, DMRS port 10, DMRS port 11}, that is, the DMRS port bound to PTRS port 1 is DMRS port 10.
(3) Ng=4, and the number of PTRS ports is 4.
When Ng=4, and the number of PTRS ports is 4, two PUSCH ports may share one PTRS port, and the association relationship (which may be referred to as an association relationship C below) between the PTRS port and the DMRS port may be shown in Table 25. In other words, one PTRS port may have a maximum of two candidate DMRS ports. To be specific, when Ng=4, and the number of PTRS ports is 4, one of the maximum of two candidate DMRS ports may be indicated as a DMRS port index bound to the PTRS port (that is, PTRS port 0, PTRS port 1, PTRS port 2, or PTRS port 3).

Table 25

| Value of a 1st MSB (Value of 1st MSB) | DMRS port | | Value of a 1st LSB (Value of 1st LSB) | DMRS port |
|---|---|---|---|---|
| 0 | 1st DMRS port which shares PTRS port 0 (1st DMRS port which shares PTRS port 0) | | 0 | 1st DMRS port which shares PTRS port 1 (1st DMRS port which shares PTRS port 1) |
| 1 | 2nd DMRS port which shares PTRS port 0 (2nd DMRS port which shares PTRS port 0) | | 1 | 2nd DMRS port which shares PTRS port 1 (2nd DMRS port which shares PTRS port 1) |
| Value of a 2nd MSB (Value of 2nd MSB) | DMRS port | | Value of a 2nd LSB (Value of 2nd LSB) | DMRS port |
| 0 | 1st DMRS port which shares PTRS port 2 (1st DMRS port which shares PTRS port 2) | | 0 | 1st DMRS port which shares PTRS port 3 (1st DMRS port which shares PTRS port 3) |
| 1 | 2nd DMRS port which shares PTRS port 2 (2nd DMRS port which shares PTRS port 2) | | 1 | 2nd DMRS port which shares PTRS port 3 (2nd DMRS port which shares PTRS port 3) |

FIG. 6 is a diagram 3 of the association relationship between the PTRS port and the DMRS port according to an embodiment of this application. As shown in FIG. 6, this diagram is described by using a codebook corresponding to Ng=4 as an example. Similarly, for ease of description, in FIG. 6, an example in which DMRS ports include DMRS port 0, DMRS port 1, DMRS port 2, DMRS port 3, DMRS port 8, DMRS port 9, DMRS port 10, and DMRS port 11 is used for description. To be specific, as shown in FIG. 6, DMRS port 0 and DMRS port 1 are DMRS ports indicated by the 1st most significant bit, DMRS port 2 and DMRS port 3 are DMRS ports indicated by the 2nd most significant bit, DMRS port 8 and DMRS port 9 are DMRS ports indicated by the 1st least significant bit, and DMRS port 10 and DMRS port 11 are DMRS ports indicated by the 2nd least significant bit.

As shown in FIG. 6, when an antenna port in Ng 0 includes PUSCH port 0 and PUSCH port 1, an antenna port in Ng 1 includes PUSCH port 2 and PUSCH port 3, an antenna port in Ng 2 includes PUSCH port 4 and PUSCH port 5, and an antenna port in Ng 3 includes PUSCH port 6 and PUSCH port 7, PTRS port 0 may be bound to Ng 0, PTRS port 1 may be bound to Ng 1, PTRS port 2 may be bound to Ng 2, and PTRS port 3 may be bound to Ng 3. In other words, a candidate DMRS port corresponding to PTRS port 0 may include DMRS port 0 and DMRS port 1, a candidate DMRS port corresponding to PTRS port 2 may include DMRS port 2 and DMRS port 3, a candidate DMRS port corresponding to PTRS port 1 may include DMRS port 8 and DMRS port 9, and a candidate DMRS port corresponding to PTRS port 3 may include DMRS port 10 and DMRS port 11.

Therefore, when DCI indicates that a value of "Value of 1st MSB" is 0, a candidate DMRS port index corresponding to PTRS port 0 is 1, that is, a DMRS port bound to PTRS port 0 is the first one of the DMRS ports indicated by the 1st most significant bit, that is, the DMRS port bound to PTRS port 0 is the first one of {DMRS port 0, DMRS port 1}, that is, the DMRS port bound to PTRS port 0 is DMRS port 0. Similarly, when the DCI indicates that a value of "Value of 2nd LSB" is 1, a candidate DMRS port index corresponding to PTRS port 3 is 2, that is, a DMRS port bound to PTRS port 3 is the second one of the DMRS ports indicated by the 2nd least significant bit, that is, the DMRS port bound to PTRS port 3 is the second one of {DMRS port 10, DMRS port 11}, that is, the DMRS port bound to PTRS port 3 is DMRS port 11.

(4) Ng=4, and the number of PTRS ports is 2.

It should be understood that when Ng=4, there is a possibility that there are only two PTRS ports. In this case, a binding relationship between two Ng groups may be determined, or a binding relationship between a PUSCH port and a PTRS port may be directly determined, so that a maximum of four PUSCH ports can share one PTRS port. Therefore, when Ng=4, and the number of PTRS ports is 2, four PUSCH ports may share one PTRS port, and the association relationship (which may be referred to as an association relationship D below) between the PTRS port and the DMRS port may be shown in Table 26. In other words, one PTRS port may have a maximum of four candidate DMRS ports. To be specific, when Ng=4, and the number of PTRS ports is 2, one of the maximum of four candidate DMRS ports may be indicated as a DMRS port index bound to the PTRS port (that is, PTRS port 0 or PTRS port 1).

Table 26

| Value of an MSB (Value of MSB) | DMRS port | | Value of an LSB (Value of LSB) | DMRS port |
|---|---|---|---|---|
| 0 | 1st DMRS port which shares PTRS port 0 (1st DMRS port which shares PTRS port 0) | | 0 | 1st DMRS port which shares PTRS port 1 (1st DMRS port which shares PTRS port 1) |
| 1 | 2nd DMRS port which shares PTRS port 0 (2nd DMRS port which shares PTRS port 0) | | 1 | 2nd DMRS port which shares PTRS port 1 (2nd DMRS port which shares PTRS port 1) |
| 2 | 3rd DMRS port which shares PTRS port 0 (3rd DMRS port which shares PTRS port 0) | | 2 | 3rd DMRS port which shares PTRS port 1 (3rd DMRS port which shares PTRS port 1) |
| 3 | 4th DMRS port which shares PTRS port 0 (4th DMRS port which shares PTRS port 0) | | 3 | 4th DMRS port which shares PTRS port 1 (4th DMRS port which shares PTRS port 1) |

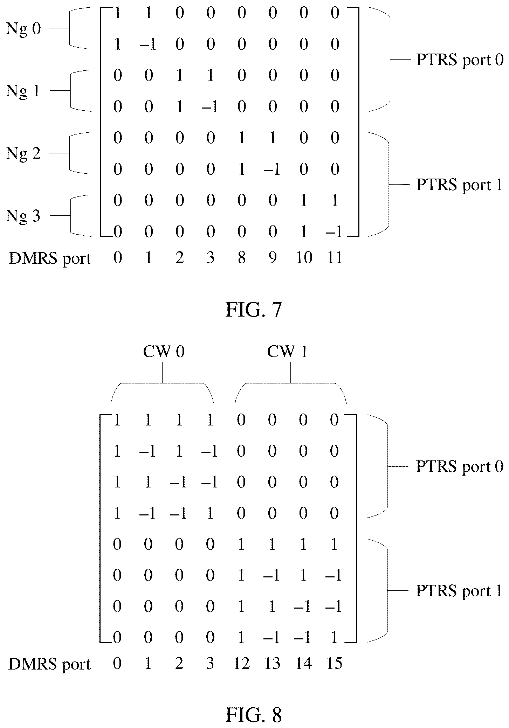

FIG. 7 is a diagram 4 of the association relationship between the PTRS port and the DMRS port according to an embodiment of this application. As shown in FIG. 7, this diagram is described by using a codebook corresponding to Ng=4 as an example. Similarly, for ease of description, in FIG. 7, an example in which DMRS ports include DMRS port 0, DMRS port 1, DMRS port 2, DMRS port 3, DMRS port 8, DMRS port 9, DMRS port 10, and DMRS port 11 is used for description. As shown in FIG. 7, DMRS port 0, DMRS port 1, DMRS port 2, and DMRS port 3 are DMRS ports indicated by the most significant bit, and DMRS port 8, DMRS port 9, DMRS port 10, and DMRS port 11 are DMRS ports indicated by the least significant bit.

As shown in FIG. 7, when Ng=4, and the number of PTRS ports is 2, if an antenna port in Ng 0 includes PUSCH port 0 and PUSCH port 1, an antenna port in Ng 1 includes PUSCH port 2 and PUSCH port 3, an antenna port in Ng 2 includes PUSCH port 4 and PUSCH port 5, and an antenna port in Ng 3 includes PUSCH port 6 and PUSCH port 7, PTRS port 0 may be bound to Ng 0 and Ng 1, and PTRS port 1 may be bound to Ng 2 and Ng 3. In other words, a candidate DMRS port corresponding to PTRS port 0 may include DMRS port 0, DMRS port 1, DMRS port 2, and DMRS port 3, and a candidate DMRS port corresponding to PTRS port 1 may include DMRS port 8, DMRS port 8, DMRS port 10, and DMRS port 11.

Therefore, when DCI indicates that a value of "Value of MSB" is 2, a candidate DMRS port index corresponding to PTRS port 0 is 3, that is, a DMRS port bound to PTRS port 0 is the third one of {DMRS port 0, DMRS port 1, DMRS port 2, DMRS port 3}, that is, the DMRS port bound to PTRS port 0 is DMRS port 2. Similarly, when the DCI indicates that a value of "Value of LSB" is 0, a candidate DMRS port index corresponding to PTRS port 1 is 1, that is, a DMRS port bound to PTRS port 1 is the first one of {DMRS port 8, DMRS port 9, DMRS port 10, DMRS port 11}, that is, the DMRS port bound to PTRS port 1 is DMRS port 8.

3: The terminal device determines, based on the received PTRS-DMRS association relationship indication, a candidate DMRS port index bound to the PTRS, and determines, based on the DMRS port index, a currently scheduled MCS, and a number of currently scheduled RBs, a time-frequency resource and a sequence for sending a PTRS.

It may be understood that when sending the association relationship between the PTRS port and the DMRS port to the terminal device, the network device may further send corresponding codeword information (for example, an MCS), a precoding matrix index (TPMI), number-of-transmission-layers indication information (number of layers), and DMRS port indication information to the terminal device. For example, the corresponding MCS, the TPMI, the number-of-transmission-layers indication information, and the DMRS port indication information may be sent to the terminal device by using the same DCI signaling.

The terminal device may determine, based on the TPMI, the number-of-transmission-layers indication information, and the association relationship between the PTRS port and the DMRS port, the DMRS port index corresponding to the PTRS port. Then, the terminal device may determine, based on the DMRS port index corresponding to the PTRS port and the DMRS port indication information, a DMRS port corresponding to the PTRS port, and may determine, based on the DMRS port corresponding to the PTRS port, the currently scheduled MCS, and the number of currently scheduled RBs, the time-frequency resource and the sequence corresponding to the PTRS, to map and send the PTRS based on the time-frequency resource and the sequence corresponding to the PTRS.

Specifically, the terminal device may determine, based on the foregoing time-frequency resource mapping manner of the PTRS, the time-frequency resource and the sequence corresponding to the PTRS, that is, may determine, based on $a_{k,l}^{(p,\mu)} = \beta_{PT-RS,i} r_k$ , the time-frequency resource and the sequence corresponding to the PTRS, to map and send the PTRS based on the determined time-frequency resource and the determined sequence corresponding to the PTRS. It should be noted that after DMRS port extension, a value of $k_{ref}^{RE}$ may be determined according to the following Table 27.

Table 27

| DMRS port p | $k_{ref}^{RE}$ | | | | | | | |
| --- | --- | --- | --- | --- | --- | --- | --- | --- |
| | Type 1 DMRS | | | | Type 2 DMRS | | | |
| | Resource element offset | | | | Resource element offset | | | |
| | offset00 | offset01 | offset10 | offset11 | offset00 | offset01 | offset10 | offset11 |
| 1000 | 0 | 2 | 6 | 8 | 0 | 1 | 6 | 7 |
| 1001 | 2 | 4 | 8 | 10 | 1 | 6 | 7 | 0 |
| 1002 | 1 | 3 | 7 | 9 | 2 | 3 | 8 | 9 |
| 1003 | 3 | 5 | 9 | 11 | 3 | 8 | 9 | 2 |
| 1004 | - | - | - | - | 4 | 5 | 10 | 11 |
| *1005* | - | - | - | - | 5 | 10 | 11 | 4 |
| 1008 | 6 | 8 | 0 | 2 | - | - | - | - |
| 1009 | 8 | 10 | 2 | 4 | - | - | - | - |
| 1010 | 7 | 9 | 1 | 3 | - | - | - | - |
| 1011 | 9 | 11 | 3 | 5 | - | - | - | - |
| 1012 | - | - | - | - | 6 | 7 | 0 | 1 |
| 1013 | - | - | - | - | 7 | 0 | 1 | 6 |
| 1014 | - | - | - | - | 8 | 9 | 2 | 3 |
| 1015 | - | - | - | - | 9 | 2 | 3 | 8 |
| 1016 | - | - | - | - | 10 | 11 | 4 | 5 |
| 1017 | - | - | - | - | 11 | 4 | 5 | 10 |

4: The terminal device maps and sends the PTRS based on the determined time-frequency resource and the determined sequence corresponding to the PTRS port.

It should be noted that for uplink transmission of more than four PUSCH ports and more than four transport streams, a case of two codewords (codeword, CW) may exist. When there are two CWs, the network device may determine, based on an MCS corresponding to each CW, a CW having a larger or stronger MCS, and determine an association relationship that is between a PTRS port and a DMRS port and that corresponds to the CW, to reduce a maximum number of candidate DMRS ports from 8 to 4. This can reduce indication overheads of the DCI.

When the MCSs corresponding to the two CWs are equal, the association relationship between the PTRS port and the DMRS port may be determined based on a default CW. The default CW is a codeword with a smallest sequence number. Because a DMRS port corresponding to the CW may be used as only a candidate DMRS port associated with one PTRS port, an associated DMRS port may not be accurately determined for at least one PTRS port by using an association relationship table. If the associated DMRS port cannot be accurately determined by using the association relationship table, a default DMRS port in a candidate DMRS port that can be associated with another PTRS port is bound to this PTRS port by using a default rule. For example, the default rule may be "a DMRS port with a smallest DMRS port number".

For example, FIG. 8 is a diagram 5 of the association relationship between the PTRS port and the DMRS port according to an embodiment of this application. As shown in FIG. 8, codebook A corresponding to eight-transmit eight-stream transmission includes CW 0 and CW 1, and CW 0 and CW 1 each correspond to only one PTRS port. For example, CW 0 corresponds to column 0 to column 3 of codebook A, CW 1 corresponds to column 4 to column 7 of codebook A, CW 0 corresponds to PTRS port 0, and CW 1 corresponds to PTRS port 1. In other words, PUSCH ports (that is, PUSCH port 0 to PUSCH port 3) for sending four layers of transport streams included in CW 0 correspond to PTRS port 0, and PUSCH ports (that is, PUSCH port 4 to PUSCH port 7) for sending four layers of transport streams included in CW 1 correspond to PTRS port 1. In this case, the association relationship between PTRS port 0 and the DMRS port may be determined according to the following Table 28.

Table 28

| Bit field value (Value) | DMRS port |
|---|---|
| 0 | 1st DMRS port which shares PTRS port 0 (1st DMRS port which shares PTRS port 0) |
| 1 | 2nd DMRS port which shares PTRS port 0 (2nd DMRS port which shares PTRS port 0) |
| 2 | 3rd DMRS port which shares PTRS port 0 (3rd DMRS port which shares PTRS port 0) |
| 3 | 4th DMRS port which shares PTRS port 0 (4th DMRS port which shares PTRS port 0) |

For a type 2 DMRS, if DMRS ports scheduled by using the DCI are {0, 1, 2, 3, 12, 13, 14, 15}, as shown in FIG. 8, a candidate DMRS port associated with PTRS port 0 may be {0, 1, 2, 3}. In this case, if the DCI indicates that a value of "Value" is 1, the DMRS port bound to PTRS port 0 may be the second one of the candidate DMRS ports {0, 1, 2, 3}, that is, PTRS port 0 is bound to DMRS port 1. A DMRS port bound to PTRS port 1 may be determined by using a default rule. For example, the default rule may be selecting a DMRS port with a smallest DMRS port number in a DMRS port that can be bound, that is, the DMRS port bound to PTRS port 1 may be a DMRS port with a smallest port number in DMRS ports {12, 13, 14, 15}, that is, PTRS port 1 may be bound to DMRS port 12.

In this case, if a resourceElementoffset field in a higher layer parameter is configured as 'offset01', the terminal device may determine, based on the binding relationship between PTRS port 0 and DMRS port 1, that a frequency domain resource position corresponding to PTRS port 0 is subcarrier #6. Similarly, the terminal device may determine, based on the binding relationship between PTRS port 1 and DMRS port 12, that a frequency domain resource position corresponding to PTRS port 1 is subcarrier #7.

It may be understood that as shown in FIG. 8, CW 0 may alternatively correspond to column 0, column 1, column 6, and column 7 of the codebook, and CW 1 corresponds to column 2, column 3, column 4, and column 5 of the codebook. Alternatively, CW 0 may correspond to column 0, column 1, column 2, and column 7 of the codebook, and CW 1 may correspond to column 3, column 4, column 5, column 6, and the like of the codebook. This is not limited.

However, when CW 0 and CW 1 correspond to different MCSs, that is, two PTRS ports correspond to two different MCSs, how to determine time domain densities corresponding to the two PTRS ports is a technical problem that needs to be urgently resolved.

In conclusion, for the foregoing technical problem, embodiments of this application provide the following technical solutions, to determine time domain densities corresponding to two PTRS ports when the two PTRS ports correspond to two MCSs.

The following describes the technical solutions in embodiments of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G such as a long term evolution (long term evolution, LTE) system, a worldwide interoperability for microwave access (worldwide interoperability for microwave access, WiMAX) communication system, 5G such as a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design solution described as an "example" in this application should not be explained as being more preferred or having more advantages than another embodiment or design solution. Exactly, the term "example" is used to represent a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship. It may be understood that in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to: a manner in which the to-be-indicated information, for example, the to-be-indicated information or an index of the to-be-indicated information, may be directly indicated; a manner in which the to-be-indicated information may be indirectly indicated by indicating other information, where there is an association relationship between the other information and the to-be-indicated information; and a manner in which only one part of the to-be-indicated information may be indicated, and the other part of the to-be-indicated information is known or pre-agreed upon. For example, specific information may be indicated by using an arrangement sequence of a plurality of pieces of information that is pre-agreed upon (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to the protocol, or may be configured by a transmit-end device by sending configuration information to a receive-end device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

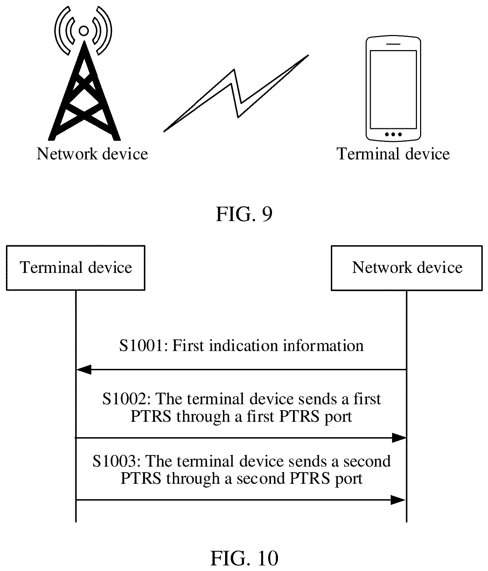

For ease of understanding embodiments of this application, a communication system shown in FIG. 9 is first used as an example to describe in detail a communication system applicable to embodiments of this application. For example, FIG. 9 is a diagram of an architecture of a communication system to which a communication method according to an embodiment of this application is applicable.

As shown in FIG. 9, the communication system mainly includes a network device and a terminal device.

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal device, a subscriber unit (subscriber unit), a subscriber station, a mobile station (mobile station, MS), a remote station, a remote terminal device, a mobile device, a user terminal device, a terminal device, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal device, a computer having a wireless transceiver function, a virtual reality (virtual reality, VR) terminal device, an augmented reality (augmented reality, AR) terminal device, a smart home device (for example, a refrigerator, a television, an air conditioner, or a meter), a smart robot, a robot arm, a workshop device, a wireless terminal device in self driving, a wireless terminal device in industrial control (industrial control), a wireless terminal device in self driving (self driving), a wireless terminal device in telemedicine (remote medical), a wireless terminal device in smart grid (smart grid), a wireless terminal device in transportation safety (transportation safety), a wireless terminal device in smart city (smart city), a wireless terminal device in smart home (smart home), a vehicle-mounted terminal device, a road side unit (road side unit, RSU) or the like having a terminal device function, a flight device (for example, a smart robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. Alternatively, the terminal device may be another device having a terminal device function. For example, the terminal device may alternatively be a device that functions as a terminal device in D2D communication.

A form of the terminal device is not limited in embodiments of this application. An apparatus configured to implement a function of the terminal device may be the terminal device, or may be an apparatus that can support the terminal device in implementing the function, for example, a chip system. The apparatus may be mounted in the terminal device or used in matching with the terminal device. In embodiments of this application, the chip system may include a chip, or may include a chip and another discrete component.

There may be a plurality of network devices, for example, a first network device, a second network device, and a third network device. The network device may be a device having a wireless transceiver function, or may be a chip or a chip system disposed in the device, and is located in an access network (access network, AN) of the communication system, to provide an access service for the terminal. For example, the network device may be referred to as a radio access network (radio access network, RAN) device, and may be specifically an access network device in a next-generation mobile communication system, for example, a 6G mobile communication system. For example, the network device may be a 6G base station. Alternatively, in the next-generation mobile communication system, the network device may be named in another manner, which falls within the protection scope of embodiments of this application. This is not limited in this application. Alternatively, the network device may include a gNB in 5G, for example, a new radio (new radio, NR) system, may include one antenna panel or a group of antenna panels (including a plurality of antenna panels) of a base station in 5G, or may be a network node that forms a gNB, a transmission point (a transmission and reception point, TRP, or a transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus configured to implement a function of the network device may be the network device, or may be an apparatus that can support the network device in implementing the function, for example, a chip system. The apparatus may be mounted in the network device or used in matching with the network device.

In the communication system, if two PTRS ports correspond to two MCSs, for example, a first MCS and a second MCS, a first time domain density corresponding to a first PTRS port may be determined based on the first MCS and/or the second MCS indicated by the network device, and a time domain density corresponding to a second PTRS port may also be determined based on the first MCS and/or the second MCS indicated by the network device. In this way, the terminal device can determine the first time domain density corresponding to the first PTRS port and a second time domain density corresponding to the second PTRS port, so that the terminal device subsequently sends a first PTRS on the first PTRS port, and sends a second PTRS on the second PTRS port. Therefore, communication reliability and communication efficiency can be improved.

It may be understood that FIG. 9 is a simplified diagram used as an example for ease of understanding. The communication system may further include another network device and/or another terminal apparatus that are/is not shown in FIG. 9.

For ease of understanding, the following describes in detail the communication method according to embodiments of this application with reference to FIG. 10 to FIG. 13. Embodiments of this application are applicable to a scenario in which a single terminal supports transmission of four and/or more than four layers. The following describes in detail the communication method provided in embodiments of this application by using this scenario.

For example, FIG. 10 is a schematic flowchart of a communication method according to an embodiment of this application. The method is applicable to communication between the terminal apparatus and the network device in the foregoing communication system.

Specifically, as shown in FIG. 10, a procedure of the communication method is as follows.

S1001: The network device sends first indication information. The terminal device receives the first indication information.

The first indication information may be DCI signaling. The DCI signaling may include transport block (transport block) indication information, PUSCH precoding and precoding information and number of layers information, SRS resource indicator (SRS resource indicator) information, antenna port (antenna port(s), DMRS port or port combination) indication information, a PTRS-DMRS association (PTRS-DMRS association), and the like.

The transport block indication information may include two pieces of codeword information: first codeword information and second codeword information. The first codeword information may include a first MCS, a new data indicator (new data indicator, NDI), and a redundancy version (redundancy version, RV) indication. The second codeword information may include a second MCS, an NDI, and an RV indication.

Values of the first MCS and the second MCS may be determined according to any one of the following Table 29 to Table 31. This is not limited.

Table 29

| MCS index $I_{MCS}$ | Modulation order $Q_m$ | Target code rate for reception [/1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |

(continued)

| MCS index $I_{MCS}$ | Modulation order $Q_m$ | Target code rate for reception [/1024] | Spectral efficiency |
|---|---|---|---|
| 31 | 6 | Reserved | |

Table 30

| MCS index $I_{MCS}$ | Modulation order $Q_m$ | Target code rate for reception [/1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved | |
| 29 | 4 | Reserved | |
| 30 | 6 | Reserved | |
| 31 | 8 | Reserved | |

Table 31

| MCS index $I_{MCS}$ | Modulation order $Q_m$ | Target code rate for reception [/1024] | Spectral efficiency |
|---|---|---|---|
| 0 | 2 | 30 | 0.0586 |

(continued)

| MCS index $I_{MCS}$ | Modulation order $Q_m$ | Target code rate for reception [/1024] | Spectral efficiency |
|---|---|---|---|
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

Parameters in Table 29 to Table 31 include the MCS index (MCS index, $I_{MCS}$), the modulation order (modulation order, Qm), the target code rate (target code rate), and the spectral efficiency (spectral efficiency). It may be understood that one $I_{MCS}$ corresponds to one group of Qm, target code rate, and spectral efficiency.

The first MCS is denoted as $I_{MCS1}$, and the second MCS is denoted as $I_{MCS2}$. The network device may indicate $I_{MCS1}$ and $I_{MCS2}$ by using the DCI signaling. For example, the network device may indicate, by using the DCI signaling, that $I_{MCS1}$ is 10 and $I_{MCS2}$ is 25.

It should be noted that the modulation order, the target code rate, and the spectral efficiency that are included in each $I_{MCS}$ corresponding to the MCS index shown in Table 29 to Table 31 are merely examples. A correspondence between an MCS index and an MCS is not specifically limited in embodiments of this application. For example, values of the MCS index from top to bottom in Table 29 to Table 31 may alternatively be in descending order. To be specific, an MCS index corresponding to an MCS in the 1st row is 31, an MCS index corresponding to an MCS in the 2nd row is 30, and by analogy, an MCS index corresponding to an MCS in the last row is 0. This is not limited in embodiments of this application.

It may be understood that according to the descriptions of the technical term part, it can be learned that a reason why the first indication information indicates the first MCS and the second MCS may be that two PTRS ports each correspond to one CW. For example, as shown in FIG. 8, PTRS port 0 corresponds to CW 0, and PTRS port 1 corresponds to CW 1. In this case, the network device needs to indicate, by using the first indication information, MCSs corresponding to the two CWs, for example, the first MCS and the second MCS. It should be noted that the first MCS and the second MCS may be carried in a same piece of first indication information, or may be separately carried in different first indication information. This is not limited. For example, the network device may indicate the first MCS and the second MCS by using one piece of first indication information. For another example, the network device may indicate the first MCS by using first indication information #1, and indicate the second MCS by using first indication information #2.

The NDI may indicate whether current scheduling is for new transmission or retransmission.

The RV indication may indicate a start location of each hybrid automatic repeat request (hybrid automatic repeat request, HARQ) sub-packet in a buffer. The PUSCH precoding may be a precoding matrix indicator TPMI. The TPMI may be used to determine a PUSCH transmission mode. The PUSCH transmission mode may include a full-coherent transmission mode, a partial-coherent transmission mode, a non-coherent transmission mode, a non-codebook based transmission mode, and the like. The TPMI corresponds to one precoding matrix. The precoding matrix may include X physical uplink shared channel PUSCH/sounding reference signal SRS ports and Y data layers. Each data layer corresponds to one DMRS port. In this embodiment of this application, X is greater than 4, and/or Y is greater than 4. The network device may send the TPMI to the terminal device by using the DCI signaling. The terminal device may determine the precoding matrix based on the TPMI. For example, the precoding matrix determined by the terminal device based on the TPMI is shown in FIG. 8. PTRS port 0 corresponds to the first four rows of the precoding matrix, and PTRS port 1 corresponds to the last four rows of the precoding matrix.

A number of transmission layers may also be referred to as a number of uplink transport streams or a number of spatial layers. It may be understood that one DMRS port corresponds to one transport stream, or one column of the precoding matrix corresponds to one uplink transmission layer. Therefore, the number-of-transmission-layers indication may indicate a number of transmission layers corresponding to the terminal device, or a number of DMRS ports corresponding to the terminal device. It may be understood that in this embodiment of this application, the number of transmission layers indicated by the number-of-transmission-layers information is greater than 4 and less than or equal to 8. In other words, the number of uplink transport streams of the terminal device may be 5, 6, 7, or 8. This is not limited in embodiments of this application. For ease of understanding, this embodiment of this application is described with the number of uplink transport streams of 8. Details are not described subsequently again.

The SRS resource indicator information indicates the PUSCH precoding and the number of transmission layers for non-codebook based transmission.

The following describes specific steps in which the terminal device sends a PTRS.

Step a: The terminal device may determine, based on the DMRS port indication information and the PTRS-DMRS association relationship, a DMRS port associated with each PTRS port.

For the DMRS port indication, refer to Table 7 to Table 14. Details are not described again. For the PTRS-DMRS association relationship, refer to Table 18 and Table 19.

It may be understood that Table 22 to Table 25 and PTRS-DMRS association determining procedures corresponding to Table 22 to Table 25 may also be used to determine the DMRS port associated with the PTRS port in this embodiment of this application. This is not limited. The foregoing antenna port combination indication is merely used as a possible example. There may be another antenna port combination. In each combination, a DMRS associated with a PTRS may be determined according to any one of the foregoing methods. This is not limited. For example, for a type 2 DMRS, if DMRS ports scheduled by using DCI are {0, 1, 2, 3, 12, 13, 14, 15}, for the type 2 DMRS, a candidate DMRS port associated with PTRS port 0 may be {0, 1, 2, 3}. In this case, if the DCI indicates that a value of "Value" is 1, a DMRS port bound to PTRS port 0 may be the fourth one of the candidate DMRS ports {0, 1, 2, 3}, that is, PTRS port 0 is bound to DMRS port 1. A DMRS port bound to PTRS port 1 may be determined by using a default rule. For example, the default rule may be selecting a DMRS port with a smallest DMRS port number in a DMRS port that can be bound, that is, the DMRS port bound to PTRS port 1 may be a DMRS port with a smallest port number in DMRS ports {12, 13, 14, 15}, that is, PTRS port 1 may be bound to DMRS port 12.

Step b: The terminal device may determine a time-frequency resource of the PTRS based on the DMRS port associated with each PTRS port, a time-frequency domain density of the PTRS, and time-frequency resource mapping of the PTRS.

Time domain resource mapping of the PTRS is similar to time domain resource mapping of a DMRS, and frequency domain resource mapping of the PTRS may be determined based on a correspondence between a PTRS port and a DMRS port. For example, as shown in Table 17, if a resourceElementoffset field in a higher layer parameter is configured as 'offset01', the terminal device may determine, based on a binding relationship between PTRS port 0 and DMRS port 3, that a frequency domain resource position corresponding to PTRS port 0 is subcarrier #6. Similarly, the terminal device may determine, based on a binding relationship between PTRS port 1 and DMRS port 12, that a frequency domain resource position corresponding to PTRS port 1 is subcarrier #7.

It may be understood that Table 17 is merely used as a possible example, and embodiments are not limited to a procedure corresponding to Table 17 described in this embodiment. For a time domain position *l* corresponding to the PTRS, refer to the related descriptions of step 1 to step 4 in "2. PTRS" of the technical term part. Details are not described again.

A time domain density of the PTRS may be determined based on a currently scheduled MCS (for example, the first MCS and the second MCS). For specific descriptions, refer to the related descriptions in the following steps S1002 and S1003.

A frequency domain density of the PTRS may be determined based on a number of currently scheduled RBs. A specific implementation process is similar to the determining process shown in Table 4, and may be understood with reference to the determining process shown in Table 4. Details are not described again.

Step c: The terminal device determines transmit power of the PTRS based on the TPMI, the number of transmission layers, a number of PTRS ports, and a ptrs-Power field.

For PUSCH transmission of a maximum of eight layers on 8T, a power coefficient of a PTRS port is determined according to Table 32. Details are described below.

Table 32

| Uplink PTRS power/$\alpha_{PTRS}^{PUSCH}$ | Number $n_{layer}^{PUSCH}$ of PUSCH layers | | |
|---|---|---|---|
| | 1 to 8 | | |
| | Full-coherent | Partial-coherent | Non-coherent and non-codebook based |
| 00 | $10log_{10}\left(n_{layer}^{PUSCH}\right)$ | TBD | $10log_{10}(Q_p)$ |
| 01 | $10log_{10}\left(n_{layer}^{PUSCH}\right)$ | $10log_{10}\left(n_{layer}^{PUSCH}\right)$ | $10log_{10}\left(n_{layer}^{PUSCH}\right)$ |
| 10 | Reserved | | |
| 11 | Reserved | | |

It can be learned from Table 32 that for full-coherent transmission, power of the PTRS port is the same as a criterion in 4T. For example, if the PUSCH transmission mode is full-coherent transmission, $P=1010log_{10}\left(n_{layer}^{PUSCH}\right)$, that is, a power coefficient of each PTRS port is related only to a total number of uplink transmission layers.

For partial-coherent transmission, if a value of ptrs-Power may be 00, the power coefficient of each PTRS port may be P1= *min{10log (L_x) + 10log (Q_p), 10 log(L)}* or P2= 10*log (L_x) + 10log (Q_p)* = 10 ∗ *log*10(L_x∗ Q_p), where $L_x$ is a number of PUSCH layers for coherent transmission at a PUSCH transmission layer associated with PTRS port x, and $Q_p$ is the number of PTRS ports. In this embodiment of this application, whether the terminal device uses P1 or P2 to calculate the power coefficient is not limited. If the value of ptrs-Power may be *01,* $P=1010log_{10}\left(n_{layer}^{PUSCH}\right)$, that is, the power coefficient of each PTRS port is related only to a total number of uplink transmission layers.

For non-coherent transmission and non-codebook based transmission, if the value of ptrs-Power may be 00, P=10$log_{10}$(Q_p), that is, the power coefficient of each PTRS port is related only to the number of PTRS ports; or if the value of ptrs-Power may be 01, $P=1010log_{10}\left(n_{layer}^{PUSCH}\right)$, that is, the power coefficient of each PTRS port is related only to the total number of uplink transmission layers.

The terminal device may determine the power coefficient $\alpha_{PTRS}^{PUSCH}$ of each PTRS port according to Table 32. Then, the terminal device may determine, based on a relationship between $\rho_{PTRS}^{PUSCH} = -\alpha_{PTRS}^{PUSCH}$ and $\beta_{PTRS} = 10^{-\frac{\rho_{PTRS}^{PUSCH}}{20}}$, $\beta_{PT\text{-}RS}$ corresponding to each PTRS port.

It may be understood that a sequence in which the terminal device determines the time-frequency resource of the PTRS and the transmit power of the PTRS is not limited in embodiments of this application.

Step d: The terminal device may send the PTRS based on the time-frequency resource and the power coefficient of the PTRS, and a predefined PTRS signal generation formula.

The terminal may send a corresponding PTRS on each PTRS port based on $a_{k,l}^{(p,\mu)} = \beta_{PT-RS,i} r_k$.

For a specific implementation process of this step, refer to the related descriptions of the following steps S1002 and S1003. Details are not described herein again.

It may be understood that a name of the first indication information is merely an example, and the first indication information may also be referred to as indication information #1, indication information #a, or the like. This is not limited.

S1002: The terminal device sends a first PTRS through a first PTRS port.

The first PTRS is a PTRS sent by the terminal device through the first PTRS port. A time domain density corresponding to the first PTRS is a first time domain density. The first time domain density is associated with the first MCS and/or the second MCS.

The first time domain density may indicate a density of existence of the first PTRS in time domain, that is, an OFDM symbol interval at which the first PTRS appears in one slot. The first time domain density is denoted as $L_{PT-RS}1$. It may be understood that a larger first time domain density indicates a smaller number of OFDM symbols occupied by the first PTRS in one slot, and a smaller first time domain density indicates a larger number of OFDM symbols occupied by the first PTRS in one slot. The OFDM symbol in the slot may be an OFDM symbol included in a PUSCH.

It may be understood that the terminal device does not need to distinguish between the correspondence between the first MCS and the two PTRS ports and the correspondence between the second MCS and the two PTRS ports. The terminal device may directly determine the first time domain density based on the first MCS. Alternatively, the terminal device may determine the first time domain density based on the second MCS. Alternatively, the terminal device may determine the first time domain density based on the first MCS and the second MCS. The following uses the following three cases as an example for specific description.

First, the network device sends second indication information. The terminal device receives the second indication information.

The second indication information may be higher layer signaling. The higher layer signaling may include PTRS time domain density information. The PTRS time domain density information may be used to obtain different MCS threshold intervals through division. The MCS threshold interval is used to determine the first time domain density and a second time domain density. The PTRS time domain density information may include at least one of the following: a first MCS threshold value, a second MCS threshold value, or a third MCS threshold value.

The first MCS threshold value may be ptrs-MCS1 in Table 15, the second MCS threshold value may be ptrs-MCS2 in Table 15, and the third MCS threshold value may be ptrs-MCS3 in Table 15.

It may be understood that a name of the second indication information is merely an example, and the second indication information may also be referred to as indication information #2, indication information #b, or the like. This is not limited.

Case 1: The terminal device may determine the first time domain density based on the first MCS and a plurality of MCS threshold values.

In other words, the first time domain density may be associated with the first MCS and the plurality of MCS threshold values.

That the first time domain density is associated with the first MCS and the plurality of MCS threshold values may satisfy any one of the following:

if the first MCS is less than the first MCS threshold value, the first PTRS is not present;
if the first MCS is greater than or equal to the first MCS threshold value and is less than the second MCS threshold value, the first time domain density is a first value;
if the first MCS is greater than or equal to the second MCS threshold value and is less than the third MCS threshold value, the first time domain density is a second value; and
if the first MCS is greater than or equal to the third MCS threshold value and is less than a fourth MCS threshold value, the first time domain density is a third value.

That the first PTRS is not present may alternatively be that the first PTRS port is not present. In other words, the terminal device does not use the first PTRS port to send the first PTRS. This is not limited.

The fourth MCS threshold value may be a preset value or a default value. The fourth MCS threshold value may be ptrs-MCS4 in Table 15. A value of ptrs-MCS4 may be determined by using the MCS index in Table 28 to Table 30. In Table 28 and Table 30, the value of ptrs-MCS4 may be 29. In Table 29, the value of ptrs-MCS4 may be 28. This is not limited.

According to ptrs-MCS1, ptrs-MCS2, ptrs-MCS3, ptrs-MCS4, and Table 15, it can be learned that the first value may be equal to 4, the second value may be equal to 2, and the third value may be equal to 2. It may be understood that the first value, the second value, and the third value may alternatively be any other possible value. This is not limited.

In other words, if $I_{MCS1}$ is less than ptrs-MCS1, the first PTRS is not present. If $I_{MCS1}$ is greater than or equal to ptrs-MCS1 and less than ptrs-MCS2, $L_{PT-RS}1$ is equal to 4. If $I_{MCS1}$ is greater than or equal to ptrs-MCS2 and less than ptrs-MCS3, $L_{PT-RS}1$ is equal to 2. If $I_{MCS1}$ is greater than or equal to ptrs-MCS3 and less than ptrs-MCS4, $L_{PT-RS}1$ is equal to 1.

Case 2: The terminal device may directly determine the first time domain density based on the second MCS and a plurality of MCS threshold values.

In other words, the first time domain density may be associated with the second MCS and the plurality of MCS threshold values.

That the first time domain density is associated with the second MCS and the plurality of MCS threshold values may satisfy any one of the following:

if the second MCS is less than the first MCS threshold value, the first PTRS is not present;
if the second MCS is greater than or equal to the first MCS threshold value and is less than the second MCS threshold value, the first time domain density is a first value;
if the second MCS is greater than or equal to the second MCS threshold value and is less than the third MCS threshold value, the first time domain density is a second value; and
if the second MCS is greater than or equal to the third MCS threshold value and is less than a fourth MCS threshold value, the first time domain density is a third value.

In other words, if $I_{MCS2}$ is less than ptrs-MCS1, the first PTRS is not present. If $I_{MCS2}$ is greater than or equal to ptrs-MCS1 and less than ptrs-MCS2, $L_{PT-RS}1$ is equal to 4. If $I_{MCS2}$ is greater than or equal to ptrs-MCS2 and less than ptrs-MCS3, $L_{PT-RS}1$ is equal to 2. If $I_{MCS2}$ is greater than or equal to ptrs-MCS3 and less than ptrs-MCS4, $L_{PT-RS}1$ is equal to 1.

Case 3: The terminal device may determine the first time domain density based on the first MCS, the second MCS, and a plurality of MCS threshold values.

Alternatively, the first time domain density may be associated with a fourth value and a plurality of MCS threshold values.

The fourth value may be associated with the first MCS and the second MCS. The fourth value may be at least one of the following: Mean(first MCS, second MCS) ; $\lfloor \text{Mean(first MCS, second MCS)} \rfloor$ ; or $\lceil \text{Mean(first MCS, second MCS)} \rceil$ .

In other words, if an average value of the first MCS and the second MCS is an integer, the fourth value may be Mean(first MCS, second MCS).

If the average value of the first MCS and the second MCS is not an integer, the fourth value may be [Mean(first MCS, second MCS)] or $\lceil \text{Mean(first MCS, second MCS)} \rceil$ . This is not limited.

For example, if $I_{MCS1}$ is equal to 20, and $I_{MCS2}$ is equal to 10, the fourth value=Mean(20, 10)-15; or if $I_{MCS1}$ is equal to 15, and $I_{MCS2}$ is equal to 16, the fourth value$= \lfloor \text{Mean(15, 16)} \rfloor = 15$ , or the fourth value$= \lceil \text{Mean(first MCS, second MCS)} \rceil = 16$ .

That the first time domain density is associated with the fourth value and the plurality of MCS threshold values may satisfy any one of the following:

if the fourth value is less than the first MCS threshold value, the first PTRS is not present;
if the fourth value is greater than or equal to the first MCS threshold value and is less than the second MCS threshold value, the first time domain density is a first value;
if the fourth value is greater than or equal to the second MCS threshold value and is less than the third MCS threshold value, the first time domain density is a second value; and
if the fourth value is greater than or equal to the third MCS threshold value and is less than a fourth MCS threshold value, the first time domain density is a third value.

The fourth value is denoted as $I_{MCS3}$. In this case, if $I_{MCS3}$ is less than ptrs-MCS1, the first PTRS is not present. If $I_{MCS3}$ is greater than or equal to ptrs-MCS1 and less than ptrs-MCS2, $L_{PT-RS}1$ is equal to 4. If $I_{MCS3}$ is greater than or equal to ptrs-MCS2 and less than ptrs-MCS3, $L_{PT-RS}1$ is equal to 2. If $I_{MCS3}$ is greater than or equal to ptrs-MCS3 and less than ptrs-MCS4, $L_{PT-RS}1$ is equal to 1.

The terminal device may send the first PTRS on the first PTRS port based on the determined $L_{PT-RS}1$. S1003: The terminal device sends a second PTRS through a second PTRS port.

The second PTRS is a PTRS sent by the terminal device through the first PTRS port. A time domain density corresponding to the second PTRS is the second time domain density. The second time domain density is associated with the first MCS and/or the second MCS.

The second time domain density may indicate a density of existence of the second PTRS in time domain, that is, an OFDM symbol interval at which the second PTRS appears in one slot. The second time domain density is denoted as

$L_{PT-RS}2$. It may be understood that a larger second time domain density indicates a smaller number of OFDM symbols occupied by the second PTRS in one slot, and a smaller second time domain density indicates a larger number of OFDM symbols occupied by the second PTRS in one slot.

Similar to step S1002, the terminal device does not need to distinguish between the correspondence between the first MCS and the two PTRS ports and the correspondence between the second MCS and the two PTRS ports. The terminal device may directly determine the second time domain density based on the first MCS. Alternatively, the terminal device may determine the second time domain density based on the second MCS. Alternatively, the terminal device may determine the second time domain density based on the first MCS and the second MCS. The following uses the following three cases as an example for specific description.

Case 4: The terminal device may determine the second time domain density based on the first MCS and the plurality of MCS threshold values.

In other words, the second time domain density may be associated with the first MCS and the plurality of MCS threshold values.

That the second time domain density is associated with the first MCS and the plurality of MCS threshold values may satisfy any one of the following:

if the first MCS is less than the first MCS threshold value, the second PTRS is not present;
if the first MCS is greater than or equal to the first MCS threshold value and is less than the second MCS threshold value, the second time domain density is the first value;
if the first MCS is greater than or equal to the second MCS threshold value and is less than the third MCS threshold value, the second time domain density is the second value; and
if the first MCS is greater than or equal to the third MCS threshold value and is less than the fourth MCS threshold value, the second time domain density is the third value.

That the second PTRS is not present may alternatively be that the second PTRS port is not present. In other words, the terminal device does not use the second PTRS port to send the second PTRS.

In other words, if $I_{MCS1}$ is less than ptrs-MCS1, the second PTRS is not present. If $I_{MCS1}$ is greater than or equal to ptrs-MCS1 and less than ptrs-MCS2, $L_{PT-RS}2$ is 4. If $I_{MCS1}$ is greater than or equal to ptrs-MCS2 and less than ptrs-MCS3, $L_{PT-RS}2$ is 2. If $I_{MCS1}$ is greater than or equal to ptrs-MCS3 and less than ptrs-MCS4, $L_{PT-RS}2$ is 1.

Case 5: The terminal device may directly determine the second time domain density based on the second MCS and the plurality of MCS threshold values.

In other words, the second time domain density may be associated with the second MCS and the plurality of MCS threshold values.

That the second time domain density is associated with the second MCS and the plurality of MCS threshold values may satisfy any one of the following:

if the second MCS is less than the first MCS threshold value, the second PTRS is not present;
if the second MCS is greater than or equal to the first MCS threshold value and is less than the second MCS threshold value, the second time domain density is the first value;
if the second MCS is greater than or equal to the second MCS threshold value and is less than the third MCS threshold value, the second time domain density is the second value; and
if the second MCS is greater than or equal to the third MCS threshold value and is less than the fourth MCS threshold value, the second time domain density is the third value.

In other words, if $I_{MCS2}$ is less than ptrs-MCS1, the second PTRS is not present. If $I_{MCS1}$ is greater than or equal to ptrs-MCS1 and less than ptrs-MCS2, $L_{PT-RS}2$ is equal to 4. If $I_{MCS1}$ is greater than or equal to ptrs-MCS2 and less than ptrs-MCS3, $L_{PT-RS}2$ is 2. If $I_{MCS1}$ is greater than or equal to ptrs-MCS3 and less than ptrs-MCS4, $L_{PT-RS}2$ is equal to 1.

Case 6: The terminal device may determine the second time domain density based on the first MCS, the second MCS, and the plurality of MCS threshold values.

Alternatively, the second time domain density may be associated with the fourth value and the plurality of MCS threshold values.

The fourth value may be associated with the first MCS and the second MCS. The fourth value may be at least one of the following: Mean(first MCS, second MCS) ; $\lceil \text{Mean(first MCS, second MCS)} \rceil$ ; or $\lfloor \text{Mean(first MCS, second MCS)} \rfloor$ .

In other words, if the average value of the first MCS and the second MCS is an integer, the fourth value may be Mean(first MCS, second MCS).

If the average value of the first MCS and the second MCS is not an integer, the fourth value may be

$[\text{Mean}(\text{first MCS}, \text{second MCS})]$ or $\lceil\text{Mean}(\text{first MCS}, \text{second MCS})\rceil$. This is not limited.

In other words, if $I_{MCS3}$ is less than ptrs-MCS1, the second PTRS is not present. If $I_{MCS3}$ is greater than or equal to ptrs-MCS1 and less than ptrs-MCS2, $L_{PT-RS}2$ is equal to 4. If $I_{MCS3}$ is greater than or equal to ptrs-MCS2 and less than ptrs-MCS3, $L_{PT-RS}2$ is 2. If $I_{MCS3}$ is greater than or equal to ptrs-MCS3 and less than ptrs-MCS4, $L_{PT-RS}2$ is equal to 1.

In this way, the terminal device may send the second PTRS on the second PTRS port based on the determined $L_{PT-RS}2$.

It should be noted that when sending the first PTRS by using $L_{PT-RS}1$, the terminal device needs to determine, according to steps 1 to 4 in "2. PTRS" of the technical term part, an OFDM symbol occupied by the first PTRS in one slot. Similarly, when sending the second PTRS by using $L_{PT-RS}2$, the terminal device needs to determine, according to steps 1 to 4 in "2. PTRS" of the technical term part, an OFDM symbol occupied by the second PTRS in the same slot. For a specific implementation process, refer to the descriptions of the technical term part. Details are not described herein again. The OFDM symbol occupied by the first PTRS in one slot and the OFDM symbol occupied by the second PTRS in the same slot may be OFDM symbols included in the PUSCH.

In conclusion, if two PTRS ports correspond to two MCSs, for example, the first MCS and the second MCS, the first time domain density corresponding to the first PTRS port may be determined based on the first MCS and/or the second MCS indicated by the network device, and the time domain density corresponding to the second PTRS port may also be determined based on the first MCS and/or the second MCS indicated by the network device. In this way, the terminal device can determine the first time domain density corresponding to the first PTRS port and the second time domain density corresponding to the second PTRS port, so that the terminal device subsequently sends the first PTRS on the first PTRS port, and sends the second PTRS on the second PTRS port. Therefore, communication reliability and communication efficiency can be improved.

It may be understood that if the first MCS is equal to the second MCS, the first time domain density and the second time domain density determined by the terminal device by using any one of the methods in Case 1 to Case 6 are equal. In other words, in a same slot, OFDM symbols occupied by the first PTRS and the second PTRS are the same, or OFDM symbols occupied by the first PTRS port and the second PTRS port are the same.

However, if the first MCS is not equal to the second MCS, the first MCS and the second MCS may fall in different threshold intervals in Table 15, and time domain densities corresponding to the two PTRS ports are different. Consequently, power coefficients of a part of PTRS ports on different OFDM symbols are different. As a result, power coefficients of PTRSs sent by this part of PTRS ports on a part of OFDM symbols exceed maximum power coefficients that can be supported by the OFDM.

For example, as shown in FIG. 8, PTRS port 0 is bound to DMRS port 1, and PTRS port 1 is bound to DMRS port 12. In this case, if the resourceElementoffset field in the higher layer parameter is configured as 'offset01', the terminal device may determine, based on the binding relationship between PTRS port 0 and DMRS port 1, that a frequency domain resource position corresponding to PTRS 0 is subcarrier #6. Similarly, the terminal device may determine, based on the binding relationship between PTRS port 1 and DMRS port 12, that a frequency domain resource position corresponding to PTRS 1 is subcarrier #7.

It is assumed that an MCS corresponding to CW 0 is $I_{MCS01}$, and an MCS corresponding to CW 1 is $I_{MCS02}$. If $I_{MCS01}$ and $I_{MCS02}$ fall in different intervals in Table 15, for example, ptrs-MCS2$\leq I_{MCS01}$<ptrs-MCS3, and ptrs-MCS3$\leq I_{MCS02}$<ptrs-MCS4, a time domain density L0 of PTRS 0 is 2, and a time domain density L1 of PTRS 1 is 1.

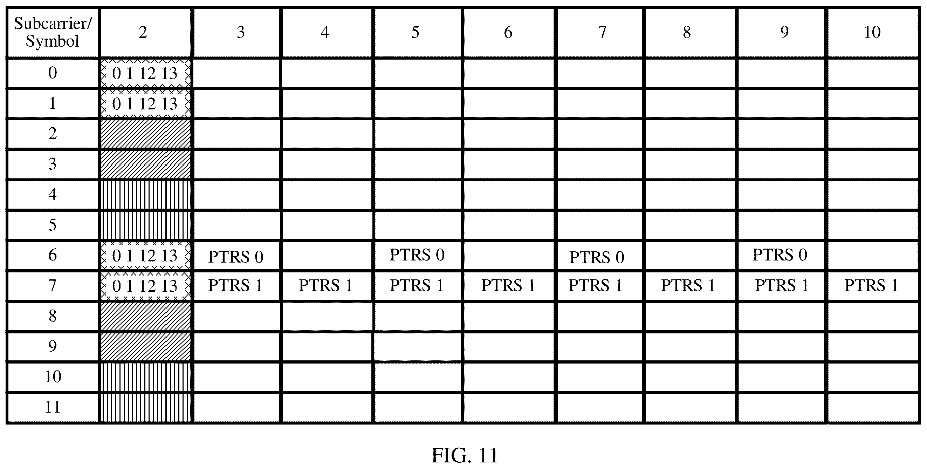

The terminal device may send PTRS 0 on PTRS port 0 based on the TPMI shown in FIG. 8, the frequency domain resource position corresponding to PTRS port 0, and L0, and send PTRS 1 on PTRS port 1 based on the TPMI shown in FIG. 8, the frequency domain resource position corresponding to PTRS port 1, and L1. As shown in FIG. 11, a vertical axis is a subcarrier index, and a horizontal axis is an OFDM symbol index. Time-frequency resources occupied by PTRS 0 are (symbol #3, subcarrier #6), (symbol #5, subcarrier #6), (symbol #7, subcarrier #6), and (symbol #9, subcarrier #6). Time-frequency resources occupied by PTRS 1 are (symbol #3, subcarrier #7), (symbol #4, subcarrier #7), (symbol #5, subcarrier #7), (symbol #6, subcarrier #7), (symbol #7, subcarrier #7), (symbol #8, subcarrier #7), (symbol #9, subcarrier #7), and (symbol #10, subcarrier #7).

It may be understood that as shown in FIG. 11, the terminal device may send the DMRS on symbol #2, and blank locations on symbol # to symbol #10 may be understood as sending PUSCH data.

It can be learned from the related descriptions of the technical term part that a power coefficient of a PTRS port depends on a number of subcarriers occupied by a PTRS and data on each OFDM symbol. As shown in FIG. 11, PTRS 0 and PTRS 1 occupy different numbers of subcarriers on different OFDM symbols. Due to different numbers of subcarriers, power coefficients corresponding to a same PTRS port (for example, PTRS 1) on different symbols may be different.

Power coefficients corresponding to PTRS port 0 and PTRS port 1 may be determined according to Table 32. For example, for symbol #3, both PTRS 0 and PTRS 1 occupy a time-frequency resource of symbol #3. In other words, PTRS port 0 sends PTRS 0 on symbol #3, and PTRS port 1 sends PTRS 1 on symbol #3. In this case, a power coefficient corresponding to PTRS port 0 is 9 dB, and a power coefficient corresponding to PTRS port 1 is 9 dB. For symbol #4, PTRS 0 occupies a time-frequency resource of symbol #4, and PTRS 1 does not occupy the time-frequency resource of symbol #4. In other words, PTRS 0 is not present, or in other words, PTRS port 0 is not present, and PTRS port 1 sends PTRS 1 on symbol #4. In this case, an actual power coefficient of PTRS port 1 is 6 dB. In this case, a maximum power coefficient that can be actually supported on symbol #4 is 6 dB. If the terminal device sends PTRS 1 on symbol #4 based on 9 dB defined in Table 8, the maximum power coefficient of 6 dB that can be supported on symbol #4 does not comply with the PTRS power coefficient of 9 dB notified in Table 32. Consequently, the power coefficient of PTRS 1 sent by PTRS port 1 on symbol #4 exceeds the maximum power coefficient that can be supported on symbol #4, causing power exceeding a limit. As a result, the communication reliability and the communication efficiency are low.

In other words, when the time domain densities corresponding to the two PTRS ports are different, power coefficients of a part of PTRS ports on different OFDM symbols are different, further resulting in a problem that power coefficients of PTRSs sent by this part of PTRS ports on a part of OFDM symbols exceed maximum power coefficients that can be supported by the OFDM.

Therefore, this embodiment of this application provides the following solution, to avoid the problem that the power exceeds the limit when the time domain densities corresponding to the two PTRS ports are different. The following uses the following cases as an example for specific description.

Case a: The first MCS is greater than the second MCS. The first time domain density is associated with the first MCS and a plurality of MCS threshold values, and the second time domain density is associated with the first MCS and the plurality of MCS threshold values.

In this case, both the first time domain density and the second time domain density may be determined by using the larger first MCS of the two MCSs, that is, Case 1 and Case 4. In this case, a value of the first time domain density is equal to a value of the second time domain density, and power coefficients of the first PTRS port and the second PTRS port on an OFDM symbol are the same. This can avoid the problem that the power exceeds the limit because power coefficients of a part of PTRS ports on different OFDM symbols are different.

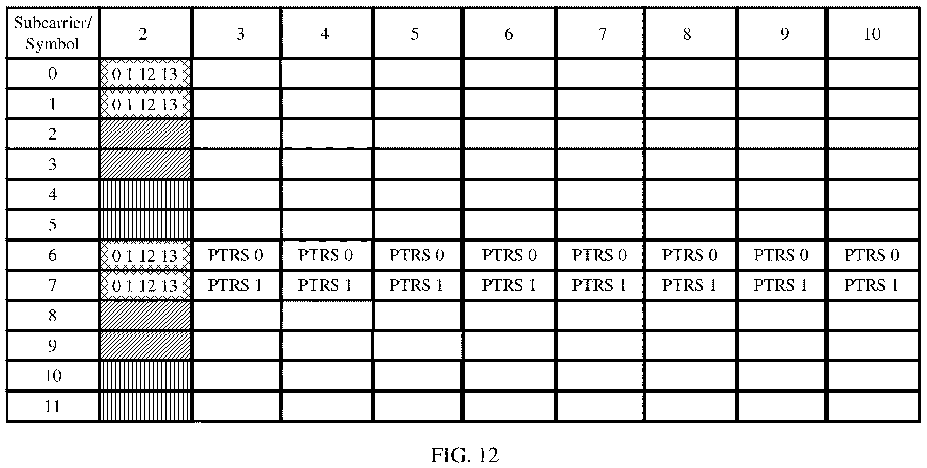

For example, in FIG. 11, $I_{MCS01} < I_{MCS02}$. In this case, the terminal device may use a time domain density corresponding to $I_{MCS02}$ as time domain densities of PTRS 0 and PTRS 1, that is, the time domain densities of PTRS 0 and PTRS 1 are both L1. In this case, a time-frequency resource occupied by PTRS 0 and a time-frequency resource occupied by PTRS 1 may be shown in FIG. 12. The time-frequency resource occupied by PTRS 0 may be (symbol #3, subcarrier #6), (symbol #4, subcarrier #6), (symbol #5, subcarrier #6), (symbol #5, subcarrier #6), (symbol #7, subcarrier #6), (symbol #8, subcarrier #6), (symbol #9, subcarrier #6), and (symbol #10, subcarrier #6). The time-frequency resource occupied by PTRS 1 may be (symbol #3, subcarrier #7), (symbol #4, subcarrier #7), (symbol #5, subcarrier #7), (symbol #6, subcarrier #7), (symbol #7, subcarrier #7), (symbol #8, subcarrier #7), (symbol #9, subcarrier #7), and (symbol #10, subcarrier #7).

In this case, power coefficients corresponding to PTRS port 0 and PTRS port 1 on symbol #3 to symbol #10 are both 9 dB.

Case b: The first MCS is greater than the second MCS. The first time domain density is associated with a fourth value and a plurality of MCS threshold values, and the second time domain density is associated with the first MCS and the plurality of MCS threshold values.

In this case, both the first time domain density and the second time domain density may be determined by using an average value or a rounding value of an average value of the two MCSs, that is, Case 3 and Case 6. In this case, a value of the first time domain density is equal to a value of the second time domain density, and power coefficients of the first PTRS port and the second PTRS port on an OFDM symbol are the same. This can avoid the problem that the power exceeds the limit because power coefficients of a part of PTRS ports on different OFDM symbols are different.

Case c: The first MCS is less than the second MCS. The first time domain density is associated with the first MCS and a plurality of MCS threshold values, and the second time domain density is associated with the first MCS and the plurality of MCS threshold values.

In this case, both the first time domain density and the second time domain density are determined by using the smaller first MCS of the two MCSs, that is, Case 1 and Case 4. In this case, a value of the first time domain density is equal to a value of the second time domain density, and power coefficients of the first PTRS port and the second PTRS port on an OFDM symbol are the same. This can avoid the problem that the power exceeds the limit because power coefficients of a part of PTRS ports on different OFDM symbols are different.

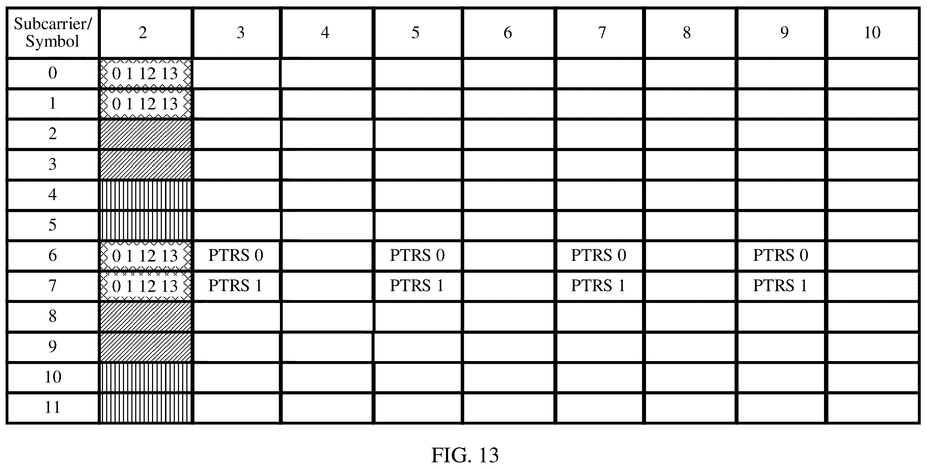

For example, in FIG. 11, $I_{MCS01} < I_{MCS02}$. In this case, the terminal device may use a time domain density corresponding to $I_{MCS01}$ as time domain densities of PTRS 0 and PTRS 1, that is, the time domain resources of PTRS 0 and PTRS 1 are both L0. In this case, a time-frequency resource occupied by PTRS 0 and a time-frequency resource occupied by PTRS 1 may be shown in FIG. 13. The time-frequency resource occupied by PTRS 0 is (symbol #3, subcarrier #6), (symbol #5, subcarrier #6), (symbol #7, subcarrier #6), and (symbol #9, subcarrier #6). The time-frequency resource occupied by PTRS 1 is (symbol #3, subcarrier #7), (symbol #5, subcarrier #7), (symbol #7, subcarrier #7), and (symbol #9, subcarrier #7).

In this case, power coefficients corresponding to PTRS port 0 and PTRS port 1 on symbol #3, symbol #5, symbol #7, and symbol #9 are all 9 dB, and no PTRS is sent on symbol #4, symbol #6, symbol #8, and symbol #10.

Case d: The first MCS is less than the second MCS. The first time domain density is associated with a fourth value and a plurality of MCS threshold values, and the second time domain density is associated with the first MCS and the plurality of MCS threshold values.

In this case, both the first time domain density and the second time domain density may be determined by using an average value or a rounding value of an average value of the two MCSs, that is, Case 3 and Case 6. In this case, a value of the first time domain density is equal to a value of the second time domain density, and power coefficients of the first PTRS port and the second PTRS port on an OFDM symbol are the same. This can avoid the problem that the power exceeds the limit because power coefficients of a part of PTRS ports on different OFDM symbols are different.

It may be understood that in Cases a to d, the terminal device uses a same MCS, for example, the first MCS or the second MCS, or the fourth value, to determine the first time domain density and the second time domain density, so that time domain resources occupied by the first PTRS port and the second PTRS port can be aligned, avoiding a case in which the power exceeds the limit.

Case e: When the first MCS and the second MCS are not equal, and fall in different threshold value intervals shown in Table 15, for example, the first MCS falls in a first threshold value interval, and the second MCS falls in a second threshold value interval, the first time domain density and the second time domain density may be determined based on a time domain density corresponding to the first MCS threshold value interval.

For example, in FIG. 8, ptrs-MCS2$\leq I_{MCS01}$<ptrs-MCS3, and ptrs-MCS3$\leq I_{MCS02}$<ptrs-MCS4. In this case, the terminal device may determine time domain densities of PTRS 0 and PTRS 1 based on a threshold value interval in which $I_{MCS01}$ is located, that is, the time domain resources of PTRS 0 and PTRS 1 are both L0. In this case, a time-frequency resource occupied by PTRS 0 and a time-frequency resource occupied by PTRS 1 may be shown in FIG. 13. In this case, power coefficients corresponding to PTRS port 0 and PTRS port 1 on symbol #3, symbol #5, symbol #7, and symbol #9 are all 9 dB, and no PTRS is sent on symbol #4, symbol #6, symbol #8, and symbol #10. In this case, power coefficients corresponding to PTRS port 0 and PTRS port 1 on symbol #3, symbol #5, symbol #7, and symbol #9 are all 9 dB, and no PTRS is sent on symbol #4, symbol #6, symbol #8, and symbol #10.

Case f: When the first MCS and the second MCS are not equal, and fall in different threshold value intervals shown in Table 15, for example, the first MCS falls in a first threshold value interval, and the second MCS falls in a second threshold value interval, the first time domain density and the second time domain density may be determined based on a time domain density corresponding to the second MCS threshold value interval.

For example, in FIG. 8, ptrs-MCS2$\leq I_{MCS01}$<ptrs-MCS3, and ptrs-MCS3$\leq I_{MCS02}$<ptrs-MCS4. In this case, the terminal device may determine time domain densities of PTRS 0 and PTRS 1 based on a threshold value interval in which $I_{MCS02}$ is located, that is, the time domain resources of PTRS 0 and PTRS 1 are both L1. In this case, a time-frequency resource occupied by PTRS 0 and a time-frequency resource occupied by PTRS 1 may be shown in FIG. 12. In this case, power coefficients corresponding to PTRS port 0 and PTRS port 1 on symbol #3 to symbol #10 are all 9 dB.

It may be understood that in Cases e to f, the terminal device uses a same threshold value interval to determine the first time domain density and the second time domain density. The threshold value interval may be a threshold value interval in which the first MCS is located or a threshold value interval in which the second MCS is located. Therefore, time domain resources occupied by the first PTRS port and the second PTRS port can be aligned, to avoid a case in which the power exceeds the limit and improve the communication reliability and the communication efficiency.

Case j: A fifth value is greater than a sixth value. Values of the first time domain density and the second time domain density are both equal to the fifth value.

The first PTRS port corresponds to the first MCS, and the second PTRS port corresponds to the second MCS. For example, as shown in FIG. 8, an MCS corresponding to CW 0 is $I_{MCS01}$, an MCS corresponding to CW 1 is $I_{MCS02}$, CW 0 corresponds to PTRS port 0, and CW 1 corresponds to PTRS port 1. Therefore, PTRS port 0 corresponds to $I_{MCS01}$, and PTRS port 1 corresponds to $I_{MCS02}$.

The fifth value may be associated with the first MCS and a plurality of MCS threshold values. That the fifth value is associated with the first MCS and the plurality of MCS threshold values satisfies any one of the following:

if the first MCS is less than the first MCS threshold value, the first PTRS is not present;
if the first MCS is greater than or equal to the first MCS threshold value and is less than the second MCS threshold value, the fifth value is a first value;
if the first MCS is greater than or equal to the second MCS threshold value and is less than the third MCS threshold value, the fifth value is a second value; and
if the first MCS is greater than or equal to the third MCS threshold and is less than a fourth MCS threshold, the fifth value is a third value.

In other words, the fifth value is a time domain density value determined by the terminal device based on a threshold value interval in which the first MCS is located.

That the sixth value is associated with the second MCS and the plurality of MCS threshold values may satisfy any one of the following:

if the second MCS is less than the first MCS threshold value, the second PTRS is not present;
if the second MCS is greater than or equal to the first MCS threshold value and is less than the second MCS threshold value, the sixth value is the first value;
if the second MCS is greater than or equal to the second MCS threshold value and is less than the third MCS threshold value, the fifth value is the second value; and
if the second MCS is greater than or equal to the third MCS threshold and is less than the fourth MCS threshold, the sixth value is the third value.

In other words, the fifth value is a time domain density value determined by the terminal device based on a threshold value interval in which the second MCS is located.

If the fifth value is greater than the sixth value, the terminal device may use the larger fifth value of the fifth value and the sixth value as the values of the first time domain density and the second time domain density. For example, in FIG. 8, L1=1<L0=2. In this case, time domain resources of PTRS 0 and PTRS 1 are both L0. In this case, a time-frequency resource occupied by PTRS 0 and a time-frequency resource occupied by PTRS 1 may be shown in FIG. 13. In this case, power coefficients corresponding to PTRS port 0 and PTRS port 1 on symbol #3, symbol #5, symbol #7, and symbol #9 are all 9 dB, and no PTRS is sent on symbol #4, symbol #6, symbol #8, and symbol #10.

Case h: A fifth value is greater than a sixth value. A value of the first time domain density and a value of the second time domain density are equal to a seventh value, where the seventh value is associated with the fifth value and the sixth value.

The seventh value may be at least one of the following: Mean(fifth value, sixth value) ; $\lfloor \text{Mean(fifth value, sixth value)} \rfloor$ ; or $\lceil \text{Mean(fifth value, sixth value)} \rceil$ .

For example, if the fifth value is 4, and the sixth value is 2, the seventh value=[Mean(4, 2)]=4, or the seventh value=$\lfloor \text{Mean}(4, 2) \rfloor$=2 . This is not limited.

If the fifth value is greater than the sixth value, the terminal device may use the seventh value associated with the fifth value and the sixth value as the values of the first time domain density and the second time domain density. In this case, the value of the first time domain density is equal to the value of the second time domain density, and power coefficients of the first PTRS port and the second PTRS port on an OFDM symbol are the same. This can avoid the problem that the power exceeds the limit because power coefficients of a part of PTRS ports on different OFDM symbols are different, improving the communication reliability and the communication efficiency.

Case i: A fifth value is less than a sixth value. Values of the first time domain density and the second time domain density are both equal to the fifth value.

If the fifth value is less than the sixth value, the terminal device may use the smaller fifth value of the fifth value and the sixth value as the values of the first time domain density and the second time domain density. For example, in FIG. 8, L1=1<L0=2. In this case, time domain resources of PTRS 0 and PTRS 1 are both L1. In this case, a time-frequency resource occupied by PTRS 0 and a time-frequency resource occupied by PTRS 1 may be shown in FIG. 12. In this case, power coefficients corresponding to PTRS port 0 and PTRS port 1 on symbol #3 to symbol #10 are all 9 dB.

Case g: A fifth value is less than a sixth value. A value of the first time domain density and a value of the second time domain density are equal to a seventh value.

In other words, when the fifth value is less than the sixth value, the terminal device may use the seventh value associated with the fifth value and the sixth value as the values of the first time domain density and the second time domain density. In this case, the value of the first time domain density is equal to the value of the second time domain density, and power coefficients of the first PTRS port and the second PTRS port on an OFDM symbol are the same. This can avoid the problem that the power exceeds the limit because power coefficients of a part of PTRS ports on different OFDM symbols are different.

It may be understood that in Cases j to g, the terminal device uses a same time domain density value, for example, the fifth value, the sixth value, or the seventh value, as the first time domain density and the second time domain density, so that time domain resources occupied by the first PTRS port and the second PTRS port can be aligned, to avoid a case in which power of the first PTRS port or the second PTRS port exceeds the limit on a part of OFDM symbols, improving the communication reliability and the communication efficiency.

In a possible design solution, a first power coefficient is associated with at least one of the following: PUSCH precoding, number-of-transmission-layers information, PTRS power information, or a value of a first number of scheduled PTRS ports, where the first power coefficient is a power coefficient corresponding to the first PTRS.

A second power coefficient is associated with at least one of the following: the PUSCH precoding, the number-of-transmission-layers information, the PTRS power information, or a value of a second number of scheduled PTRS ports, where the second power coefficient is a power coefficient corresponding to the second PTRS.

The first power coefficient may be the power coefficient corresponding to the first PTRS, and the second power coefficient may be the power coefficient corresponding to the second PTRS. The PUSCH precoding may be used to determine the PUSCH transmission mode. The PUSCH transmission mode may include the full-coherent transmission mode, the partial-coherent transmission mode, the non-coherent transmission mode, the non-codebook based transmission mode, and the like.

The number-of-transmission-layers information may be the number $n_{layer}^{PUSCH}$ of uplink transmission layers corresponding to the terminal device. In this embodiment of this application, a value of $n_{layer}^{PUSCH}$ may be 1 to 8.

The PTRS power information may be a ptrs-Power field. A value of ptrs-Power may be 00, 01, 10, or 11. Different values correspond to different power factor assumptions.

The first number of scheduled PTRS ports and the second number of scheduled PTRS ports={ 1, 2} PTRS ports.

The terminal device may determine the first power coefficient and the second power coefficient by using Table 32 based on the PUSCH precoding, the number-of-transmission-layers information, the PTRS power information, or the number of PTRS ports.

In a possible design solution, when the first time domain density is less than the second time domain density, the value of the first number of scheduled PTRS ports is 1, and the value of the second number of scheduled PTRS ports is 2.

It may be understood that as shown in FIG. 11, when a PTRS port with a small time domain density exceeds a power limit on a part of OFDM symbols, the terminal device calculates the first power coefficient by using the number Qp of ports of 1. In other words, the terminal device uses a minimum value of power coefficients corresponding to a plurality of OFDM symbols occupied by the first PTRS port as the power coefficient of the first PTRS port, and uses the minimum value as the first power coefficient to send the first PTRS. For example, as shown in FIG. 11, the terminal device may send PTRS 1 by using a power coefficient corresponding to symbol #3, that is, the terminal device may send PTRS 1 by using 6 dB on symbol #3 to symbol 10.

A power coefficient of a PTRS port with a large time domain density is not affected. Therefore, the terminal device still calculates the second power coefficient by using the number Qp of ports of 2.

It may be understood that when the terminal device uses the minimum value as the first power coefficient, some performance of the first PTRS port is sacrificed. For example, signal strength of the first PTRS is attenuated. However, a case in which the power limit is exceeded on a part of OFDM symbols can be avoided, improving the communication reliability and the communication efficiency.

In a possible design solution, the value of the first number of scheduled PTRS ports is associated with a number of PTRS ports for actually sending a PTRS signal on each OFDM symbol, and the value of the second number of scheduled PTRS ports is associated with the number of PTRS ports for actually sending the PTRS signal on each OFDM symbol.

The PTRS signal may include the first PTRS and the second PTRS, and the OFDM symbol may be an OFDM symbol included in the PUSCH.

The terminal device may calculate the first power coefficient and the second power coefficient per OFDM symbol (per OFDM symbol). If the first time domain density is the same as the second time domain density, the value of the first number of scheduled PTRS ports is the same as the value of the second number of scheduled PTRS ports on each OFDM symbol.

If the first time domain density is different from the second time domain density, for example, the first time domain density is less than the second time domain density, the value of the first number of scheduled PTRS ports is different from the value of the second number of scheduled PTRS ports on each OFDM symbol. The terminal device calculates a corresponding power coefficient on each OFDM symbol by using a number of PTRS ports for actually sending a PTRS signal on each OFDM symbol, so that the terminal device can send the PTRS signal on each OFDM symbol by using an actual power coefficient. This can avoid the case in which the first PTRS port exceeds the power limit on a part of OFDM symbols, improving the communication reliability and the communication efficiency.

For example, as shown in FIG. 11, numbers of PTRS ports for actually sending PTRS signals on symbol #3, symbol #5, symbol #7, and symbol #9 by the terminal device are 2, and numbers of PTRS ports for actually sending PTRS signals on symbol #4, symbol #6, symbol #8, and symbol #10 are 1. In this case, the terminal device may calculate a first power coefficient #1 and a second power coefficient #1 on symbol #3 by using Qp=2. The terminal device may calculate a first power coefficient #2 on symbol #4 by using Qp=1. The terminal device may calculate a first power coefficient #3 and a second power coefficient #2 on symbol #5 by using Qp=2. The terminal device may calculate a first power coefficient #4 on symbol #6 by using Qp=1. The terminal device may calculate a first power coefficient #5 and a second power coefficient #3 on symbol #7 by using Qp=2. The terminal device may calculate a first power coefficient #6 on symbol #8 by using Qp=1. The terminal device may calculate a first power coefficient #7 and a second power coefficient #4 on symbol #9 by using Qp=2. The terminal device may calculate a first power coefficient #8 on symbol #10 by using Qp=1.

It may be understood that in this embodiment of this application, the time-frequency resource occupied by the PTRS port and the time-frequency resource occupied by the PTRS may be replaced with each other. This is not limited.

To facilitate understanding of the solution, the following content is added.

The DMRS indication method in the technical term part may be represented as the following two-level signaling indication. Corresponding to RRC signaling, information such as a DMRS type and a maximum length is configured. DCI signaling selects one port group from an antenna port indication table for PDSCH/PUSCH-associated DMRS transmission. A specific method may be as follows.

In an existing NR protocol, a DMRS port indication is notified by using an RRC+DCI two-level signaling indication method. A specific notification manner is described as follows.

According to a DMRS symbol and a time-frequency resource mapping method that correspond to a DMRS port and that are defined in an existing NR standard or an R18 standard, during each data transmission process, the network device needs to notify the terminal device of a correspondingly allocated DMRS port. Based on the allocated DMRS port, the terminal device receives a pilot signal and performs a corresponding channel estimation procedure at a corresponding resource location according to a DMRS symbol generation method and a time-frequency resource mapping rule defined in the protocol. Currently, a DMRS port notification method defined in the NR protocol uses a manner in which a DMRS type is semi-statically configured by using higher layer signaling, and an allocated DMRS port index is dynamically notified by using DCI. A specific method is as follows.

(1) Configure the DMRS type and a number of occupied symbols by using the RRC signaling.

The used DMRS type is configured by using the higher layer signaling DMRS-DownlinkConfig. Specific signaling content is as follows:

```
        DMRS-DownlinkConfig ::=              SEQUENCE {
            dmrs-Type                            ENUMERATED {type2}
OPTIONAL,
            -- Need S
                dmrs-AdditionalPosition          ENUMERATED {pos0, pos1, pos3}        OPTIONAL,
            -- Need S
                maxLength                            ENUMERATED {len2}
                scramblingID0                    INTEGER (0..65535)
                scramblingID1                    INTEGER (0..65535)
                phaseTrackingRS                      SetupRelease {PTRS-DownlinkConfig    }
            ...,
            [[
            dmrs-Downlink-r16                ENUMERATED {enabled}
            ]]
        }
```

dmrs-Type indicates whether a type 1 DMRS or a type 2 DMRS is used. maxLength indicates whether a single-symbol DMRS or a dual-symbol DMRS is used. Specifically, if maxLength is set to len2, whether a one-symbol DMRS or a two-symbol DMRS is used may be further indicated by using the DCI. If the maxLength field is not configured, a one-symbol DMRS is used.

(2) DCI signaling notification

The DCI signaling includes an antenna port field indicating the allocated DMRS port index. The NR protocol defines different DMRS port tables for values of different dmrs-Type and maxLength configurations. The antenna port field in the DCI signaling indicates an index value in a DMRS port table corresponding to a value of dmrs-Type and a value of maxLength that are configured by using higher layer signaling, and each index value corresponds to one or more DMRS port indexes.

Table 33 to Table 48 show uplink DMRS port indication methods in the existing NR protocol.

Table 33

| Value | Number of DMRS CDM group(s) without data | **DMRS** port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 and 7 | Reserved | Reserved |

Table 34

| Value | Number of DMRS CDM group(s) without data | DMRS port(s) |
|---|---|---|
| 0 | 1 | 0 and 1 |
| 1 | 2 | 0 and 1 |
| 2 | 2 | 2 and 3 |
| 3 | 2 | 0 and 2 |
| 4 to 7 | Reserved | Reserved |

Table 35

| Value | Number of DMRS CDM group(s) without data | DMRS port(s) |
|---|---|---|
| 0 | 2 | 0 to 2 |
| 2 to 7 | Reserved | Reserved |

Table 36

| Value | Number of DMRS CDM group(s) without data | DMRS port(s) |
|---|---|---|
| 0 | 2 | 0 to 3 |
| 2 to 7 | Reserved | Reserved |

Table 37

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |

(continued)

| Value | Number of DMRS CDM group(s) without data | DMRS port(s) | Number of front-load symbols |
|---|---|---|---|
| 12 | 2 | 6 | 2 |
| 13 | 2 | 7 | 2 |
| 14 and 15 | Reserved | Reserved | Reserved |

Table 38

| Value | Number of DMRS CDM group(s) without data | DMRS port(s) | Number of front-load symbols |
|---|---|---|---|
| 0 | 1 | 0 and 1 | 1 |
| 1 | 2 | 0 and 1 | 1 |
| 2 | 2 | 2 and 3 | 1 |
| 3 | 2 | 0 and 2 | 1 |
| 4 | 2 | 0 and 1 | 2 |
| 5 | 2 | 2 and 3 | 2 |
| 6 | 2 | 4 and 5 | 2 |
| 7 | 2 | 6 and 7 | 2 |
| 8 | 2 | 0 and 4 | 2 |
| 9 | 2 | 2 and 6 | 2 |
| 10 to 15 | Reserved | Reserved | Reserved |

Table 39

| Value | Number of DMRS CDM group(s) without data | DMRS port(s) | Number of front-load symbols |
|---|---|---|---|
| 0 | 2 | 0 to 2 | 1 |
| 1 | 2 | 0, 1, and 4 | 2 |
| 2 | 2 | 2, 3, and 6 | 2 |
| 3 to 15 | Reserved | Reserved | Reserved |

Table 40

| Value | Number of DMRS CDM group(s) without data | DMRS port(s) | Number of front-load symbols |
|---|---|---|---|
| 0 | 2 | 0 to 3 | 1 |
| 1 | 2 | 0, 1, 4, and 5 | 2 |
| 2 | 2 | 2, 3, 6, and 7 | 2 |
| 3 | 2 | 0, 2, 4, and 6 | 2 |
| 4 to 15 | Reserved | Reserved | Reserved |

Table 41

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |

(continued)

| Value | Number of DMRS CDM group(s) without data | DMRS port(s) |
|---|---|---|
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 to 15 | Reserved | Reserved |

Table 42

| Value | Number of DMRS CDM group(s) without data | DMRS port(s) |
|---|---|---|
| 0 | 1 | 0 and 1 |
| 1 | 2 | 0 and 1 |
| 2 | 2 | 2 and 3 |
| 3 | 3 | 0 and 1 |
| 4 | 3 | 2 and 3 |
| 5 | 3 | 4 and 5 |
| 6 | 2 | 0 and 2 |
| 7 to 15 | Reserved | Reserved |

Table 43

| Value | Number of DMRS CDM group(s) without data | DMRS port(s) |
|---|---|---|
| 0 | 2 | 0 to 2 |
| 1 | 3 | 0 to 2 |
| 2 | 3 | 3 to 5 |
| 3 to 15 | Reserved | Reserved |

Table 44

| Value | Number of DMRS CDM group(s) without data | DMRS port(s) |
|---|---|---|
| 0 | 2 | 0 to 3 |
| 1 | 3 | 0 to 3 |
| 2 to 15 | Reserved | Reserved |

Table 45

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |

(continued)

| Value | Number of DMRS CDM group(s) without data | DMRS port(s) | Number of front-load symbols |
|---|---|---|---|
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 to 31 | Reserved | Reserved | Reserved |

Table 46

| Value | Number of DMRS CDM group(s) without data | DMRS port(s) | Number of front-load symbols |
|---|---|---|---|
| 0 | 1 | 0 and 1 | 1 |
| 1 | 2 | 0 and 1 | 1 |
| 2 | 2 | 2 and 3 | 1 |
| 3 | 3 | 0 and 1 | 1 |
| 4 | 3 | 2 and 3 | 1 |
| 5 | 3 | 4 and 5 | 1 |
| 6 | 2 | 0 and 2 | 1 |
| 7 | 3 | 0 and 1 | 2 |
| 8 | 3 | 2 and 3 | 2 |
| 9 | 3 | 4 and 5 | 2 |
| 10 | 3 | 6 and 7 | 2 |
| 11 | 3 | 8 and 9 | 2 |

(continued)

| Value | Number of DMRS CDM group(s) without data | DMRS port(s) | Number of front-load symbols |
|---|---|---|---|
| 12 | 3 | 10 and 11 | 2 |
| 13 | 1 | 0 and 1 | 2 |
| 14 | 1 | 6 and 7 | 2 |
| 15 | 2 | 0 and 1 | 2 |
| 16 | 2 | 2 and 3 | 2 |
| 17 | 2 | 6 and 7 | 2 |
| 18 | 2 | 8 and 9 | 2 |
| 19 to 31 | Reserved | Reserved | Reserved |

Table 47

| Value | Number of DMRS CDM group(s) without data | DMRS port(s) | Number of front-load symbols |
|---|---|---|---|
| 0 | 2 | 0 to 2 | 1 |
| 1 | 3 | 0 to 2 | 1 |
| 2 | 3 | 3 to 5 | 1 |
| 3 | 3 | 0, 1, and 6 | 2 |
| 4 | 3 | 2, 3, and 8 | 2 |
| 5 | 3 | 4, 5, and 10 | 2 |
| 6 to 31 | Reserved | Reserved | Reserved |

Table 48

| Value | Number of DMRS CDM group(s) without data | DMRS port(s) | Number of front-load symbols |
|---|---|---|---|
| 0 | 2 | 0 to 3 | 1 |
| 1 | 3 | 0 to 3 | 1 |
| 2 | 3 | 0, 1, 6, and 7 | 2 |
| 3 | 3 | 2, 3, 8, and 9 | 2 |
| 4 | 3 | 4, 5, 10, and 11 | 2 |
| 5 to 31 | Reserved | Reserved | Reserved |

It can be learned that the existing NR protocol supports PUSCH transmission of less than or equal to four streams, and a number of orthogonal DMRS ports supported by the NR protocol includes only a capability of supporting a combination of a rank<=4.

In consideration of a DMRS enhancement subject direction of the NR R18 standard, because a requirement for a number of uplink streams increases in an actual industrial scenario, a capability of supporting a number of uplink DMRS ports in the R18 standard is further improved. For uplink PUSCH transmission, single-user transmission of a maximum of eight streams is supported in each DMRS configuration type. For PUSCH transmission of a maximum of eight streams, a possible DMRS port indication table design defined in the R18 standard is shown in Table 49 to Table 52.

Table 49

| Value | Number of DMRS CDM group(s) without data | DMRS port(s) | Number of front-load symbols |
|---|---|---|---|
| 0 | 3 | 0 to 4 | 1 |
| 1 | 2 | 0, 1, 2, 3, and 6 | 2 |
| 12 to 31 | Reserved | Reserved | Reserved |

Table 50

| Value | Number of DMRS CDM group(s) without data | DMRS port(s) | Number of front-load symbols |
|---|---|---|---|
| 0 | 3 | 0 to 5 | 1 |
| 1 | 2 | 0, 1, 2, 3, 6, and 8 | 2 |
| 2 to 31 | Reserved | Reserved | Reserved |

Table 51

| Value | Number of DMRS CDM group(s) without data | DMRS port(s) | Number of front-load symbols |
|---|---|---|---|
| 0 | 2 | 0, 1, 2, 3, 6, 7, and 8 | 2 |
| 1 to 31 | Reserved | Reserved | Reserved |

Table 52

| Value | Number of DMRS CDM group(s) without data | DMRS port(s) | Number of front-load symbols |
|---|---|---|---|
| 0 | 2 | 0, 1, 2, 3, 6, 7, 8, and 9 | 2 |
| 1 to 31 | Reserved | Reserved | Reserved |

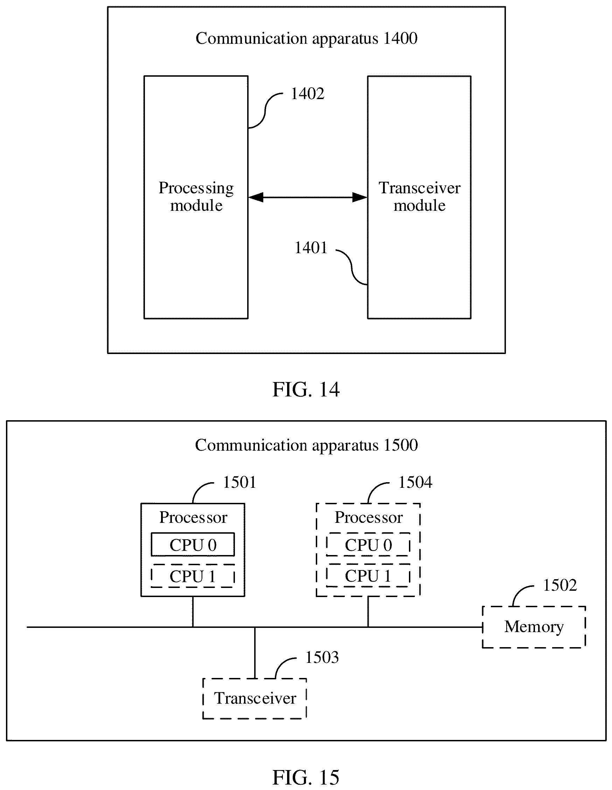

The communication method provided in embodiments of this application is described above in detail with reference to FIG. 10 to FIG. 13. A communication apparatus configured to perform the communication method provided in embodiments of this application is described below in detail with reference to FIG. 14 and FIG. 15.

For example, FIG. 14 is a diagram 1 of a structure of a communication apparatus according to an embodiment of this application. As shown in FIG. 14, the communication apparatus 1400 includes a transceiver module 1401 and a processing module 1402. For ease of description, FIG. 14 shows only main components of the communication apparatus.

In some embodiments, the communication apparatus 1400 is applicable to the communication system shown in FIG. 9, and performs a function of the terminal apparatus.

The transceiver module 1401 may be configured to perform a function of the terminal apparatus for receiving and sending a message. The processing module 1402 may perform a function of the terminal apparatus other than receiving and sending the message.

Optionally, the transceiver module 1401 may include a sending module and a receiving module. The sending module is configured to implement a sending function of the communication apparatus 1400, and the receiving module is configured to implement a receiving function of the communication apparatus 1400.

Optionally, the communication apparatus 1400 may further include a storage module. The storage module stores a program or instructions. When the processing module 1402 executes the program or the instructions, the communication apparatus 1400 may perform the foregoing communication method.

It should be noted that the communication apparatus 1400 may be a terminal apparatus, may be a chip (system) or another component or assembly that may be disposed in a terminal apparatus, or may be an apparatus including a terminal apparatus. This is not limited in this application.

In addition, for technical effects of the communication apparatus 1400, refer to the technical effects of the foregoing communication method. Details are not described herein again.

In some other embodiments, the communication apparatus 1400 is applicable to the communication system shown in FIG. 9, and performs a function of the network device.

The transceiver module 1401 may be configured to perform a function of the network device for receiving and sending a message. The processing module 1402 may perform a function of the network device other than receiving and sending the message.

Optionally, the transceiver module 1401 may include a sending module and a receiving module. The sending module is configured to implement a sending function of the communication apparatus 1400, and the receiving module is configured to implement a receiving function of the communication apparatus 1400.

Optionally, the communication apparatus 1400 may further include a storage module. The storage module stores a program or instructions. When the processing module 1402 executes the program or the instructions, the communication apparatus 1400 may perform the foregoing communication method.

It should be noted that the communication apparatus 1400 may be a network device, may be a chip (system) or another component or assembly that may be disposed in a network device, or may be an apparatus including a network device. This is not limited in this application.

In addition, for technical effects of the communication apparatus 1400, refer to the technical effects of the foregoing communication method. Details are not described herein again.

For example, FIG. 15 is a diagram 2 of a structure of a communication apparatus according to an embodiment of this application. The communication apparatus may be a terminal, or may be a chip (system) or another component or assembly that may be disposed in a terminal. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected to the memory 1502 and the transceiver 1503 through a communication bus.

The components of the communication apparatus 1500 are described below in detail with reference to FIG. 15.

The processor 1501 is a control center of the communication apparatus 1500, and may be one processor, or may be a collective term of a plurality of processing elements. For example, the processor 1501 is one or more central processing units (central processing unit, CPU), may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 1501 may perform various functions of the communication apparatus 1500, for example, perform the communication method shown in FIG. 5 to FIG. 7, by running or executing a software program stored in the memory 1502 and invoking data stored in the memory 1502.

During specific implementation, in an embodiment, the processor 1501 may include one or more CPUs, for example, a CPU 0 and a CPU 1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solutions of this application, and the processor 1501 controls execution of the software program. For a specific implementation, refer to the method embodiment. Details are not described herein again.

Optionally, the memory 1502 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in a form of an instruction or a data structure and accessible by a computer. The memory 1502 may be integrated with the processor 1501, or may exist separately, and is coupled to the processor 1501 through an interface circuit (not shown in FIG. 15) of the communication apparatus 1500. This is not specifically limited in embodiments of this application.

The transceiver 1503 is configured to communicate with another communication apparatus. For example, the communication apparatus 1500 is a terminal, and the transceiver 1503 may be configured to communicate with a network device or communicate with another terminal apparatus. For another example, the communication apparatus 1500 is a network device, and the transceiver 1503 may be configured to communicate with a terminal or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist separately, and is coupled to the processor 1501 through an interface circuit (not shown in FIG. 15) of the communication apparatus 1500. This is not specifically limited in embodiments of this application.

It should be noted that the structure of the communication apparatus 1500 shown in FIG. 15 does not constitute a limitation on the communication apparatus. An actual communication apparatus may include more or fewer components than those shown in the figure, or combine some components, or have different component arrangements.

In addition, for technical effects of the communication apparatus 1500, refer to the technical effects of the communication method in the method embodiment. Details are not described herein again.

An embodiment of this application provides a communication system. The communication system may include the terminal apparatus and the network device shown in FIG. 4.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When software is used to implement the foregoing embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression means any combination of these items, including a single item (piece) or any combination of a plurality of items (pieces). For example, at least one of a, b, or c may represent: a, b, c, a-b, a-c, b-c, or a-b-c, where a, b, and c may be singular or plural.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method, comprising:

receiving first indication information, wherein the first indication information indicates a first modulation and coding scheme MCS and a second MCS;
sending a first PTRS through a first phase tracking reference signal PTRS port, wherein a time domain density corresponding to the first PTRS is a first time domain density, and the first time domain density is associated with the first MCS and/or the second MCS; and
sending a second PTRS through a second PTRS port, wherein a time domain density corresponding to the second PTRS is a second time domain density, and the second time domain density is associated with the first MCS and/or the second MCS.

**2.** The method according to claim 1, wherein the method further comprises:

receiving second indication information, wherein the second indication information comprises PTRS time domain density information, and the PTRS time domain density information indicates a plurality of MCS threshold values;
the first time domain density is associated with at least one of the following: the first MCS and the plurality of MCS threshold values; the second MCS and the plurality of MCS threshold values; or the first MCS, the second MCS, and the plurality of MCS threshold values; and
the second time domain density is associated with at least one of the following: the first MCS and the plurality of MCS threshold values; the second MCS and the plurality of MCS threshold values; or the first MCS, the second MCS, and the plurality of MCS threshold values.

**3.** The method according to claim 2, wherein the plurality of MCS threshold values comprise at least one of the following: a first MCS threshold value, a second MCS threshold value, or a third MCS threshold value.

**4.** The method according to claim 3, wherein the first time domain density is associated with the first MCS and the plurality of MCS threshold values, and the second time domain density is associated with the first MCS and the plurality of MCS threshold values, wherein
that the first time domain density is associated with the first MCS and the plurality of MCS threshold values satisfies any one of the following:

if the first MCS is less than the first MCS threshold value, the first PTRS is not present;
if the first MCS is greater than or equal to the first MCS threshold value and is less than the second MCS threshold value, the first time domain density is a first value;

if the first MCS is greater than or equal to the second MCS threshold value and is less than the third MCS threshold value, the first time domain density is a second value; and

if the first MCS is greater than or equal to the third MCS threshold value and is less than a fourth MCS threshold value, the first time domain density is a third value, wherein the fourth MCS threshold value is a preset value; and that the second time domain density is associated with the first MCS and the plurality of MCS threshold values satisfies any one of the following:

if the first MCS is less than the first MCS threshold value, the second PTRS is not present;

if the first MCS is greater than or equal to the first MCS threshold value and is less than the second MCS threshold value, the second time domain density is the first value;

if the first MCS is greater than or equal to the second MCS threshold value and is less than the third MCS threshold value, the second time domain density is the second value; and

if the first MCS is greater than or equal to the third MCS threshold and is less than the fourth MCS threshold value, the second time domain density is the third value.

5. The method according to claim 3, wherein the first time domain density is associated with a fourth value and the plurality of MCS threshold values, and the second time domain density is associated with the fourth value and the plurality of MCS threshold values, wherein the fourth value is associated with the first MCS and the second MCS; that the first time domain density is associated with the fourth value and the plurality of MCS threshold values satisfies any one of the following:

if the fourth value is less than the first MCS threshold value, the first PTRS is not present;

if the fourth value is greater than or equal to the first MCS threshold value and is less than the second MCS threshold value, the first time domain density is a first value;

if the fourth value is greater than or equal to the second MCS threshold value and is less than the third MCS threshold value, the first time domain density is a second value; and

if the fourth value is greater than or equal to the third MCS threshold value and is less than a fourth MCS threshold value, the first time domain density is a third value, wherein the fourth MCS threshold value is a preset value; and that the second time domain density is associated with the fourth value and the plurality of MCS threshold values satisfies any one of the following:

if the fourth value is greater than or equal to the first MCS threshold value and is less than the second MCS threshold value, the second time domain density is the first value;

if the fourth value is greater than or equal to the second MCS threshold value and is less than the third MCS threshold value, the second time domain density is the second value; and

if the fourth value is greater than or equal to the third MCS threshold value and is less than the fourth MCS threshold value, the second time domain density is the third value.

6. The method according to claim 5, wherein the fourth value is at least one of the following: Mean(first MCS, second MCS);

$$\lfloor Mean(first\ MCS, second\ MCS) \rfloor \; ; \text{ or}$$

$$\lceil Mean(first\ MCS, second\ MCS) \rceil \; .$$

7. The method according to any one of claims 4 to 6, wherein the first MCS is greater than the second MCS.

8. The method according to any one of claims 4 to 6, wherein the first MCS is less than the second MCS.

9. The method according to claim 3, wherein the first PTRS port corresponds to the first MCS, the second PTRS port corresponds to the second MCS, a fifth value is associated with the first MCS and the plurality of MCS threshold values, a sixth value is associated with the second MCS and the plurality of MCS threshold values, the first time domain density is associated with the fifth value and the sixth value, and the second time domain density is associated with the fifth value and the sixth value, wherein

that the fifth value is associated with the first MCS and the plurality of MCS threshold values satisfies any one of the following:

if the first MCS is less than the first MCS threshold value, the first PTRS is not present;

if the first MCS is greater than or equal to the first MCS threshold value and is less than the second MCS threshold value, the fifth value is a first value;

if the first MCS is greater than or equal to the second MCS threshold value and is less than the third MCS threshold value, the fifth value is a second value; and

if the first MCS is greater than or equal to the third MCS threshold and is less than a fourth MCS threshold, the fifth value is a third value, wherein the fourth MCS threshold value is a preset value; and

that the sixth value is associated with the second MCS and the plurality of MCS threshold values satisfies any one of the following:

if the second MCS is less than the first MCS threshold value, the second PTRS is not present;

if the second MCS is greater than or equal to the first MCS threshold value and is less than the second MCS threshold value, the sixth value is the first value;

if the second MCS is greater than or equal to the second MCS threshold value and is less than the third MCS threshold value, the fifth value is the second value; and

if the second MCS is greater than or equal to the third MCS threshold and is less than the fourth MCS threshold, the sixth value is the third value.

10. The method according to claim 9, wherein when the fifth value is greater than the sixth value, values of the first time domain density and the second time domain density are both equal to the fifth value.

11. The method according to claim 9, wherein when the fifth value is less than the sixth value, values of the first time domain density and the second time domain density are both equal to the fifth value.

12. The method according to claim 9, wherein when the fifth value is greater than the sixth value, a value of the first time domain density and a value of the second time domain density are equal to a seventh value, wherein the seventh value is associated with the fifth value and the sixth value.

13. The method according to claim 9, wherein when the fifth value is less than the sixth value, a value of the first time domain density and a value of the second time domain density are equal to a seventh value, wherein the seventh value is associated with the fifth value and the sixth value.

14. The method according to claim 12 or 13, wherein the seventh value is at least one of the following:

Mean(fifth value, sixth value);

$\lfloor \text{Mean}(\text{fifth value}, \text{sixth value}) \rfloor$ ; or

$\lceil \text{Mean}(\text{fifth value}, \text{sixth value}) \rceil$ .

15. The method according to claim 2, wherein the first indication information further indicates PUSCH precoding and number-of-transmission-layers information, and the second indication information further comprises PTRS power information.

16. The method according to claim 15, wherein a first power coefficient is associated with at least one of the following:

the PUSCH precoding, the number-of-transmission-layers information, the PTRS power information, or a value of a first number of scheduled PTRS ports, wherein the first power coefficient is a power coefficient corresponding to the first PTRS; and

a second power coefficient is associated with at least one of the following: the PUSCH precoding, the number-of-transmission-layers information, the PTRS power information, or a value of a second number of scheduled PTRS ports, wherein the second power coefficient is a power coefficient corresponding to the second PTRS.

17. The method according to claim 15, wherein when the first time domain density is less than the second time domain density, the value of the first number of scheduled PTRS ports is 1, and the value of the second number of scheduled PTRS ports is 2.

18. The method according to claim 15, wherein the value of the first number of scheduled PTRS ports is associated with a number of PTRS ports for actually sending a PTRS signal on each OFDM symbol, and the value of the second number of scheduled PTRS ports is associated with the number of PTRS ports for actually sending the PTRS signal on each OFDM symbol, wherein the PTRS signal comprises the first PTRS and the second PTRS, and the OFDM symbol is an OFDM symbol comprised in the PUSCH.

19. A communication apparatus, comprising a transceiver module and a processing module, wherein

the transceiver module is configured to receive first indication information, wherein the first indication information indicates a first modulation and coding scheme MCS and a second MCS;
the processing module is configured to control the transceiver module to send a first PTRS through a first phase tracking reference signal PTRS port, wherein a time domain density corresponding to the first PTRS is a first time domain density, and the first time domain density is associated with the first MCS and/or the second MCS; and
the processing module is further configured to control the transceiver module to send a second PTRS through a second PTRS port, wherein a time domain density corresponding to the second PTRS is a second time domain density, and the second time domain density is associated with the first MCS and/or the second MCS.

20. The apparatus according to claim 19, wherein

the transceiver module is further configured to receive second indication information, wherein the second indication information comprises PTRS time domain density information, and the PTRS time domain density information indicates a plurality of MCS threshold values;
the first time domain density is associated with at least one of the following: the first MCS and the plurality of MCS threshold values; the second MCS and the plurality of MCS threshold values; or the first MCS, the second MCS, and the plurality of MCS threshold values; and
the second time domain density is associated with at least one of the following: the first MCS and the plurality of MCS threshold values; the second MCS and the plurality of MCS threshold values; or the first MCS, the second MCS, and the plurality of MCS threshold values.

21. The apparatus according to claim 20, wherein the plurality of MCS threshold values comprise at least one of the following: a first MCS threshold value, a second MCS threshold value, or a third MCS threshold value.

22. The apparatus according to claim 21, wherein the first time domain density is associated with the first MCS and the plurality of MCS threshold values, and the second time domain density is associated with the first MCS and the plurality of MCS threshold values, wherein
that the first time domain density is associated with the first MCS and the plurality of MCS threshold values satisfies any one of the following:

if the first MCS is less than the first MCS threshold value, the first PTRS is not present;
if the first MCS is greater than or equal to the first MCS threshold value and is less than the second MCS threshold value, the first time domain density is a first value;
if the first MCS is greater than or equal to the second MCS threshold value and is less than the third MCS threshold value, the first time domain density is a second value; and
if the first MCS is greater than or equal to the third MCS threshold value and is less than a fourth MCS threshold value, the first time domain density is a third value, wherein the fourth MCS threshold value is a preset value; and
that the second time domain density is associated with the first MCS and the plurality of MCS threshold values satisfies any one of the following:

if the first MCS is less than the first MCS threshold value, the second PTRS is not present;
if the first MCS is greater than or equal to the first MCS threshold value and is less than the second MCS threshold value, the second time domain density is the first value;
if the first MCS is greater than or equal to the second MCS threshold value and is less than the third MCS threshold value, the second time domain density is the second value; and
if the first MCS is greater than or equal to the third MCS threshold and is less than the fourth MCS threshold value, the second time domain density is the third value.

23. The apparatus according to claim 21, wherein the first time domain density is associated with a fourth value and the plurality of MCS threshold values, and the second time domain density is associated with the fourth value and the plurality of MCS threshold values, wherein the fourth value is associated with the first MCS and the second MCS;
that the first time domain density is associated with the fourth value and the plurality of MCS threshold values satisfies any one of the following:

if the fourth value is less than the first MCS threshold value, the first PTRS is not present;
if the fourth value is greater than or equal to the first MCS threshold value and is less than the second MCS threshold value, the first time domain density is a first value;
if the fourth value is greater than or equal to the second MCS threshold value and is less than the third MCS threshold value, the first time domain density is a second value; and
if the fourth value is greater than or equal to the third MCS threshold value and is less than a fourth MCS threshold value, the first time domain density is a third value, wherein the fourth MCS threshold value is a preset value; and
that the second time domain density is associated with the fourth value and the plurality of MCS threshold values satisfies any one of the following:

if the fourth value is greater than or equal to the first MCS threshold value and is less than the second MCS threshold value, the second time domain density is the first value;
if the fourth value is greater than or equal to the second MCS threshold value and is less than the third MCS threshold value, the second time domain density is the second value; and
if the fourth value is greater than or equal to the third MCS threshold value and is less than the fourth MCS threshold value, the second time domain density is the third value.

24. The apparatus according to claim 23, wherein the fourth value is at least one of the following:

Mean(first MCS, second MCS);
$\lfloor \text{Mean(first MCS, second MCS)} \rfloor$ ; or
$\lceil \text{Mean(first MCS, second MCS)} \rceil$ .

25. The apparatus according to any one of claims 22 to 24, wherein the first MCS is greater than the second MCS.

26. The apparatus according to any one of claims 22 to 24, wherein the first MCS is less than the second MCS.

27. The apparatus according to claim 21, wherein the first PTRS port corresponds to the first MCS, the second PTRS port corresponds to the second MCS, a fifth value is associated with the first MCS and the plurality of MCS threshold values, a sixth value is associated with the second MCS and the plurality of MCS threshold values, the first time domain density is associated with the fifth value and the sixth value, and the second time domain density is associated with the fifth value and the sixth value, wherein
that the fifth value is associated with the first MCS and the plurality of MCS threshold values satisfies any one of the following:

if the first MCS is less than the first MCS threshold value, the first PTRS is not present;
if the first MCS is greater than or equal to the first MCS threshold value and is less than the second MCS threshold value, the fifth value is a first value;
if the first MCS is greater than or equal to the second MCS threshold value and is less than the third MCS threshold value, the fifth value is a second value; and
if the first MCS is greater than or equal to the third MCS threshold and is less than a fourth MCS threshold, the fifth value is a third value, wherein the fourth MCS threshold value is a preset value; and
that the sixth value is associated with the second MCS and the plurality of MCS threshold values satisfies any one of the following:

if the second MCS is less than the first MCS threshold value, the second PTRS is not present;
if the second MCS is greater than or equal to the first MCS threshold value and is less than the second MCS threshold value, the sixth value is the first value;
if the second MCS is greater than or equal to the second MCS threshold value and is less than the third MCS threshold value, the fifth value is the second value; and
if the second MCS is greater than or equal to the third MCS threshold and is less than the fourth MCS threshold, the sixth value is the third value.

28. The apparatus according to claim 27, wherein when the fifth value is greater than the sixth value, values of the first time domain density and the second time domain density are both equal to the fifth value.

29. The apparatus according to claim 27, wherein when the fifth value is less than the sixth value, values of the first time domain density and the second time domain density are both equal to the fifth value.

30. The apparatus according to claim 27, wherein when a value of the first time domain density is greater than a value of the second time domain density, the value of the first time domain density and the value of the second time domain density are equal to a seventh value, wherein the seventh value is associated with the fifth value and the sixth value.

31. The apparatus according to claim 27, wherein when a value of the first time domain density is less than a value of the second time domain density, the value of the first time domain density and the value of the second time domain density are equal to a seventh value, wherein the seventh value is associated with the fifth value and the sixth value.

32. The apparatus according to claim 30 or 31, wherein the seventh value is at least one of the following:

Mean(fifth value, sixth value);
$\lfloor$Mean(fifth value, sixth value)$\rfloor$; or
$\lceil$Mean(fifth value, sixth value)$\rceil$.

33. The apparatus according to claim 20, wherein the first indication information further indicates PUSCH precoding and number-of-transmission-layers information, and the second indication information further comprises PTRS power information.

34. The apparatus according to claim 33, wherein a first power coefficient is associated with at least one of the following:

the PUSCH precoding, the number-of-transmission-layers information, the PTRS power information, or a value of a first number of scheduled PTRS ports, wherein the first power coefficient is a power coefficient corresponding to the first PTRS; and
a second power coefficient is associated with at least one of the following: the PUSCH precoding, the number-of-transmission-layers information, the PTRS power information, or a value of a second number of scheduled PTRS ports, wherein the second power coefficient is a power coefficient corresponding to the second PTRS.

35. The apparatus according to claim 33, wherein when the first time domain density is less than the second time domain density, the value of the first number of scheduled PTRS ports is 1, and the value of the second number of scheduled PTRS ports is 2.

36. The apparatus according to claim 33, wherein the value of the first number of scheduled PTRS ports is associated with a number of PTRS ports for actually sending a PTRS signal on each OFDM symbol, and the value of the second number of scheduled PTRS ports is associated with the number of PTRS ports for actually sending the PTRS signal on each OFDM symbol, wherein the PTRS signal comprises the first PTRS and the second PTRS, and the OFDM symbol is an OFDM symbol comprised in the PUSCH.

37. A communication apparatus, wherein the communication apparatus comprises a processor, wherein the processor is coupled to a memory; the memory is configured to store computer instructions; and when the processor executes the instructions, the communication apparatus is enabled to perform the method according to any one of claims 1 to 18.

38. A communication chip, wherein the communication chip stores instructions; and when the chip runs on a communication device, the method according to any one of claims 1 to 18 is implemented.

39. A computer-readable storage medium, wherein the computer-readable storage medium comprises a computer program or instructions; and when the computer program or the instructions are run on a computer, the computer is enabled to perform the method according to any one of claims 1 to 18.

40. A computer program product, wherein the computer program product comprises a computer program or instructions; and when the computer program or the instructions are run on a communication apparatus, the method according to any one of claims 1 to 18 is performed.

...      ...      ...

| | Symbol 1 |
|---|---|
| RE 11 | 2/3<br>(+/−) |
| RE 10 | 0/1<br>(+/−) |
| RE 9 | 2/3<br>(+/+) |
| RE 8 | 0/1<br>(+/+) |
| RE 7 | 2/3<br>(+/−) |
| RE 6 | 0/1<br>(+/−) |
| RE 5 | 2/3<br>(+/+) |
| RE 4 | 0/1<br>(+/+) |
| RE 3 | 2/3<br>(+/−) |
| RE 2 | 0/1<br>(+/−) |
| RE 1 | 2/3<br>(+/+) |
| RE 0 | 0/1<br>(+/+) |

(a)

| | Symbol 1 | Symbol 2 |
|---|---|---|
| RE 11 | 2/3/6/7<br>(+/−/+/−) | 2/3/6/7<br>(+/−/−/+) |
| RE 10 | 0/1/4/5<br>(+/−/+/−) | 0/1/4/5<br>(+/−/−/+) |
| RE 9 | 2/3/6/7<br>(+/+/+/+) | 2/3/6/7<br>(+/+/−/−) |
| RE 8 | 0/1/4/5<br>(+/+/+/+) | 0/1/4/5<br>(+/+/−/−) |
| RE 7 | 2/3/6/7<br>(+/−/+/−) | 2/3/6/7<br>(+/−/−/+) |
| RE 6 | 0/1/4/5<br>(+/−/+/−) | 0/1/4/5<br>(+/−/−/+) |
| RE 5 | 2/3/6/7<br>(+/+/+/+) | 2/3/6/7<br>(+/+/−/−) |
| RE 4 | 0/1/4/5<br>(+/+/+/+) | 0/1/4/5<br>(+/+/−/−) |
| RE 3 | 2/3/6/7<br>(+/−/+/−) | 2/3/6/7<br>(+/−/−/+) |
| RE 2 | 0/1/4/5<br>(+/−/+/−) | 0/1/4/5<br>(+/−/−/+) |
| RE 1 | 2/3/6/7<br>(+/+/+/+) | 2/3/6/7<br>(+/+/−/−) |
| RE 0 | 0/1/4/5<br>(+/+/+/+) | 0/1/4/5<br>(+/+/−/−) |

(b)

FIG. 1

|  | ⋮ |  | ⋮ |  | ⋮ |
|---|---|---|---|---|---|

| RE 11 | 4/5<br>(+/−) | | 4/5/10/11<br>(+/−/+/−) | 4/5/10/11<br>(+/−/−/+) |
|---|---|---|---|---|
| RE 10 | 4/5<br>(+/+) | | 4/5/10/11<br>(+/+/+/+) | 4/5/10/11<br>(+/+/−/−) |
| RE 9 | 2/3<br>(+/−) | | 2/3/8/9<br>(+/−/+/−) | 2/3/8/9<br>(+/−/−/+) |
| RE 8 | 2/3<br>(+/+) | | 2/3/8/9<br>(+/+/+/+) | 2/3/8/9<br>(+/+/−/−) |
| RE 7 | 0/1<br>(+/−) | | 0/1/6/7<br>(+/−/+/−) | 0/1/6/7<br>(+/−/−/+) |
| RE 6 | 0/1<br>(+/+) | | 0/1/6/7<br>(+/+/+/+) | 0/1/6/7<br>(+/+/−/−) |
| RE 5 | 4/5<br>(+/−) | | 4/5/10/11<br>(+/−/+/−) | 4/5/10/11<br>(+/−/−/+) |
| RE 4 | 4/5<br>(+/+) | | 4/5/10/11<br>(+/+/+/+) | 4/5/10/11<br>(+/+/−/−) |
| RE 3 | 2/3<br>(+/−) | | 2/3/8/9<br>(+/−/+/−) | 2/3/8/9<br>(+/−/−/+) |
| RE 2 | 2/3<br>(+/+) | | 2/3/8/9<br>(+/+/+/+) | 2/3/8/9<br>(+/+/−/−) |
| RE 1 | 0/1<br>(+/−) | | 0/1/6/7<br>(+/−/+/−) | 0/1/6/7<br>(+/−/−/+) |
| RE 0 | 0/1<br>(+/+) | | 0/1/6/7<br>(+/+/+/+) | 0/1/6/7<br>(+/+/−/−) |

|  | Symbol 1 | | Symbol 1 | Symbol 2 |
|---|---|---|---|---|
|  | (a) | | | (b) |

FIG. 2

| | |
|---|---|
| RE 11 | 4/5 |
| RE 10 | 4/5 |
| RE 9 | 2/3 |
| RE 8 | 2/3 |
| RE 7 | 0/1 |
| RE 6 | 0/1 |
| RE 5 | 4/5 |
| RE 4 | 4/5 |
| RE 3 | 2/3 |
| RE 2 | 2/3 |
| RE 1 | 0/1 |
| RE 0 | 0/1 |

(a)

| | |
|---|---|
| RE 11 | 4/5/10/11 |
| RE 10 | 4/5/10/11 |
| RE 9 | 2/3/8/9 |
| RE 8 | 2/3/8/9 |
| RE 7 | 0/1/6/7 |
| RE 6 | 0/1/6/7 |
| RE 5 | 4/5/10/11 |
| RE 4 | 4/5/10/11 |
| RE 3 | 2/3/8/9 |
| RE 2 | 2/3/8/9 |
| RE 1 | 0/1/6/7 |
| RE 0 | 0/1/6/7 |

(b)

| RE 0 | P0 | P1 |
|---|---|---|
| 0 | +1 | +1 |
| 1 | +1 | −1 |
| 6 | +1 | +1 |
| 7 | +1 | −1 |

(c)

| RE 0 | P0 | P1 | P6 | P7 |
|---|---|---|---|---|
| 0 | +1 | +1 | +1 | +1 |
| 1 | +1 | −1 | +1 | −1 |
| 6 | +1 | +1 | −1 | −1 |
| 7 | +1 | −1 | −1 | +1 |

(d)

FIG. 3

PUSCH p0
PUSCH p1
PUSCH p2
PUSCH p3

$$\begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

PTRS p0
PTRS p1

DMRS port  0  1  12  13

## FIG. 4

Ng 0

Ng 1

$$\begin{bmatrix} 1 & 1 & 1 & 1 & 0 & 0 & 0 & 0 \\ 1 & -1 & 1 & -1 & 0 & 0 & 0 & 0 \\ 1 & 1 & -1 & -1 & 0 & 0 & 0 & 0 \\ 1 & -1 & -1 & 1 & 0 & 0 & 0 & 0 \\ 0 & 0 & 0 & 0 & 1 & 1 & 1 & 1 \\ 0 & 0 & 0 & 0 & 1 & -1 & 1 & -1 \\ 0 & 0 & 0 & 0 & 1 & 1 & -1 & -1 \\ 0 & 0 & 0 & 0 & 1 & -1 & -1 & 1 \end{bmatrix}$$

PTRS port 0

PTRS port 1

DMRS port  0  1  2  3  8  9  10  11

## FIG. 5

Ng 0

Ng 1

Ng 2

Ng 3

$$\begin{bmatrix} 1 & 1 & 0 & 0 & 0 & 0 & 0 & 0 \\ 1 & -1 & 0 & 0 & 0 & 0 & 0 & 0 \\ 0 & 0 & 1 & 1 & 0 & 0 & 0 & 0 \\ 0 & 0 & 1 & -1 & 0 & 0 & 0 & 0 \\ 0 & 0 & 0 & 0 & 1 & 1 & 0 & 0 \\ 0 & 0 & 0 & 0 & 1 & -1 & 0 & 0 \\ 0 & 0 & 0 & 0 & 0 & 0 & 1 & 1 \\ 0 & 0 & 0 & 0 & 0 & 0 & 1 & -1 \end{bmatrix}$$

PTRS port 0

PTRS port 2

PTRS port 1

PTRS port 3

DMRS port  0  1  2  3  8  9  10  11

## FIG. 6

FIG. 7

FIG. 8

Network device　　　　　　　　Terminal device

FIG. 9

Terminal device　　　　　　　　Network device

S1001: First indication information

S1002: The terminal device sends a first
PTRS through a first PTRS port

S1003: The terminal device sends a second
PTRS through a second PTRS port

FIG. 10

| Subcarrier/Symbol | 2 | 3 | 4 | 5 | 6 | 7 | 8 | 9 | 10 |
|---|---|---|---|---|---|---|---|---|---|
| 0 | 0 1 12 13 | | | | | | | | |
| 1 | 0 1 12 13 | | | | | | | | |
| 2 | | | | | | | | | |
| 3 | | | | | | | | | |
| 4 | | | | | | | | | |
| 5 | | | | | | | | | |
| 6 | 0 1 12 13 | PTRS 0 | | PTRS 0 | | PTRS 0 | | PTRS 0 | |
| 7 | 0 1 12 13 | PTRS 1 | PTRS 1 | PTRS 1 | PTRS 1 | PTRS 1 | PTRS 1 | PTRS 1 | PTRS 1 |
| 8 | | | | | | | | | |
| 9 | | | | | | | | | |
| 10 | | | | | | | | | |
| 11 | | | | | | | | | |

FIG. 11

| Subcarrier/Symbol | 2 | 3 | 4 | 5 | 6 | 7 | 8 | 9 | 10 |
|---|---|---|---|---|---|---|---|---|---|
| 0 | 0 1 12 13 | | | | | | | | |
| 1 | 0 1 12 13 | | | | | | | | |
| 2 | | | | | | | | | |
| 3 | | | | | | | | | |
| 4 | | | | | | | | | |
| 5 | | | | | | | | | |
| 6 | 0 1 12 13 | PTRS 0 | PTRS 0 | PTRS 0 | PTRS 0 | PTRS 0 | PTRS 0 | PTRS 0 | PTRS 0 |
| 7 | 0 1 12 13 | PTRS 1 | PTRS 1 | PTRS 1 | PTRS 1 | PTRS 1 | PTRS 1 | PTRS 1 | PTRS 1 |
| 8 | | | | | | | | | |
| 9 | | | | | | | | | |
| 10 | | | | | | | | | |
| 11 | | | | | | | | | |

FIG. 12

EP 4 746 332 A1

| Subcarrier/Symbol | 2 | 3 | 4 | 5 | 6 | 7 | 8 | 9 | 10 |
|---|---|---|---|---|---|---|---|---|---|
| 0 | 0 1 12 13 | | | | | | | | |
| 1 | 0 1 12 13 | | | | | | | | |
| 2 | | | | | | | | | |
| 3 | | | | | | | | | |
| 4 | | | | | | | | | |
| 5 | | | | | | | | | |
| 6 | 0 1 12 13 | PTRS 0 | | PTRS 0 | | PTRS 0 | | PTRS 0 | |
| 7 | 0 1 12 13 | PTRS 1 | | PTRS 1 | | PTRS 1 | | PTRS 1 | |
| 8 | | | | | | | | | |
| 9 | | | | | | | | | |
| 10 | | | | | | | | | |
| 11 | | | | | | | | | |

FIG. 13

Communication apparatus 1400

Processing module

1402

Transceiver module

1401

FIG. 14

Communication apparatus 1500

1501

Processor

CPU 0

CPU 1

1504

Processor

CPU 0

CPU 1

1502

Memory

1503

Transceiver

FIG. 15

## INTERNATIONAL SEARCH REPORT

| International application No. |
| --- |
| **PCT/CN2024/110199** |

| A. | CLASSIFICATION OF SUBJECT MATTER |
| --- | --- |
| | H04L5/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXT, DWPI, CNKI, IEEE: 时域密度, 时间密度, 调制与编码, 相位跟踪, 端口, 阈值, 门限, 功率, 系数, 符号, OFDM, MCS, density, PTRS, time, domain, port, threshold, power

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112448805 A (HUAWEI TECHNOLOGIES CO., LTD.) 05 March 2021 (2021-03-05) description, paragraphs 4 and 108-256 | 1-40 |
| X | CN 110855406 A (TELECOMMUNICATIONS TECHNOLOGY RESEARCH INSTITUTE CO., LTD.) 28 February 2020 (2020-02-28) description, paragraphs 49-178 | 1-40 |
| A | US 2021320747 A1 (NTT DOCOMO, INC.) 14 October 2021 (2021-10-14) entire document | 1-40 |
| A | WO 2021066625 A1 (LG ELECTRONICS INC.) 08 April 2021 (2021-04-08) entire document | 1-40 |
| A | NOKIA et al. "Clarification of PTRS Port Association for PUSCH Corresponding to the Configured Grant Type 1" *3GPP TSG-RAN WG1 Meeting #99, R1-1913008*, 22 November 2019 (2019-11-22), entire document | 1-40 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **14 October 2024** | **24 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | International application No.<br>**PCT/CN2024/110199** |
|---|---|---|

| Patent document<br>cited in search report | | | Publication date<br>(day/month/year) | Patent family member(s) | | | Publication date<br>(day/month/year) |
|---|---|---|---|---|---|---|---|
| CN | 112448805 | A | 05 March 2021 | EP | 3860028 | A1 | 04 August 2021 |
| | | | | JP | 2020515194 | A | 21 May 2020 |
| | | | | CA | 3057546 | A1 | 27 September 2018 |
| | | | | EP | 3605924 | A1 | 05 February 2020 |
| | | | | US | 2020021412 | A1 | 16 January 2020 |
| | | | | WO | 2018171742 | A1 | 27 September 2018 |
| | | | | CN | 108632009 | A | 09 October 2018 |
| | | | | CN | 110622454 | A | 27 December 2019 |
| CN | 110855406 | A | 28 February 2020 | None | | | |
| US | 2021320747 | A1 | 14 October 2021 | WO | 2020035956 | A1 | 20 February 2020 |
| | | | | CN | 112930666 | A | 08 June 2021 |
| WO | 2021066625 | A1 | 08 April 2021 | None | | | |

Form PCT/ISA/210 (patent family annex) (July 2022)

**EP 4 746 332 A1**

**Patent documents cited in the description**

- CN 202311018942